# EUROPEAN PATENT APPLICATION

(11) **EP 4 718 420 A1**
(43) Date of publication of application: **01.04.2026**
(21) Application number: 25211642.1
(22) Date of filing: 24.07.2018
(51) Int. Cl.: G08G 1/00, G01C 21/34, G08G 1/127, G06Q 10/06, H04W 4/02, G06Q 50/40

(54) **AN INTERACTIVE REAL TIME SYSTEM AND REAL TIME METHOD OF USE THEREOF IN CONVEYANCE INDUSTRY SEGMENTS**

(30) Priority: 01.08.2017 US 201762539706 P; 13.08.2017 US 201715675757; 18.08.2017 US 201715680439; 18.07.2018 US 201816038487
(62) Divisional of application: 18841983.2
(71) Applicant: Dacosta, Alexis, San Diego, CA 92127 (US)
(72) Inventor: DACOSTA, Alexis, San Diego, CA 92127 (US); COLETTI, Vince, San Diego, 92130 (US)
(74) Representative: Schaumburg und Partner Patentanwälte mbB

(57) **Abstract**

The present invention recognizes that there is a long felt need for more efficient networks, systems, and methods in the conveyance industry for goods and services. A first aspect of the present invention generally relates to a system in the conveyance and other industries. A second aspect of the present invention generally relates to a method of use of the interactive system of the present invention.

## Description

### TECHNICAL FIELD

The present invention relates generally to the fields of networks, systems, and methods of use in the conveyance industry segments.

### BACKGROUND

As in many new industries, there are inefficiencies in existing support systems and methods due to the lack of experience in optimizing these systems for the needs of the new industry. These inefficiencies are typically identified over time through trial and error, eventually leading to technological advancement in the field. This generalization holds true for the conveyance industry, which includes a large number of new industry segments including ride-hail, rideshare, good delivery, courier, and on-demand delivery services. The current inefficient systems and methods available in the conveyance industry segments lead to disadvantages for the clients, the companies or entities themselves, hereinafter referred to as service providers, as well as representatives carrying out services for the service providers.

The problems relating to the current systems and methods used in the conveyance industry segments are rooted in computer technology and tied to the fact that the modern conveyance industry segments operate and change drastically in substantially real time. Conveyance industry segments are real time or near real time environments in that conveyance service requests ("CSRs") and conveyance service offerings ("CSOs") are available one second and gone the next second. In the substantially real time conveyance industry segments, neither a representative nor a client cannot procure all or most of the substantially real time information and analyze this information accurately to make a well-informed decision on the fly. There is currently no substantially real time system or method that can assist a representative or a client with this type of analysis. This lack of a substantially real time system nor method leads to a representative securing or obtaining a suboptimal, one-size-fits-all conveyance service request ("CSR") and a client securing or obtaining a suboptimal, one-size-fits-all conveyance service offering ("CSO") due to the inability to apply their own preferences.

Currently, a client requesting a ride in the ride-hail industry segment is offered different ride options, prices, wait times, and times to destination depending on which service provider is offering a given conveyance service and when the CSO is secured. Often, a client is provided options of CSOs from only one service provider to accept or decline. A representative is limited even further as only one CSR is shown when a representative wants to provide a conveyance service in any conveyance industry segment. Currently, there is a poor system and method to dispatch or assign representatives to CSRs and CSOs to conveyance clients.

The current systems and methods for a representative to analyze incoming CSRs are difficult and time consuming in the fast-paced environment of conveyance industry segments. The current technology does not permit a representative to analyze or evaluate and then accept CSRs that the representative would prefer based on their individual preferences. Representatives are currently given a single CSR and only have the option of accepting or declining that specific CSR, without an alternative. Generally, any details of a CSR a representative is securing are not provided ahead of time but are only revealed after that CSR is secured or obtained. A representative must choose to either secure a CSR without knowing any of the details of the conveyance service to be provided or choose not to work at all.

Furthermore, a representative is penalized for canceling a CSR that they may not wish to fulfill, even when the representative would ordinarily not have accepted the request in the first place had they been given a choice. This disadvantage, among others, has led to the common practice of representatives working for more than one service provider at the same time to allow some semblance of choice. However, that method of analyzing is a very laborious and time consuming process which is not useful or practical in the substantially real time environment of conveyance industry segments. To analyze CSRs, a representative would need to login to multiple applications from different service providers and navigate between these applications, viewing one individual CSR per application. Analyzing CSRs in such a way takes a lot of time and can cause a representative to miss CSRs that the representative would consider as preferred due to the substantially real time environment. Currently there is no system or method that a representative can use as a tool to analyze CSRs in substantially real time.

A representative is currently not able to analyze CSRs from more than one service provider in substantially real time given conventional systems and methods, which is a frustrating hindrance when every other aspect of conveyance industry segments operates in substantially real time. A representative's decision-making ability is limited given the current state of the art. With no way to analyze CSRs continuously in real time or near real time, a representative currently is not able to maximize their profit or work as efficiently as they would like, as the representative is forced to secure or obtain less preferred conveyance service requests ("pCSRs"). To secure or obtain a preferred conveyance service request "(pCSR"), a representative may have to wait and pass up less pCSRs for a more pCSR to become available to them, as representatives are only provided one CSR at a time. A representative wishing to work more efficiently is not able to do so given the current limitations of the systems and methods in the conveyance industry segments.

There is also currently no system or method to evaluate and secure CSRs in substantially real time across more than one conveyance industry segment. The absence of this capability further limits a representative's exposure in the conveyance industry and their ability to operate more efficiently if the representative wants to provide conveyance services in more than one conveyance industry segment. In addition, current limitations also reduce the amount of potential pCSRs available to a representative. Currently, if a representative wants to provide a ride in the ride-hail industry segment, then deliver food in the good delivery industry segment to take advantage of overlaps in locations or routes, the representative does not have the ability to evaluate and secure these pCSRs. If there were a system and method for a representative to be able to do so, the representative would have access to a greater number of diverse CSRs and gives the representative more flexibility in providing conveyance services within the conveyance industry.

Currently there is no system or method a representative can use to predict where the areas of elevated pricing will be in order to maximize their earning potential. Currently, representatives are assigned or provided with one conveyance service request at a time that can either be blindly accepted, without knowing any details, or rejected. This process is not a useful way of presenting CSRs to representatives. Existing technology is lacking in a way to visually present PCSRs from multiple service providers on a geographical map with dynamic icons being updated in real time or near real time. Currently there is no system or method to display to a representative a visually identifiable pCSR relative to a less pCSR.

Conveyance clients often endure similar problems or challenges as representatives. Currently when a conveyance client is looking to secure or obtain a CSO, the conveyance client is only shown the closest representatives from an individual service provider. The only way for clients to analyze or evaluate CSOs from different service providers is a very tedious and time consuming process similar to that for representatives. First a conveyance client would have to know about a competitor, then download the competitor's application, and input the same search criteria for the first service provider. This process would have to be repeated for every other competitor a conveyance client wishes to evaluate.

In the fast paced conveyance industry segments, where seconds can matter greatly in being able to secure or obtain a pCSO, current methods are not practical or useful to analyze or evaluate CSOs in real time or near real time. In most cases, by the time a conveyance client goes through the steps to analyze or evaluate even two or three service providers, the pCSO given a conveyance client's preferences is likely no longer available. As a result, a conveyance client often pays more or waits longer for a conveyance service than needed since there is currently no way to visually analyze or evaluate CSOs from multiple service providers in real time or near real time. Existing technology is lacking in a way to visually present pCSOs from multiple service providers on a geographical map with dynamic icons being updated in real time or near real time. An improved system and method is needed.

When service providers increase their pricing in certain areas, conveyance clients currently do not have a system or method to determine if there is an area close by which does not have elevated pricing. Currently, there is no way for a conveyance client to visually analyze or evaluate different areas on a geographical map to see pricing information for an individual service provider, let alone for multiple service providers. The downside of this lack in transparency is that conveyance clients do not have an opportunity to make an informed purchasing decision given their current limited options in the conveyance industry segments.

### SUMMARY

The present invention recognizes that there is a long felt need for more efficient systems and methods in the conveyance industry for goods and services.

A first aspect of the present invention generally relates to an interactive system in the conveyance and other industries.

A second aspect of the present invention generally relates to a method of use of the interactive system of the present invention.

### BRIEF DESCRIPTION OF THE FIGURES

**FIG. 1** is a high-level schematic of a conveyance system according to one embodiment of the present invention.
**FIG. 2** is a high-level diagram of a conveyance service system according to one embodiment of the present invention.
**FIG. 3** is a flow diagram of steps according to one embodiment of a conveyance system according to one embodiment the present invention.
**FIG. 4** is a sample display of a visual representation or a dynamic map according to one embodiment of the present invention.
**FIG. 5** provides a sample display of a combination of a dynamic map and a heat map according to one embodiment of the present invention.
**FIG. 6** is a high-level schematic of a conveyance system according to one embodiment of the present invention.
**FIG. 7** is a high-level diagram of a conveyance service system according to one embodiment of the present invention.
**FIG. 8** is a flow diagram of steps according to one embodiment of a conveyance system according to one embodiment the present invention.
**FIG. 9** is a flow diagram of steps for the filtering and identifying process according to one embodiment of the present invention.
**FIG. 10** is a flow diagram of steps for the filtering and identifying process according to one embodiment of the present invention.
**FIG. 11** is a sample display of a visual representation or a dynamic map according to one embodiment of the present invention.
**FIG. 12** provides a sample display of a combination of a dynamic map and a heat map according to one embodiment of the present invention.
**FIG. 13** provides a sample display of a visual representation or a heat map according to one embodiment of the present invention.
**FIG. 14** is a schematic showing a sample integration of hardware and software according to one embodiment of the present invention.

### DETAILED DESCRIPTION OF THE INVENTION

DEFINITIONS: Unless defined otherwise, all technical and scientific terms used herein have the same meaning as commonly understood by one of ordinary skill in the art to which this invention belongs. Generally, the nomenclature used herein and the procedures described below are well-known and commonly employed in the art. Conventional methods are used for these procedures, such as those provided in the art and various general references. Where a term is provided in the singular, the inventors also contemplate the plural of that term, and where a term is provided in the plural, the inventors also contemplate the singular of that term. The nomenclature used herein and the procedures described below are those well-known and commonly employed in the art, unless otherwise indicated. Other technical terms used herein have their ordinary meaning in the art that they are used, as exemplified by a variety of technical dictionaries.

The present invention recognizes that there is a long felt need for more efficient systems and methods in the conveyance industry for goods and services and includes several general and useful aspects, including:
1. a system in the conveyance and other industries;
2. a method of use of the interactive system of the present invention.

In an exemplary embodiment, the present invention includes several general and useful aspects, including a system and method of the present invention in the conveyance and other industries. In one aspect, the present invention can be a technology-based solution that can use a real time or near real time system, i.e., substantially real time, and a real time or near real time method to assist one or more representative in analyzing or evaluating and then securing one or more preferred conveyance service request ("pCSR") using a visual representation of the present invention.

One embodiment of the present invention can receive and filter a conveyance service request ("CSR") based on a representative preference and preferably a real time or near real time geographical location of a representative. The present invention can identify a preferred conveyance service request ("pCSR") from a filtered conveyance service request ("fCSR"). In one embodiment of the present invention, a visual representation of a fCSR with corresponding conveyance data, a pCSR with corresponding conveyance data, or a combination thereof, can be compiled with a geographical map on an application. The present invention can provide a representative with a visual tool to help analyze or evaluate and then secure or obtain a pCSR.

One example of a visual representation within the inventive scheme can be a dynamic map. The dynamic map can be a geographical map that displays one or more preferred conveyance service requests ("pCSRs") with corresponding conveyance data, a fCSR with corresponding conveyance data, or a combination thereof. A dynamic map can display the geographical location of a conveyance client, a beginning service geographical location, an ending service geographical location, pricing information, or combinations thereof. A representative can visually identify one or more pCSR to make well-informed decisions when evaluating and then securing a pCSR. An important improvement provided by the invention approach is that a conveyance client, service provider, good supplier, corresponding conveyance service request, or combinations thereof, can be displayed individually as visually distinct features, each of which can be updated in real time or near real time. One important improvement of improvement provided by the invention approach it that a conveyance client, a service provider, a good supplier, a corresponding CSR, or a combination thereof, can be displayed individually as a mobile transitory icon, a mobile transitory visual, or a mobile transitory symbol, and can be updated in substantially real time.

Another example of a visual representation within the inventive scheme is a heat map, which is a geographical map in which an area can be shaded, colored, patterned, or a combination thereof, in proportion to a measurement of one or more statistical variable to assist the representative when evaluating a CSR. Heat maps may be used to display substantially real time data, historical data, or may be predictive. Predictive heat maps display information compiled from one or more statistical variable of a real time or near real time fCSR, a past fCSR, or a combination thereof. The predictive heat map can estimate a future supply, future demand, a future statistical variable, or a combination thereof. In some embodiments, the predictive heat map can employ machine learning technology for generating the predictions. Historical heat maps can display information compiled from one or more statistical variable of a past fCSR. The historical heat map can show past supply, past demand, one or more past statistical variable, or a combination thereof.

The visual representation can be a combination of dynamic maps and heat maps. This combination map may be configured to allow the representative to view one or more service provider operating within a conveyance industry segment on both macro and micro levels.

A key feature of the inventive scheme is the improved display of information to facilitate different approaches to evaluate available services requests and options. For example, a dynamic map allows a representative to visually distinguish between PCSRs and filtered conveyance service requests ("fCSRs"). A representative can use heat maps to determine whether a given geographical location is a desirable area to work in. This highly visual approach gives a representative quick insight into real time nor near real time environments for analyzing and securing pCSRs particularly because the visual representation can be updated continuously in substantially real time.

Another benefit of the inventive approach is the ability to generate new data that can be useful to the representative. In one embodiment, the predictive function can transform real time fCSRs and/or past fCSRs, into a predictive heat map that the representative can employ to meet their work/revenue goals. Predictive heat maps help avoid missed opportunities that result from chasing an area of elevated pricing. For example, a predictive heat map can provide the representative with new data for analysis based on combinations of real time and/or past filtered fCSRs and can utilize machine learning technology to predict future supply or future demand.

The inventive approach also increases the representative's ability to interact with one or more of the conveyance client, the good or service provider, or a combination thereof, due to increased insight into the conveyance industry segment. The present invention provides a tool for presenting one or more pCSR, one or more filtered fCSR, conveyance data, or a combination thereof, to be analyzed or evaluated by the representative.

The inventive approach enhances the representative's decision-making ability, allowing the representative to use one or more representative preference, improving the ability for the representative to secure the most pCSR available at that time.

In an exemplary embodiment, the inventive approach provides a technology based solution that can use a real time or near real time system and/or method to assist a conveyance client in a process of analyzing or evaluating and then securing a preferred conveyance service offering ("pCSO") using a visual representation.

One embodiment can receive and filter a conveyance service offering ("CSO") based on a client preference and preferably a real time or near real time geographical location of a client. The present invention can identify a pCSO from filtered conveyance service offerings ("fCSOs"). In one embodiment, a visual representation of a filtered conveyance service offering ("fCSO") with corresponding conveyance data, a pCSO with corresponding conveyance data, or a combination thereof, can be compiled with a geographical map for display. The present invention can provide a client with a visual tool to help analyze or evaluate and then secure or obtain a pCSO.

One example of a visual representation within the inventive scheme can be a dynamic map. The dynamic map can be a geographical map that displays one or more pCSO with corresponding conveyance data, a fCSO with corresponding conveyance data, or a combination thereof. A dynamic map can display the geographical location of a representative, a beginning service geographical location, an ending service geographical location, pricing information, or combinations thereof. A client can visually identify one or more pCSO to make well-informed decisions when evaluating and then securing a pCSO. An important improvement provided by the invention approach is that a representative, service provider, good supplier, corresponding conveyance service request, or combinations thereof, can be displayed individually as visually distinct features, each of which can be updated in real time or near real time. One important improvement of improvement provided by the invention approach it that a representative, a service provider, a good supplier, a corresponding CSR, or a combination thereof, can be displayed individually as a mobile transitory icon, a mobile transitory visual, or a mobile transitory symbol, and can be updated in substantially real time. Visual representations of the CSOs can be displayed alone or in combinations in a similar manner to that described above for displaying CSRs.

In a similar manner to that described above with regard to CSRs and representatives, heat maps can be used to assist conveyance clients in evaluating CSOs by displaying CSOs, or parameters thereof, that are real time, predictive, and/or historical. The predictive heat map can estimate a future supply, future demand, a future statistical variable, or a combination thereof. The historical heat map can show past supply, past demand, at least one past statistical variable, or a combination thereof.

The visual representations used to display the CSOs can be a combination of one or more dynamic map and heat map, allowing the conveyance client to view one or more service provider operating within a conveyance industry segment on both a macro and micro level.

A key feature of the inventive scheme is the improved display of information to facilitate different approaches to evaluate available services offerings and options. For example, a dynamic map allows a client to visually distinguish between pCSOs and fCSOs. The client can use a heat map to quickly determine whether they are in an area of elevated pricing. The information provided on the maps is updated continuously in substantially real time, providing the client with the ability to easily identify a pCSO.

Another benefit of the inventive approach is the ability to generate new data that can be useful to the conveyance client. In one embodiment, the predictive function can transform real time fCSOs and/or past fCSOs, into a predictive heat map that the conveyance client can use to help identify a future pCSO. For example, a predictive heat map can help a client avoid paying more for a similar conveyance service. For example, a predictive heat map can provide the client with new data for analysis based on combinations of real time fCSOs and/or past fCSOs and can utilize machine learning technology to predict future supply or future demand.

The inventive approach also increases the conveyance client's ability to interact with one or more of the representative, the good or service provider, or a combination thereof, due to increased insight into the conveyance industry segment. The present invention provides a tool for presenting one or more pCSO, one or more fCSO, conveyance data, or a combination thereof, to be analyzed or evaluated by the client.

The inventive approach enhances the conveyance client's decision-making ability, allowing the conveyance client to use one or more client preference, improving the ability for the conveyance client to secure the most pCSO available at that time.

The visual representations generated by the inventive system and method provide increased knowledge that allows informed selection of CSRs by representatives and/or CSOs by clients. Trends can be identified, and changes can be seen in substantially real time, allowing quick response, whether it is the representative responding to a CSR or a client seeking to secure a CSO. The inventive approach provides the improved transparency needed for securing pCSRs and/or pCSOs. For representatives, this translates to more control or flexibility over how and where they want to work. For conveyance clients, improved insight into pricing, location, demand, and other variables that impact the desirability and availability of conveyance services improve transparency and assist the client in making better informed choices. In some embodiments, the processing of the CSRs and/or CSOs is enhanced through the use of quantum computing, machine learning technology, or a combination thereof.

The inventive system and method enable a large number of CSRs and CSOs available to be considered by the representative and client, respectively. The larger the number of choices presented, the greater the chance of identifying and securing a most preferred conveyance service. For representatives, the increased number of service requests translates to more opportunities, increased earning potential, improved flexibility, and greater efficiency. For conveyance clients, the increased selection of conveyance offerings represents money saving, reduced wait times, convenience, level of service, and more. For example, a conveyance client can use a heat map to determine if they are in an area of elevated pricing and look for a nearby area that does not have elevated pricing.

An important benefit of the invention scheme is the ability for a representative to operate or provide a conveyance service across multiple conveyance industry segments, e.g., ride-hail and food delivery. Currently, service providers lack the ability to enable a representative to operate in an additional conveyance industry segment at the same time. The inventive approach allows a representative to operate initially in one conveyance industry segment, then perform a conveyance service in a different conveyance industry segment and then go back to operate in the first conveyance industry segment. The inventive system and method allow the representative to seamlessly transfer between different conveyance industry segments based on the representative preference.

The inventive system and method add value to the conveyance industry as a whole. Representatives can enhance job satisfaction and income through the use of representative preferences. Conveyance clients can obtain shorter wait times, higher quality of conveyance service, and/or more price transparency, using client preferences. Together, the inventive approach improves an existing system and method to enhance the conveyance industry segment to the benefit of all users.

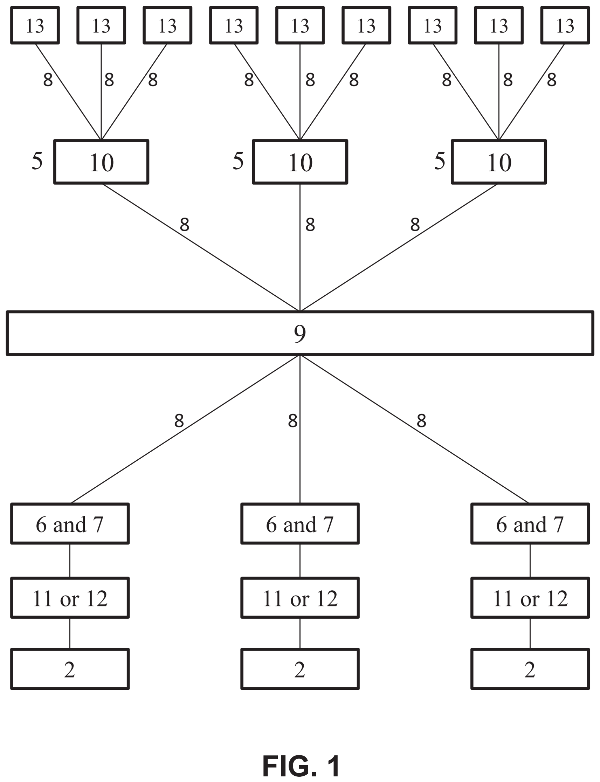

This following general description of some but not all elements, aspects, and embodiments relate to an inventive system, network, and method for securing conveyance services. The various elements are illustrated, particularly as set forth in the figures, examples, and the description thereof. Not all of these elements need be used in the present invention, other elements can be included or some elements removed. The following are elements shown in **FIGs. 1-14****.** Additional details about the different embodiments are provided in the examples in the description that follows.

A conveyance client ("client") **1** can be but is not limited to a person, a robot, a machine, or a combination thereof, that can analyze and then preferably secure or obtain at least one preferred conveyance service offering ("pCSO") **18.** A conveyance client **1** does not necessarily have to be a consumer of a service. A client **1** can receive a conveyance service. A conveyance client **1** can provide a conveyance client preference **4** used to identify a pCSO **18.**

A representative **2** can be but is not limited to a person, a robot, a machine, or a combination thereof, that can analyze and then secure a preferred conveyance service request ("pCSR") **15.** A representative **2** can provide or perform a conveyance service of a person, a good, a thing, an article, an item, a conveyance client **1,** or a combination thereof. A representative **2** can provide a representative preference **3** used to identify a pCSR **15.** A representative **2** can provide or perform a conveyance service relating to a service provider **5** operating in at least one conveyance industry segment.

A representative preference **3** can be but is not limited to an option selected or provided by a representative **2** that can be used to filter a conveyance service request ("CSR") **13** and preferably identify a pCSR **15.** A representative preference **3** can be stored or cached on a central server **9,** an external server **10,** an application **6,** or a combination thereof. A representative preference **3** can be inclusive or exclusive for filtering a CSR **13.**

A conveyance client preference **4** can be but is not limited to an option selected or provided by a conveyance client **1** that can be used to filter a conveyance service offering ("CSO") **16** and preferably identify a pCSO **18.** A conveyance client preference **4** can be stored or cached on a central server **9,** an external server **10,** an application **6,** or a combination thereof. A conveyance client preference **4** can be inclusive or exclusive for filtering of a CSO **16.**

A service provider **5** can be for example an entity or a business that can retain or contract with a representative **2,** an AV, a good supplier, or a combination thereof. A service provider **5** can facilitate a conveyance service between a representative **2,** an AV, a good supplier, a conveyance client **1,** or a combination thereof. A service provider **5** can operate in at least one conveyance industry segment.

An application **6** can be but is not limited to software accessible through a terminal **7.** An application **6** can display a visual representation including a heat map **12,** a dynamic map **11,** or a combination thereof. An application **6** can be for example used to analyze, evaluate, secure, or obtain a pCSR **15** or a pCSO **18.** An application **6** can display a pCSR **15** or a pCSO **18.** A representative **2** can input or provide a representative preference **3** into an application **6.** A conveyance client **1** can input or provide a conveyance client preference **4** into at least one application **6.**

A terminal **7** can be but is not limited to an electronic computing device. A terminal **7** can be associated with an AV **3.** A terminal **7** can include but is not limited to a computer processor, a computer readable memory, an input source, a geographical location module, a display, a network interface, or a combination thereof. A terminal **7** can be capable of communicating by way of a link **8.** A terminal **7** can be used to access an application **6.** A terminal **7** can encompass hardware and/or software alone or in a combination.

A link **8** can be but is not limited to a connection or an association with a software function, a software operation, a software component, a software module, or a combination thereof. A link **8** can be but is not limited to an electronic communication network channel. A link **8** can be a combination of connections between a central server **9,** an external server **10,** a terminal 7, an application **6,** or a combination thereof. A link **8** can encompass hardware and/or software alone or in a combination.

A central server **9** can execute at least one operation including receiving, transmitting, storing, standardizing, aggregating, and filtering a CSR **13** and identifying pCSR **15** for a representative **2.** A central server **9** can execute at least one operation including receiving, transmitting, storing, standardizing, aggregating, and filtering at least one CSO **16** and identifying a pCSO **18** for a conveyance client **1.** A central server **9** can include but is not limited to a computer processor, a computer readable memory, a network interface, or a combination thereof. A central server **9** can connect to or communicate with an external server **10,** an application **6,** a terminal **7,** or a combination thereof, by way of a link **8.** A central server **9** can include or connect to at least one database. A central server **9** can encompass hardware and/or software alone or in a combination.

An external server **10,** can be but is not limited to at least one source of a CSR **13** in conjunction with corresponding conveyance data, a CSO **16** in conjunction with corresponding conveyance data, or a combination thereof. An external server **10** can include but is not limited to a computer processor, a computer readable memory, a network interface, or a combination thereof. An external server **10** can connect to or communicate with a central server **9,** an application **6,** a terminal **7,** or a combination thereof, by way of a link **8.** An external server **10** can include or connect to at least one database. An external server **10** can encompass hardware and/or software alone or in a combination.

A dynamic map **11** can be for example a geographical map that can display a distinguishable good supplier, a distinguishable service provider **5,** a distinguishable representative **2,** a distinguishable AV, a distinguishable conveyance client **1,** or a combination thereof. A good supplier, a service provider **5,** a representative **2,** an AV, a conveyance client **1,** or a combination thereof, can be displayed as a mobile icon or a dynamic icon on a geographical map. A dynamic map **11** can be used by a representative **2** to analyze or evaluate and then preferably secure or obtain a pCSR **15.** A dynamic map **11** can be used by a conveyance client **1** to analyze and then preferably secure a pCSO **18.** A geographical location of a good supplier, a service provider **5,** a conveyance client **1,** a representative **2,** an AV, or a combination thereof, can be updated, changed, or refreshed in real time or near real time and can optionally reflect their respective availability status. A dynamic map **11** can be viewed from at least one perspective, at least one point of reference, at least one point of interest, or a combination thereof.

A heat map **12** can be but is not limited to visually display how a measurement of a statistical variable can vary across a geographical area or can show a level of variability within a geographical region. A heat map **12** can be for example a geographical map in which an area is shaded or patterned in proportion to a measurement of a statistical variable being displayed on a geographical map. A heat map **12** can be used by a representative **2** to analyze or evaluate and then preferably secure or obtain a pCSR **15.** A heat map **12** can be used by a conveyance client **1** to analyze or evaluate and then preferably secure or obtain a pCSO **18.** A heat map **12** can be viewed from at least one perspective, at least one point of reference, at least one point of interest, or a combination thereof.

A conveyance service request ("CSR") **13** can be for example a request for transportation of a person, a good, an article, a thing, an item, a conveyance client **1,** or a combination thereof, from a geographical location to another geographical location. A CSR **13** can be but is not limited to a request from a conveyance client **1.** A CSR **13** can be sourced or provided from an external server **10.** A CSR **13** can be sourced or provided by a service provider **5.** A CSR **13** can be updated in substantially real time.

A filtered conveyance service request ("fCSR") **14** can be a CSR **13** that can be filtered by using a representative preference **3,** a substantially real time geographical location of a representative **2,** or a combination thereof. A fCSR **14** can be updated in substantially real time.

A preferred conveyance service request ("pCSR") **15** can be a fCSR **14** that can be identified as preferred by a representative **2,** a central server **9,** an application **6,** or a combination thereof. A pCSR **15** can be identified as preferred by using a representative preference **3.** A pCSR **15** can be updated in substantially real time.

A conveyance service offering ("CSO") **16** can be for example an offering for transportation of a person, a good, an article, a thing, an item, or a combination thereof, from a geographical location to another geographical location. A CSO **16** can be but is not limited to an offering from a representative **2,** a service provider **5,** an AV, or a combination thereof. A CSO **16** can be sourced or provided from an external server **10.** A CSO **16** can be sourced or provided by a service provider **5.** A CSO **16** can be updated in substantially real time.

A filtered conveyance service offering ("fCSO") **17** can be for example a CSO **16** that can be filtered by using a conveyance client preference **4,** a real time or near real time geographical location of a conveyance client **1,** or a combination thereof. A fCSO **17** can be updated in substantially real time.

A preferred conveyance service offering ("pCSO") **18** can be for example a fCSO **17** that can be identified as preferred by a conveyance client **1,** a central server **9,** an application **6,** or a combination thereof. A pCSO **18** can be identified as preferred for example by using a conveyance client preference **4.** pCSO **18** can be updated in substantially real time.

### EXAMPLE 1: Securing a Preferred Conveyance Service Request

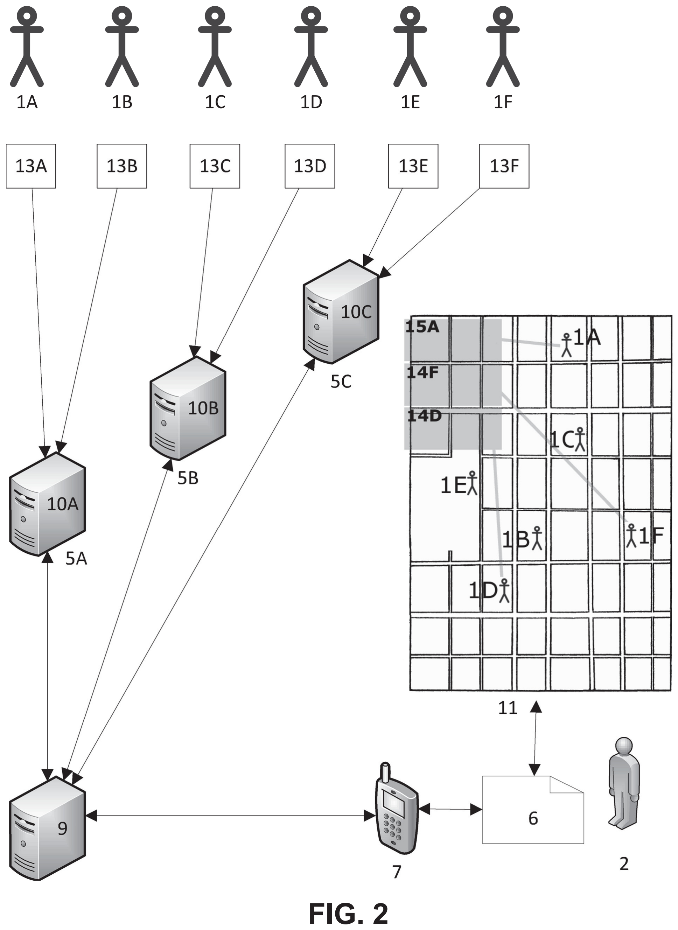

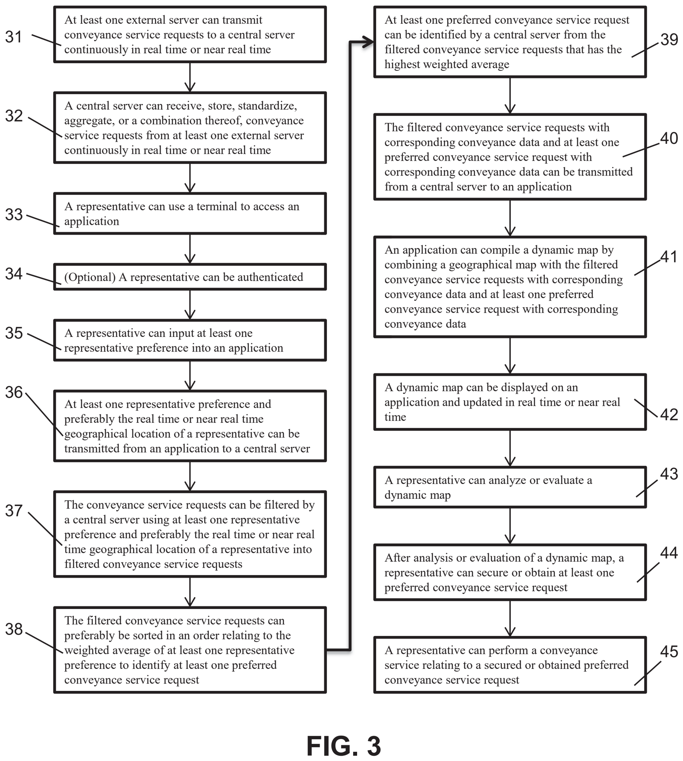

In this example, an embodiment is described for assisting a representative in a process of securing or obtaining, within the conveyance industry, a preferred conveyance service request ("pCSR") using a visual representation. Generally, see **Fig. 1** and **Fig. 2** for an exemplary system and **Fig. 3** for an exemplary method.

**FIG. 1** relates to an exemplary implementation of the inventive scheme as a macro level view of conveyance service system that can benefit a representative **2** operating in on or more conveyance industry segment. Conveyance service requests ("CSRs") **13** can be sourced from an external server **10** and can be transmitted to a central server **9** by way of a link **8.** A service provider **5** can be associated with an external server **10.** In this figure, each service provider **5** is associated with one external server **10.** A central server **9** can filter CSRs **13** into filtered conveyance service requests ("fCSRs") **14** by using a representative preference **3** and a real time or near real time geographical location of the representative **2.** A central server **9** can calculate the weighted average of the representative preference **3.** A central server **9** can sort the fCSRs **14** in an order relating to the corresponding weighted averages to identify a preferred conveyance service request ("pCSR") **15.** A pCSR **15** can be identified by a central server **9** from the fCSRs **14** that has the highest weighted average. A pCSR **15** with corresponding conveyance data and fCSRs **14** with corresponding conveyance data can be transmitted from a central server **9** to an application **6** by way of a link **8.** The application **6** can operate on a terminal **7** and can display a visual representation such a dynamic map **11** or a heat map **12,** or a combination thereof. The representative **2** can analyze the visual representation and then secure a pCSR **15.** A link **8** can be a connection or an association with a software function or a software component relating to an application **6,** a terminal **7,** a central server **9,** an external server **10,** or a combination thereof.

**FIG. 2** relates to an exemplary implementation of the inventive scheme as a macro level view of conveyance service system that can benefit a representative **2** operating in on or more conveyance industry segment. An individual conveyance service request ("CSR") **13** can be submitted by each individual conveyance client **1A, 1B, 1C, 1D, 1E,** and **1F.** An individual CSR **13** corresponds with each individual conveyance client **1** in the figure. Conveyance service requests ("CSRs") **13A** and **13B** are submitted by conveyance clients **1A** and **1B** to external server **10A** associated with service provider **5A.** CSRs **13C** and **13D** are submitted by conveyance clients **1C** and **1D** to external server **10B** associated with service provider **5B.** CSRs **13E** and **13F** are submitted by clients **1E** and **1F** to external server **10C** associated with service provider **5C.** Each service provider **5** can have one or more external server **10.**

A central server **9** can receive CSRs **13** and then filter the CSRs **13** into filtered conveyance service requests ("fCSRs") **14** by using a representative preference **3** and a substantially real time geographical location of a representative **2.** A central server **9** can calculate the weighted average of a representative preference **3.** A central server **9** can sort the fCSRs **14** in an order relating to the corresponding weighted averages to identify a preferred conveyance service request ("pCSR") **15.** A pCSR **15** can be identified by a central server **9** from the fCSRs **14** that has the highest weighted average. A pCSR **15** with corresponding conveyance data and fCSRs **14** with corresponding conveyance data can be transmitted from a central server **9** to an application **6** by way of at least one link **8.** An application **6** can operate on a terminal **7** and can display a visual representation, for example, a dynamic map **11.** Individual fCSRs **14D, 14F** and the pCSR **15A** can be shown on a dynamic map **11** as dynamic icons or visuals and can optionally show conveyance data. A representative **2** can analyze or evaluate a dynamic map **11** and then secure a pCSR **15A.** A link **8** can be a connection or an association with a software function or a software component relating to an application **6,** a terminal **7,** a central server **9,** an external server **10,** or a combination thereof. A link **8** can be a connection or an association with an application **6,** a central server **9,** an external server **10,** or a combination thereof, on a terminal **7** associated with a representative **2.**

In one embodiment, an external server(s) is a source of all or some of the CSRs with corresponding conveyance data and is transmitted from the external server(s) to the central server by way of a link. All or some of the plurality of CSRs with corresponding conveyance data are updated in real time or near real time. The central server standardizes, aggregates, or a combination thereof, all or some of the plurality of CSRs with corresponding conveyance data and further filters all or some of the plurality of CSRs with corresponding conveyance data by using the representative preference and the real time or near real time geographical location of the representative, to identify all or some of the plurality of fCSRs with corresponding conveyance data. All or some of the plurality of fCSRs with corresponding conveyance data are updated in real time or near real time. The central server further identifies the pCSR with corresponding conveyance data from all or some of the plurality of fCSRs with corresponding conveyance data relating to the representative preference. The pCSR with corresponding conveyance data may be updated in real time or near real time. The central server further transmits all or some of the plurality of fCSRs with corresponding conveyance data, the pCSR with corresponding conveyance data, the representative preference, the real time or near real time geographical location of the representative, or a combination thereof, to the application by way of a link between the central server and the application. The terminal facilitates or provides an input function, a display function, and an operation of the application and is used by the representative to interface with the application. The central server may be located on or associated with the terminal. The terminal, the application, the central server, the external server, a link, or a combination thereof, may be combined or integrated, and one or more function of the central server may be performed by the application. The application may compile the visual representation of all or some of the plurality of fCSRs with corresponding conveyance data, the pCSR with corresponding conveyance data, the representative preference, the real time or near real time geographical location of the representative, or a combination thereof. The application displays the visual representation updated in real time or near real time. The representative may use the application to evaluate the visual representation and then secure the pCSR and perform the conveyance service. The application may operate on the central server. At least one function of the central server or the external server may be performed by the application. At least one function of the application may be performed by the central server or the external server.

In a further embodiment, where all or some of the plurality of CSRs with corresponding conveyance data, the real time or near real time geographical location of the representative, or a combination thereof, are structured in a different format, the central server standardizes or converts them into a uniform format.

An additional embodiment includes, wherein all or some of the plurality of CSRs with corresponding conveyance data are structured in a uniform format prior to being transmitted from the external server to the central server by way of a link between the external server and the central server and are not standardized.
Conveyance Service Requests (CSRs): The following are illustrative, non-limiting examples and embodiments of "conveyance service offerings (CSOs)" as used in the present disclosure:
In some embodiments, all or some of the plurality of CSRs in conjunction with corresponding conveyance data are sourced or provided by one or more service providers or goods suppliers operating in a conveyance industry segment.

In another embodiment, CSRs may include one or more, or a combination of requests for a ride-hail service, a ride-share service, a car-share service, a peer-to-peer conveyance service, a transportation service, a service, a person delivery service, a taxi service, a shuttle service, a good delivery service, an item delivery service, a medical service and delivery, a food delivery service, a courier delivery service, a freight delivery service, an animal delivery service, a delivery service, or a combination thereof. In a further embodiment, the plurality of CSRs may be a single CSR.

Conveyance data may include one or a combination of a beginning service geographical location, a ending service geographical location, pricing information, elevated pricing information, a representative preference, a conveyance client preference, a distance parameter, an estimated time of arrival, a time to destination, a conveyance client geographical location, a conveyance client review, a conveyance client rating, a conveyance client detail, a conveyance service detail, a conveyance service route, a preferred conveyance client, a sensor data, a representative geographical location, a representative review, a representative rating, a representative detail, an AV geographical location, an AV review, an AV rating, an AV detail, a preferred AV, a route planning preference, a fuel economy preference, a battery longevity preference, a vehicle capacity preference, a vehicle diagnostic preference, a conveyance data preference, a service provider geographical location, a service provider review, a service provider rating, a service provider detail, a preferred service provider, a good supplier geographical location, a good supplier review, a good supplier rating, a good supplier detail, a preferred good supplier, an AV owner/controller geographical location, an AV owner/controller review, an AV owner/controller rating, an AV owner/controller detail, a preferred AV owner/controller, a fleet manager geographical location, a fleet manager review, a fleet manager rating, a fleet manager detail, a preferred fleet manager, a logistics provider geographical location, a logistics provider review, a logistics provider rating, a logistics provider detail, a preferred logistics provider, a logistics supplier geographical location, a logistics supplier review, a logistics supplier rating, a logistics supplier detail, a preferred logistics supplier, a conveyance industry segment detail, a preferred conveyance industry segment, a good detail, an item detail, a type of vehicle detail, a vehicle detail, a measurement of one or more statistical variable, a level of service detail, fuel consumption, battery level, vehicle diagnostic, vehicle capacity, or a combination thereof.

In some embodiments, all or some of the plurality of CSRs with corresponding conveyance data are filtered relating to the representative preference and the real time or near real time geographical location of the representative, to identify all or some of the plurality of fCSRs with corresponding conveyance data by one or more of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

Another embodiment includes wherein the pCSR with corresponding conveyance data is identified from all or some of the plurality of fCSRs with corresponding conveyance data relating to a weighted average of the representative preference.

In a further embodiment, a different geographical location is used other than the real time or near real time geographical location of the representative when filtering all or some of the plurality of CSRs with corresponding conveyance data. In some embodiments, the plurality of fCSRs may be single fCSR. An embodiment includes where the representative secures or obtains the fCSR other than the pCSR.
Visual Representation: The following are illustrative, non-limiting examples and embodiments of "visual representation and/or representative maps" as used in the present disclosure:
In an embodiment, the visual representation is compiled on the central server and transmitted to the application. The visual representation may include one or more of a dynamic map and a heat map, or a pCSR in real time or near real time, related to the representative preference, the real time or near real time geographical location of the representative, or a combination thereof.

In another embodiment, the representative preference is displayed as one or more icon or visual with or on the visual representation, to allow the representative to evaluate all or some of the plurality of fCSRs with corresponding conveyance data, the pCSR with corresponding conveyance data, or a combination thereof, and secure the pCSR relating to a service provider or a good supplier operating in at least one conveyance industry segment.

In another embodiment, the pCSR, the representative preference, or a combination thereof, is displayed in a visually identifiable format compared to all or some of the plurality of fCSRs relating to a service provider or a good supplier operating in a conveyance industry.

In an additional embodiment the dynamic map may include a geographical map that displays in real time or near real time, all or some of the plurality of fCSRs with corresponding conveyance data, the pCSR with corresponding conveyance data, the representative preference, or a combination thereof.

All or some of the plurality of fCSRs with corresponding conveyance data, the pCSR with corresponding conveyance data, the representative preference, or a combination thereof, relating to a service provider or a good supplier operating in a conveyance industry segment, may be displayed individually as a mobile or transitory icon or a mobile or transitory visual and updates or changes in real time or near real time.

Further, all or some of the plurality of fCSRs with corresponding conveyance data, the pCSR with corresponding conveyance data, the representative preference, or a combination thereof, relating to an individual service provider or an individual good supplier operating in a conveyance industry segment, may be displayed as a distinguishable icon or a distinguishable visual and updates or changes in real time or near real time.

All or some of the plurality of fCSRs with corresponding conveyance data, the pCSR with corresponding conveyance data, the representative preference, or a combination thereof, relating to an individual service provider or an individual good supplier may be displayed as an icon or visual and updates or changes in real time or near real time.

In another embodiment all or some of the fCSRs with corresponding conveyance data, the pCSR with corresponding conveyance data, the representative preference, or a combination thereof, relating to an individual service provider or an individual good supplier may be displayed as or with a different icon, a different symbol, a different color, a different shading, a different pattern, a different visual, or a combination thereof.

All or some of the fCSRs with corresponding conveyance data, the pCSR with corresponding conveyance data, the representative preference, or a combination thereof, relating to an individual service provider or an individual good supplier is displayed as or with a similar icon, a similar symbol, a similar color, a similar shading, a similar pattern, a similar visual, or a combination thereof.

In some embodiments, the representative updates, modifies, or changes the representative preference and the dynamic map displays in real time or near real time, all or some of the plurality of fCSRs with corresponding conveyance data, the pCSR with corresponding conveyance data, the representative preference, or a combination thereof, based on the updated, modified, or changed the representative preference.

In a further embodiment, the heat map includes the geographical map that displays a visual depiction of a statistical variable of all or some of the CSRs with corresponding conveyance data; all or some of the plurality of fCSRs with corresponding conveyance data; all or some of the preferred conveyance service requests ("pCSRs") with corresponding conveyance data; the representative preference; or a combination thereof.

An additional embodiment includes, wherein the statistical variable may include one or more of measurement of conveyance service availability, pricing, elevated pricing, CSR density, fCSR density, pCSR density, level of service density, conveyance service distance, estimated time of arrival, preferred conveyance client density, preferred good supplier density, preferred conveyance industry segment, conveyance industry segment density, representative density, conveyance client density, service provider density, good supplier density, or a combination thereof.

An embodiment includes, wherein at least one area of the heat map is distinguished in proportion to at least one measurement of the statistical variable and displayed as having a distinguishable hue, a distinguishable shade, a distinguishable saturation, a distinguishable opacity, a distinguishable color, a distinguishable value of color, a distinguishable pattern, a distinguishable hatch fill, a distinguishable shape, a distinguishable image, a distinguishable animation, or a combination thereof. Areas of the heat map may be distinguished in proportion to a measurement of the statistical variable and displayed as having one or a combination of a distinguishable visual characteristics such as hue, shade, saturation, opacity, color, color value, pattern, fill, shape, image, animation, or a combination thereof.

In some embodiments, the pCSR is not identified prior to compiling the heat map, a real time or near real time heat map, a historical heat map, a predictive heat map, or a combination thereof.

In a further embodiment, a real time or near real time heat map is compiled from the statistical variable of the CSR with corresponding conveyance data, the fCSR with corresponding conveyance data, the pCSR with corresponding conveyance data, the representative preference, or a combination thereof.

An additional embodiment includes a historical heat map compiled from the statistical variable of all or some of past the plurality of CSRs with corresponding conveyance data, all or some of past the plurality of fCSRs with corresponding conveyance data, all or some of past the pCSR with corresponding conveyance data, the representative preference, or a combination thereof.

An embodiment includes a predictive heat map compiled from the statistical variable of all or some of past the plurality of CSRs with corresponding conveyance data, all or some of past the plurality of fCSRs with corresponding conveyance data, all or some of past the pCSR with corresponding conveyance data, all or some of the plurality of CSRs with corresponding conveyance data, all or some of the plurality of fCSRs with corresponding conveyance data, all or some of the pCSR with corresponding conveyance data, the representative preference, or a combination thereof.

In an embodiment, the predictive heat map identifies or estimates one or more of future conveyance service availability, future pricing, future elevated pricing, future CSR density, future fCSR density, future pCSR density, future level of service density, future conveyance industry segment density, future representative density, future conveyance client density, future service provider density, future good supplier density, future level of service demand, future conveyance industry segment demand, future conveyance service demand, future service provider demand, future good supplier demand, future conveyance service supply, future representative supply, or a combination thereof.

In an embodiment, the predictive heat map generates a visual notification or an audio notification to notify the representative of a future change or update to the statistical variable, the measurement of the statistical variable, or a combination thereof.

In one embodiment, the representative, the central server, the application, or a combination thereof, secures the pCSR. In another embodiment, the representative may secure multiple pCSRs concurrently.

In a further embodiment, one or more of the pCSR with corresponding conveyance data, the fCSR with corresponding conveyance data, the CSR with corresponding conveyance data, the additional fCSR with corresponding conveyance data, the additional pCSR with corresponding conveyance data, the real time or near real time geographical location(s) of the representative(s), the representative preference(s), the beginning service geographical location, the ending service geographical location, or a combination thereof, is identified or updated in real time or near real time as the real time or near real time geographical location of the representative updates or changes or as traffic information updates or changes.

In another embodiment, the representative browses or navigates an area of the visual representation to identify and then secure the pCSR or the fCSR by selecting or accepting the pCSR, the fCSR, the representative preference, or a combination thereof.

An embodiment includes wherein the visual representation is displayed on a remote display.

In another embodiment, one or more of the application, the terminal, the central server, the external server(s), the link, or a combination thereof, are combined or integrated.

One or more of the pCSR with corresponding conveyance data, the fCSR with corresponding conveyance data, the CSR with corresponding conveyance data, the real time or near real time geographical location of the representative, the representative preference, the additional fCSR with corresponding conveyance data, the additional pCSR with corresponding conveyance data, a secured pCSR with corresponding conveyance data, the beginning service geographical location, the ending service geographical location, or a combination thereof, may be transmitted and/or updated in real time or near real time.

In another embodiment, one or more of the pCSR with corresponding conveyance data, the fCSR with corresponding conveyance data, the CSR with corresponding conveyance data, the real time or near real time geographical location of the representative, the representative preference, the additional fCSR with corresponding conveyance data, the additional pCSR with corresponding conveyance data, a secured pCSR with corresponding conveyance data, the beginning service geographical location, the ending service geographical location, or a combination thereof, are transmitted in real time or near real time between the application and the external server and updated in real time or near real time.

In another embodiment, one or more of the pCSR with corresponding conveyance data, the fCSR with corresponding conveyance data, the CSR with corresponding conveyance data, the real time or near real time geographical location of the representative, the representative preference, the additional fCSR with corresponding conveyance data, the additional pCSR with corresponding conveyance data, a secured pCSR with corresponding conveyance data, the beginning service geographical location, the ending service geographical location, or a combination thereof, are transmitted in real time or near real time between the central server and the external server and updated in real time or near real time.

### EXAMPLE 2: Securing a Preferred Conveyance Service Request

In this example, an embodiment is described for assisting a representative in a process of securing or obtaining, within the conveyance industry, a preferred conveyance service request ("pCSR") using a visual representation. Generally, see **Fig. 1** and **Fig. 2** for an exemplary system and **Fig. 3** for an exemplary method of securing a preferred conveyance service request.

**FIG. 3** provides a flowchart of steps of an exemplary method in a preferable but not necessarily required order. The flowchart describes steps of how a representative **2** can secure a preferred conveyance service request ("pCSR") **15** by analyzing or evaluating a visual representation, in this example, a dynamic map **11.** A link **8** can be a connection or an association with a software function or a software component relating to an application **6,** a terminal 7, a central server **9,** one or more external server **10,** or a combination thereof.

| | |
|---|---|
| Step 1. | A conveyance service request can be transmitted from an external server to a central server continuously in real time or near real time by way of a link |
| Step 2. | A conveyance service request can be stored, standardized, aggregated, or a combination thereof, at least once on a central server |
| Step 3. | A representative can use a terminal to access an application |
| Step 4. | A representative can be authenticated |
| Step 5. | A representative can provide a representative preference into an application |
| Step 6. | A representative preference and preferably a real time or near real time geographical location of a representative can be transmitted from an application to a central server by way of a link |
| Step 7. | A conveyance service request can be filtered by a central server using a representative preference and preferably a real time or near real time geographical location of a representative into a filtered conveyance service request |
| Step 8. | A filtered conveyance service request can preferably be sorted in an order relating to a weighted average of a representative preference to identify a preferred conveyance service request |
| Step 9. | A preferred conveyance service request can be identified by a central server as a filtered conveyance service request that has the highest weighted average from a filtered conveyance service request |
| Step 10. | A filtered conveyance service request and a preferred conveyance service request can be transmitted from a central server to an application by way of a link |
| Step 11. | An application can, for example, compile a dynamic map by combining a geographical map with a filtered conveyance service request with corresponding conveyance data and preferably a preferred conveyance service request with corresponding conveyance data and then preferably a dynamic map can be displayed on an application and updated in real time or near real time |
| Step 12. | A preferred conveyance service request can be displayed as a visually distinguishable icon alongside a filtered conveyance service request on a dynamic map |
| Step 13. | A representative can analyze or evaluate a dynamic map |
| Step 14. | After analysis or evaluation of a dynamic map, a representative can secure or obtain a preferred conveyance service request |
| Step 15. | A representative can perform a conveyance service |

This example can be applied to any conveyance of goods or services and may involve more than one conveyance industry segment, however, this example is in the ride-hail industry segment. In this example, a representative **2** can be a driver, a conveyance client **1** can be a passenger, and a conveyance service request ("CSR") **13** can be a ride service request.

A central server **9** can continuously receive conveyance service requests ("CSRs") **13** from preferably more than one external server **10** by way of a link **8** in substantially real time and can store, standardize, aggregate, and filter CSRs **13** in substantially real time. A central server **9** can preferably sort filtered conveyance service requests ("fCSRs") **14** in substantially real time, or use another technique, to identify a preferred conveyance service request ("pCSR") **15.** In a situation where a representative **2** does not have an application **6** downloaded to a terminal **7,** a representative **2** could, for example, download an application **6** and can optionally register an account to create a representative **2** profile if desired/required. A representative **2** can access an application **6** using a terminal **7** to gain knowledge of the ride-hail industry segment, for example. When a representative **2** would like to provide a ride in the ride-hail industry segment, for example, a representative **2** would preferably login to an application **6** and can be authenticated.

Once logged into an application **6,** a representative **2** can input or provide, for example, representative preferences **3** into an application **6.** In this example, a representative **2** can input or provide two representative preferences **3,** a pricing preference and a service duration preference. A pricing preference can be, for example, a preference of over $20 income per each individual CSR **13.** A service duration preference can be, for example, a preference of conveyance services shorter than 15 minutes.

Preferably, these two representative preferences **3** can enable a representative **2** to analyze or evaluate a dynamic map **11** with a pCSR **15** and fCSRs **14** that can be more desired by a representative **2.** For example, a central server **9** can filter out CSRs **13** that do not match or satisfy the two representative preferences **3** for a representative **2.** Benefits of representative preferences **3** can be to allow a representative **2** to better meet their criteria in providing conveyance services such as but not limited to higher earning potential, better efficiencies, more suitable CSRs **13,** or a combination thereof. The two representative preferences **3** for this example and preferably a real time or near real time geographical location of a representative **2** can be transmitted from an application **6** to a central server **9** by way of at least one link **8.**

A central server **9** can filter CSRs **13** into fCSRs **14** by comparing to, for example, the two representative preferences **3** and preferably a real time or near real time geographical location of a representative **2.** CSRs **13** that match the indicated two representative preferences **3** can be identified as fCSRs **14.** CSRs **13** that do not match the indicated two representative preferences **3** can be discarded or ignored as not being fCSRs **14.** fCSRs **14** can preferably be sorted by a weighted average of, for example, the two representative preferences **3** to identify a pCSR **15.** Representative preferences **3** can be but are not limited to an equal weight of 50% when calculating a weighted average. Representative preferences **3** chosen by a representative **2** can optionally be given unequal weights for example but not limited to a 60% and 40% respectively. A representative **2** can optionally choose for representative preferences **3** to have equal or unequal weights.

A filtered conveyance service request ("fCSR") **14** with the highest weighted average can be identified as a pCSR **15.** For example, a central server **9** can identify a pCSR **15** from fCSRs **14** by preferably using the highest weighted average of the pricing preference and service duration preference. Preferably, additional CSRs **13** can be received and continuously filtered by a central server **9** into additional fCSRs **14.** Preferably, additional fCSRs **14** can be sorted by a central server **9** into preferred conveyance service requests ("pCSRs") **15.**

fCSRs **14** in conjunction with corresponding conveyance data and a pCSR **15** in conjunction with corresponding conveyance data can be transmitted from a central server **9** to an application **6** by way of at least one link **8.** An application **6** can then compile a dynamic map **11** of fCSRs **14** and a pCSR **15** based on a representative's **2** preferences. A dynamic map **11** can be compiled on an application **6** by combining a geographical map relating to a real time or near real time geographical location of a representative **2** with fCSRs **14** and a pCSR **15.** fCSRs **14** and a pCSR **15** can be positioned on a dynamic map **11** relating to corresponding geographical locations contained therein. A pCSR **15** can be displayed on a dynamic map **11** as a visually distinguishable icon compared to fCSRs **14.** A dynamic map **11** can preferably be refreshed continuously in real time or near real time with updated fCSRs **14** and a pCSR **15.**

A representative **2** can then preferably visually analyze or evaluate a dynamic map **11** prior to securing or obtaining a fCSR **14** or a pCSR **15.** For example, in order to find another fCSR **14** or another pCSR **15,** a representative **2** can update a representative preference **3.** In this example, a representative **2** chooses to secure or obtain a pCSR **15** identified by a central server **9.** A representative **2** can then preferably perform a conveyance service. An application **6,** a central server **9,** an external server **10,** a terminal **7,** a link **8,** or a combination thereof, can be combined or integrated. A representative **2** can utilize a visual representation that can display a dynamic map **11 on** a terminal **7** that can be integrated or associated with an application **6,** a central server **9,** an external server **10,** a link **8,** or a combination thereof.

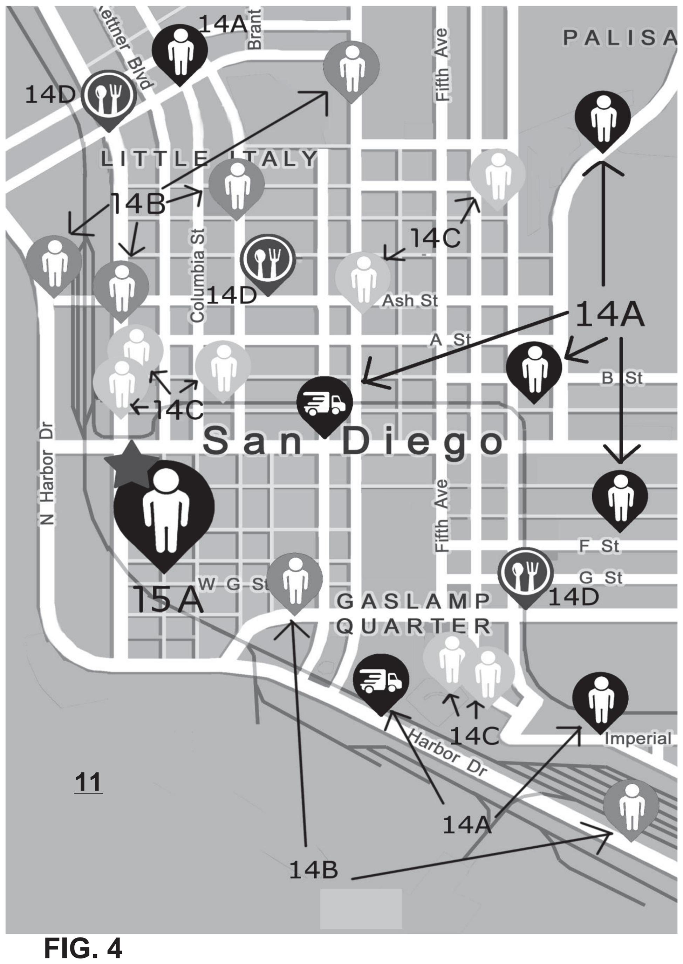

**FIG. 4** provides an exemplary display of a visual representation, in this example a dynamic map **11** where a representative **2** can benefit from the present invention. A dynamic map **11** can be used by a representative **2** to analyze or evaluate and then secure or obtain the preferred conveyance service request ("pCSR") **15A.** The filtered conveyance service requests ("fCSRs") **14A, 14B, 14C,** and **14D** and the pCSR **15A** are associated with different service providers **5A, 5B, 5C,** and **5D** respectively. A link **8** can be a connection or an association with a software function or a software component relating to an application **6,** a terminal **7,** a central server **9,** an external server **10,** or a combination thereof. The pCSR **15A** can be visually identifiable compared to the fCSRs **14A, 14B, 14C** and **14D.** In this exemplary figure, a star is used in addition to a larger icon to demonstrate the pCSR **15A** as being visually identifiable. At least one different icon, symbol, color, shade, or visual can be used to identify individual fCSRs **14A, 14B, 14C** and **14D** and the pCSR **15A** that are from different conveyance industry segments, different service providers **5,** or a combination thereof. For example, in this figure, icons displaying a person are ride service requests from the ride-hail industry segment, icons displaying a van are good delivery service requests from the courier industry segment, and icons with a spoon and fork are food delivery service requests from the food delivery industry segment. Each individual icon, symbol, color, shade, or visual can be mobile or dynamic and updated in real time or near real time on an application **6.**

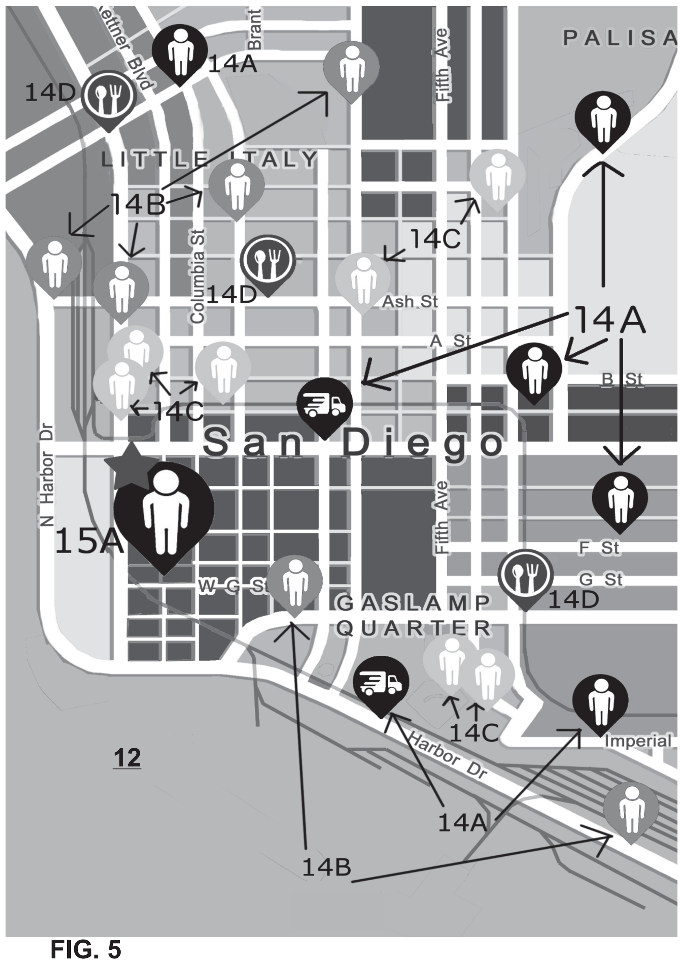

**FIG. 5** provides an example of a combination of a dynamic map **11** and a heat map **12** which may be used by representative **2** to evaluate on both a micro and macro level view of a conveyance industry segment and then secure the preferred conveyance service request ("pCSR") **15A.** The filtered conveyance service requests ("fCSRs") **14A, 14B, 14C,** and **14D** and the pCSR **15A** are associated with different service providers **5A, 5B, 5C,** and **5D** respectively. A link **8** can be a connection or an association with a software function or a software component relating to an application **6,** a terminal **7,** a central server **9,** an external server **10,** or a combination thereof.

The pCSR **15A** can be visually identifiable compared to the fCSRs **14A, 14B, 14C,** and **14D.** In this example, a star is used in addition to a larger icon to demonstrate the pCSR **15A** as being visually identifiable. At least one different icon, symbol, color, shade, or visual can be used to identify individual fCSRs **14A, 14B, 14C** and **14D** and the pCSR **15A** that are from different conveyance industry segments, different service providers **5,** or a combination thereof. For example, in this figure, icons displaying a person are ride service requests from the ride-hail industry segment, icons displaying a van are good delivery service requests from the courier industry segment, and icons with a spoon and fork are food delivery service requests from the food delivery industry segment. Each individual icon, symbol, color, shade, or visual can be mobile or dynamic and updated in real time or near real time on an application 6.

In this exemplary figure, a dynamic map **11** showing fCSRs **14A, 14B, 14C,** and **14D** and the pCSR **15A** is displayed in combination with a heat map **12** showing areas with elevated pricing. Areas of the combination of a dynamic map **11** and a heat map **12** can be shaded or patterned in proportion to the measurement of an elevated pricing metric being displayed on a geographical map. Darker shaded areas, for example, can represent areas with higher elevated pricing whereas lighter shaded areas can represent areas with lower elevated pricing or potentially no elevated pricing. A representative **2** can use this combination of a dynamic map **11** and a heat map **12** to analyze and identify areas of elevated pricing shown as darker shaded areas to position themselves closer to areas of elevated pricing. In this figure, a representative **2** can drive to a darker shaded area with higher pricing and then secure the pCSR **15A.**

Additional definitions, features and embodiments of the visual representation and/or representative maps and method(s) for generating them are described below:
Standardizing Conveyance Service Requests (CSRs): In one embodiment, some or all of the plurality of CSRs, the real time or near real time geographical location of the representative, or a combination thereof, may be structured in a different format, and are standardized or converted into a uniform format. In another embodiment, all or some of the plurality of CSRs are structured in a uniform format prior to being transmitted from the external server to the central server and are not standardized. A further embodiment includes wherein these steps can be in any order prior to filtering all or some of the plurality of CSRs.
Transmitting Representative Preference and Geographical Location: In an embodiment, the representative preference, once inputted or provided into the application, may be stored/cached on the application, the computer readable memory of the central server, or a combination thereof, and the representative preference is not inputted or provided again into the application by the representative. In another embodiment, the representative preference is stored or cached in the computer readable memory of the central server and the representative preference is not transmitted again from the application to the central server. In still another embodiment, the representative preference, the real time or near real time geographical location of the representative, or a combination thereof, may be transmitted from the application to the central server at any time prior to filtering all or some of the plurality of CSRs.
Filtering Conveyance Service Requests (CSRs): In some embodiments, all or some of the CSRs are filtered relating to the representative preference and the real time or near real time geographical location of the representative, to identify all or some of the plurality of fCSRs by one or more process of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

In another embodiment, all or some of the plurality of CSRs are filtered in real time or near real time and the pCSR is identified in real time or near real time from all or some of the plurality of fCSRs on the application by: (a) transmitting in real time or near real time, all or some of the plurality of CSRs from the central server to the application by way of a link between the central server and the application; (b) filtering in real time or near real time, all or some of the plurality of CSRs by using the representative preference and the real time or near real time geographical location of the representative, to identify all or some of the plurality of fCSRs; and (c)identifying in real time or near real time, the pCSR from all or some of the plurality of fCSRs relating to the representative preference.

In a further embodiment, a different geographical location may be used other than the real time or near real time geographical location of the representative when filtering all or some of the plurality of CSRs.
Identifying Preferred Conveyance Service Request (pCSR): In some embodiments, the pCSR relating to the representative preference is identified from all or some of the plurality of fCSRs by using one or more of a sorting algorithm, a selection algorithm, a search algorithm, a merge algorithm, a maximum function, a minimum function, a graph algorithm, a graph search algorithm, a tree algorithm, a tree search algorithm, a matrix calculation, a matrix algorithm, a comparison, or a combination thereof.

Another embodiment includes wherein the pCSR is identified from all or some of the plurality of fCSRs relating to a weighted average of the representative preference.

In a further embodiment, the pCSR is identified from all or some of the plurality of fCSRs on the application by: (a) transmitting in real time or near real time, all or some of the plurality of fCSRs from the central server to the application by way of a link between the central server and the application; and (b) identifying in real time or near real time, the pCSR from all or some of the plurality of fCSRs relating to the representative preference.
Displaying a Visual Representation: An embodiment includes displaying the visual representation on a remote display and may include one or more of a dynamic map and heat map, or a combination thereof. In some embodiments, the visual representation may be compiled on the central server and transmitted to the application.

A further embodiment includes that the representative may use the visual representation to secure the pCSR in real time or near real time, related to the representative preference, the real time or near real time geographical location of the representative, or a combination thereof. The representative preference may be displayed as one or more icon or visual with or on the visual representation, to allow the representative to evaluate all or some of the plurality of fCSRs, the pCSR, or a combination thereof, and secure the pCSR relating to a service provider or a good supplier operating.

Another embodiment includes wherein the pCSR, the representative preference, or a combination thereof, is displayed in a visually identifiable format compared to all or some of the plurality of fCSRs relating to a service provider or a good supplier operating.

An additional embodiment includes wherein the dynamic map includes the geographical map that displays in real time or near real time, all or some of the plurality of fCSRs with corresponding conveyance data, the pCSR with corresponding conveyance data, the representative preference, or a combination thereof.

A further embodiment includes wherein all or some of the plurality of fCSRs with corresponding conveyance data, the pCSR with corresponding conveyance data, the representative preference, or a combination thereof, relating to a service provider or a good supplier operating in a conveyance industry segment, is displayed individually as a mobile or transitory icon or a mobile or transitory visual and updates or changes in real time or near real time.

A further embodiment includes wherein all or some of the plurality of fCSRs, the pCSR, the representative preference, or a combination thereof, relating to an individual service provider or an individual good supplier operating is displayed as a distinguishable icon or visual and updates or changes in real time or near real time.

A further embodiment includes wherein all or some of the plurality of fCSRs, the pCSR, the representative preference, or a combination thereof, relating to an individual service provider or an individual good supplier operating is displayed as an icon or visual and updates or changes in real time or near real time.

A further embodiment includes wherein all or some of the plurality of fCSRs with corresponding conveyance data, the pCSR with corresponding conveyance data, the representative preference, or a combination thereof, relating to an individual service provider or an individual good supplier is displayed as or with a different icon, a different symbol, a different color, a different shading, a different pattern, a different visual, or a combination thereof.

A further embodiment includes wherein all or some of the plurality of fCSRs, the pCSR, the representative preference, or a combination thereof, relating to an individual service provider or an individual good supplier is displayed as or with a similar icon, a similar symbol, a similar color, a similar shading, a similar pattern, a similar visual, or a combination thereof.

A further embodiment includes wherein the representative updates, modifies, or changes the representative preference and the dynamic map displays in real time or near real time, all or some of the plurality of fCSRs with corresponding conveyance data, the pCSR with corresponding conveyance data, the representative preference, or a combination thereof, based on the updated, modified, or changed the representative preference.

An additional embodiment includes wherein the heat map includes the geographical map that displays a visual depiction of one or more statistical variable of all or some of the plurality of CSRs with corresponding conveyance data; all or some of the plurality of fCSRs with corresponding conveyance data; all or some of the pCSR with corresponding conveyance data; the representative preference; or a combination thereof.

An embodiment includes wherein the statistical variable includes a measurement of conveyance service availability, pricing, elevated pricing, CSR density, fCSR density, pCSR density, level of service density, a conveyance service distance, an estimated time of arrival, preferred conveyance client density, preferred good supplier density, a preferred conveyance industry segment, conveyance industry segment density, representative density, conveyance client density, service provider density, good supplier density, or a combination thereof.

Another embodiment includes wherein an area of the heat map is distinguished in proportion to a measurement of the statistical variable and displayed as having one or more of a distinguishable hue, shade, saturation, opacity, color, value of color, pattern, fill, shape, image, animation, or a combination thereof.

A further embodiment includes wherein the pCSR is not identified prior to compiling the heat map, a real time or near real time heat map, a historical heat map, a predictive heat map, or a combination thereof.

Another embodiment includes wherein a substantially real time heat map is compiled from the statistical variable of all or some of the CSRs with corresponding conveyance data, all or some of the fCSRs with corresponding conveyance data, all or some of the pCSR with corresponding conveyance data, the representative preference, or a combination thereof.

An embodiment includes wherein a historical heat map is compiled from the statistical variable of all or some of past the plurality of CSRs with corresponding conveyance data, all or some of past the plurality of fCSRs with corresponding conveyance data, all or some of past the pCSR with corresponding conveyance data, the representative preference, or a combination thereof.

In another embodiment, a predictive heat map may be compiled from the statistical variable of all or some past CSRs with corresponding conveyance data, all or some past fCSRs with corresponding conveyance data, all or some past pCSR with corresponding conveyance data, all or some of the CSRs with corresponding conveyance data, all or some fCSRs with corresponding conveyance data, all or some pCSR with corresponding conveyance data, the representative preference, or a combination thereof.

The predictive heat map may identify or estimate one or more of future conveyance service availability, future pricing, future elevated pricing, future CSR density, future fCSR density, future pCSR density, future level of service density, future conveyance industry segment density, future representative density, future conveyance client density, future service provider density, future good supplier density, future level of service demand, future conveyance industry segment demand, future conveyance service demand, future service provider demand, future good supplier demand, future conveyance service supply, future representative supply, or a combination thereof.

An additional embodiment includes wherein the predictive heat map generates a visual notification or an audio notification to notify the representative of a future change or update to the statistical variable, the measurement of the statistical variable, or a combination thereof.

In one embodiment, a function of the central server or the external server may be performed by the application. In some embodiments, the application operates on the central server. Further, a function of the application is performed by the central server or the external server. Another embodiment includes wherein the application operates on the central server.

An additional embodiment includes wherein the representative, the central server, the application, or a combination thereof, secures the pCSR. Another embodiment includes wherein the representative secures more than one the pCSRs concurrently. A further embodiment includes wherein the representative secures a fCSR other than the pCSR.

An embodiment includes wherein all or some of the plurality of CSRs with corresponding conveyance data are sourced or provided by a service provider or a good supplier operating in a conveyance industry segment.

An embodiment includes wherein the plurality of CSRs is a single conveyance service request. Another embodiment includes wherein the plurality of fCSRs is a single filtered conveyance service request.

Another embodiment includes wherein the central server may be located on or associated with the terminal.

An additional embodiment includes wherein all or some of the pCSR with corresponding conveyance data, all or some of the plurality of fCSRs with corresponding conveyance data, all or some of the plurality of CSRs with corresponding conveyance data, all or some of subsequent or additional the plurality of fCSRs with corresponding conveyance data, all or some of subsequent or additional the pCSR with corresponding conveyance data, all or some of the real time or near real time geographical location of the representative, the representative preference, the beginning service geographical location, the ending service geographical location, or a combination thereof, is identified or updated in real time or near real time as the real time or near real time geographical location of the representative updates or changes or as traffic information updates or changes.

A further embodiment includes wherein the representative browses or navigates an area of the visual representation to identify and then secure the pCSR or the fCSR by selecting or accepting the pCSR, the fCSR, the representative preference, or a combination thereof.

In some embodiments, the central server is located on or associated with the terminal. In other embodiments, the application, the terminal, the central server, the external server, a link, or a combination thereof, may be combined or integrated.

Another embodiment includes wherein the beginning service geographical location, the ending service geographical location, the representative preference, or a combination thereof, is provided prior to receiving all or some of the plurality of CSRs on or at the central server.

Another embodiment includes wherein all or some of the pCSR with corresponding conveyance data, all or some of the plurality of fCSRs with corresponding conveyance data, all or some of the plurality of CSRs with corresponding conveyance data, all or some of the real time or near real time geographical location of the representative, the representative preference, all or some of subsequent or additional the plurality of fCSRs with corresponding conveyance data, all or some of subsequent or additional the pCSR with corresponding conveyance data, a secured pCSR with corresponding conveyance data, the beginning service geographical location, the ending service geographical location, or a combination thereof, is transmitted between the application and the central server and updated in real time or near real time by way of a link between the application and the central server.

Another embodiment includes wherein all or some of the pCSR with corresponding conveyance data, all or some of the plurality of fCSRs with corresponding conveyance data, all or some of the plurality of CSRs with corresponding conveyance data, all or some of the real time or near real time geographical location of the representative, the representative preference, all or some of subsequent or additional the plurality of fCSRs with corresponding conveyance data, all or some of subsequent or additional the pCSR with corresponding conveyance data, a secured pCSR with corresponding conveyance data, the beginning service geographical location, the ending service geographical location, or a combination thereof, is transmitted between the application and the external server and updated in real time or near real time by way of a link between the application and the external server.

In some embodiments, wherein all or some of the pCSR with corresponding conveyance data, all or some of the plurality of fCSRs with corresponding conveyance data, all or some of the plurality of CSRs with corresponding conveyance data, all or some of the real time or near real time geographical location of the representative, the representative preference, all or some of subsequent or additional the plurality of fCSRs with corresponding conveyance data, all or some of subsequent or additional the pCSR with corresponding conveyance data, a secured pCSR with corresponding conveyance data, the beginning service geographical location, the ending service geographical location, or a combination thereof, is transmitted between the central server and the external server and updated in real time or near real time by way of a link between the central server and the external server.

### EXAMPLE 3: Securing Preferred Conveyance Service Offerings

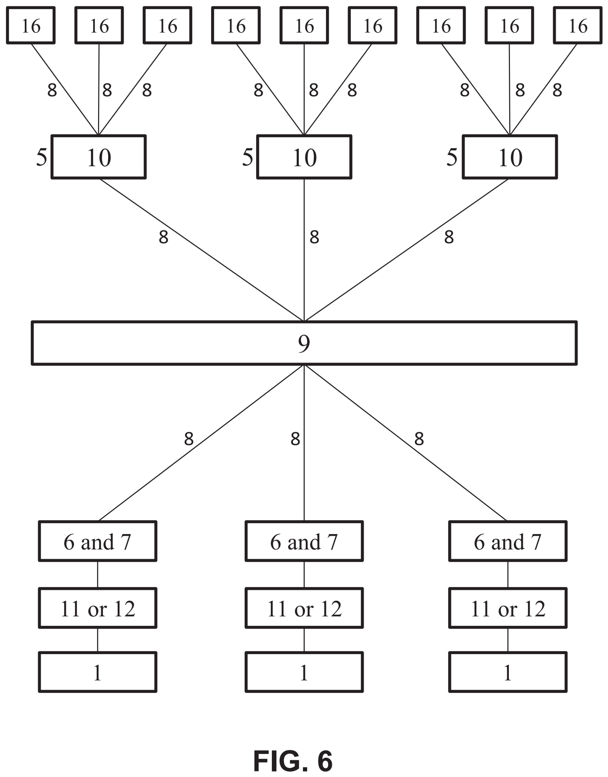

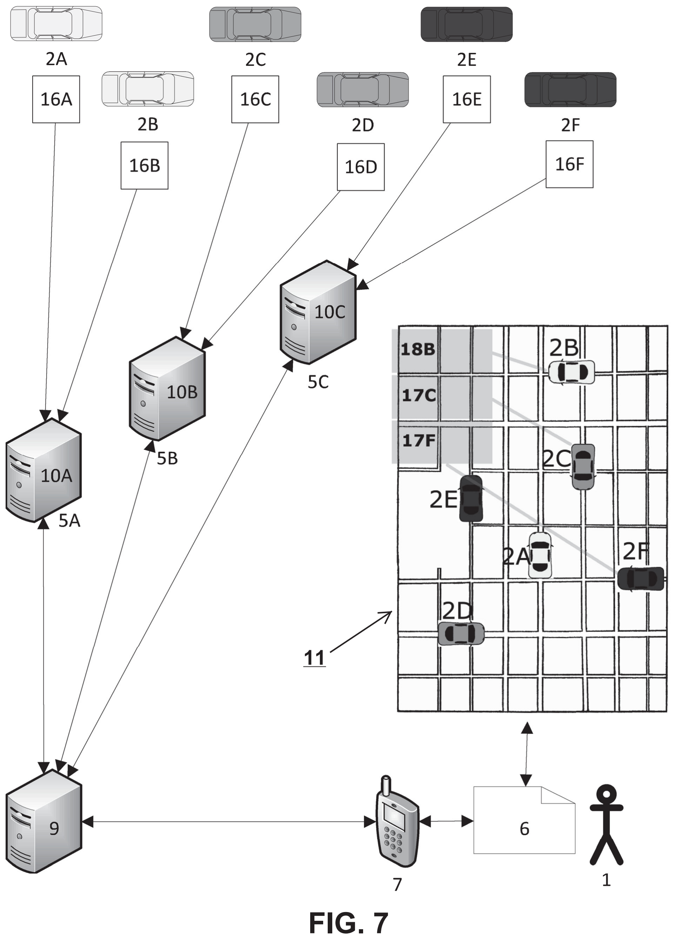

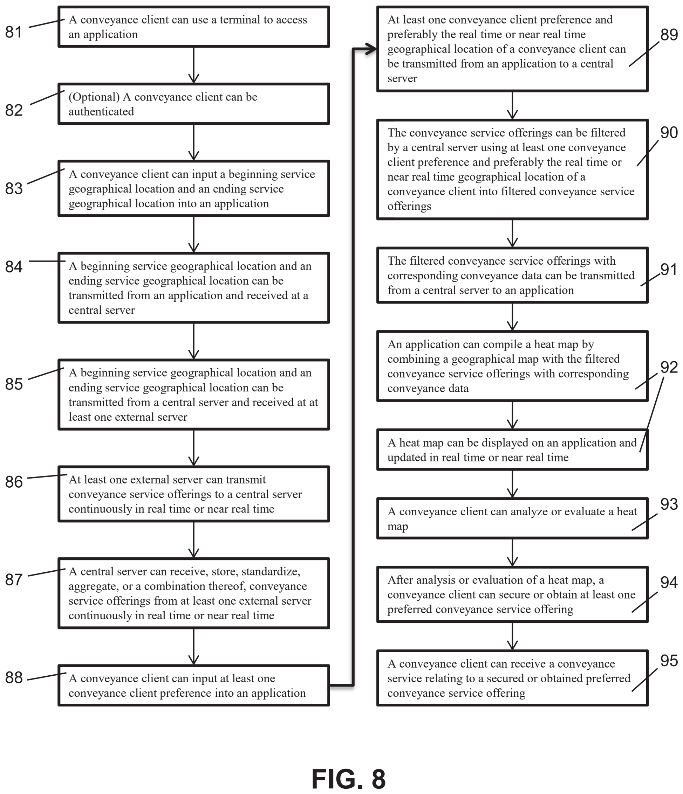

In this example, an embodiment is described for assisting a client in a process of securing or obtaining, within the conveyance industry, a preferred conveyance service offering ("pCSO") using a visual representation. Generally, see **Fig. 6** and **Fig. 7** for an exemplary system and **Fig. 8** for an exemplary method of the present invention.

**FIG. 6** relates to an exemplary implementation of the inventive scheme as a macro level view of conveyance service system that can benefit a conveyance client **1** from the present invention. The conveyance service offerings ("CSOs") **16** can be sourced from an external server **10** and can be transmitted to a central server **9** by way of a link **8.** A service provider **5** can be associated with an external server **10.** In this exemplary figure, each service provider **5** is associated with one external server **10.** A central server **9** can filter CSOs **16** into filtered conveyance service offerings ("fCSOs") **17** by using a conveyance client preference **4** and preferably a substantially real time geographical location of a client **1.** A central server **9** can calculate the weighted average of a conveyance client preference **4.** A central server **9** can preferably sort the fCSOs **17** in an order relating to the corresponding weighted averages to identify at least one preferred conveyance service offering ("pCSO") **18.** A pCSO **18** can be identified by a central server **9** from the fCSOs **17** that has the highest weighted average. A pCSO **18** with corresponding conveyance data and fCSOs **17** with corresponding conveyance data can be transmitted from a central server **9** to an application **6** by way of a link **8.** An application **6** can operate on a terminal **7** and can display at least one visual representation such as but not limited to a dynamic map **11,** a heat map **12,** or a combination thereof. A conveyance client **1** can analyze a visual representation and then secure a pCSO **18.** A link **8** can be a connection or an association with a software function or a software component relating to an application **6,** a terminal **7,** a central server **9,** an external server **10,** or a combination thereof.

**FIG. 7** relates to an exemplary implementation of the inventive scheme as a macro level view of conveyance service system that can benefit a conveyance client **1** from the present invention. An individual conveyance service offering ("CSO") **16** can be performed by each individual representative **2A, 2B, 2C, 2D, 2E,** and **2F.** An individual CSO **16** corresponds with each individual representative **2** in the figure. Conveyance service offerings ("CSOs") **16A** and **16B** are offered by representatives **2A** and **2B** to external server **10A** associated with service provider **5A.** CSOs **16C** and **16D** are offered by representatives **2C** and **2D** to external server **10B** associated with service provider **5B.** CSOs **16E** and **16F** are offered by representatives **2E** and **2F** to external server **10C** associated with service provider **5C.** Each service provider **5** can have at least one external server **10.**

A central server **9** can receive CSOs **16** and then filter the CSOs **16** into filtered conveyance service offerings ("fCSOs") **17** by using a conveyance client preference **4** and preferably a real time or near real time geographical location of a conveyance client **1.** A central server **9** can calculate the weighted average of a conveyance client preference **4.** A central server **9** can preferably sort the fCSOs **17** in an order relating to the corresponding weighted averages to identify a preferred conveyance service offering ("pCSO") **18.** A pCSO **18** can be identified by a central server **9** from the fCSOs **17** that has the highest weighted average. A pCSO **18** with corresponding conveyance data and fCSOs **17** with corresponding conveyance data can be transmitted from a central server **9** to an application **6** by way of a link **8.** An application **6** can operate on a terminal **7** and can display at least one visual representation, for example, a dynamic map **11.** Individual fCSOs **17C, 17F** and the pCSO **18B** can be shown on a dynamic map **11** as dynamic icons or visuals and can optionally show conveyance data. A conveyance client **1** can analyze or evaluate a dynamic map **11** and then secure the pCSO **18B.**

A link **8** can be a connection or an association with a software function or a software component relating to an application **6,** a terminal **7,** a central server **9,** an external server **10,** or a combination thereof. A link **8** can be a connection or an association with an application **6,** a central server **9,** an external server **10,** or a combination thereof, on a terminal **7** associated with a conveyance client **1.**

In one embodiment, an external server(s) is a source of all or some of the CSOs with corresponding conveyance data and is transmitted from the external server(s) to the central server by way of a link. All or some of the plurality of CSOs with corresponding conveyance data are updated in real time or near real time. The central server standardizes, aggregates, or a combination thereof, all or some of the plurality of CSOs with corresponding conveyance data and further filters all or some of the plurality of CSOs with corresponding conveyance data by using the client preference and the real time or near real time geographical location of the client, to identify all or some of the plurality of fCSOs with corresponding conveyance data. All or some of the plurality of fCSOs with corresponding conveyance data are updated in real time or near real time. The central server further identifies the pCSO with corresponding conveyance data from all or some of the plurality of fCSOs with corresponding conveyance data relating to the client preference. The pCSO with corresponding conveyance data may be updated in real time or near real time. The central server further transmits all or some of the plurality of fCSOs with corresponding conveyance data, the pCSO with corresponding conveyance data, the client preference, the real time or near real time geographical location of the client, or a combination thereof, to the application by way of a link between the central server and the application. The terminal facilitates or provides an input function, a display function, and an operation of the application and is used by the client to interface with the application. The central server may be located on or associated with the terminal. The terminal, the application, the central server, the external server, a link, or a combination thereof, may be combined or integrated, and one or more function of the central server may be performed by the application. The application may compile the visual representation of all or some of the plurality of fCSOs with corresponding conveyance data, the pCSO with corresponding conveyance data, the client preference, the real time or near real time geographical location of the client, or a combination thereof. The application displays the visual representation updated in real time or near real time. The client may use the application to evaluate the visual representation and then secure the pCSO and receive the conveyance service. The application may operate on the central server. At least one function of the central server or the external server may be performed by the application. At least one function of the application may be performed by the central server or the external server.

In a further embodiment all or some of the plurality of CSOs with corresponding conveyance data, the real time or near real time geographical location of the client, or a combination thereof, are structured in a different format, the central server standardizes or converts them into a uniform format.

An additional embodiment includes wherein all or some of the plurality of CSOs with corresponding conveyance data are structured in a uniform format prior to being transmitted from the external server to the central server by way of a link between the external server and the central server and are not standardized.
Conveyance Service Offerings (CSOs): The following are illustrative, non-limiting examples and embodiments of "conveyance service offerings (CSOs)" as used in the present disclosure:
In some embodiments, all or some of the plurality of CSOs in conjunction with corresponding conveyance data are sourced or provided by one or more service providers or goods suppliers operating in a conveyance industry segment.

In another embodiment, CSOs may include one or more, or a combination of offerings for a ride-hail service, a ride-share service, a car-share service, a peer-to-peer conveyance service, a transportation service, a service, a person delivery service, a taxi service, a shuttle service, a good delivery service, an item delivery service, a medical service and delivery, a food delivery service, a courier delivery service, a freight delivery service, an animal delivery service, a delivery service, or a combination thereof. In a further embodiment, the plurality of CSOs may be a single CSO.

Conveyance data may include one or a combination of a beginning service geographical location, a ending service geographical location, pricing information, elevated pricing information, a representative preference, a conveyance client preference, a distance parameter, an estimated time of arrival, a time to destination, a conveyance client geographical location, a conveyance client review, a conveyance client rating, a conveyance client detail, a conveyance service detail, a conveyance service route, a preferred conveyance client, a sensor data, a representative geographical location, a representative review, a representative rating, a representative detail, an AV geographical location, an AV review, an AV rating, an AV detail, a preferred AV, a route planning preference, a fuel economy preference, a battery longevity preference, a vehicle capacity preference, a vehicle diagnostic preference, a conveyance data preference, a service provider geographical location, a service provider review, a service provider rating, a service provider detail, a preferred service provider, a good supplier geographical location, a good supplier review, a good supplier rating, a good supplier detail, a preferred good supplier, an AV owner/controller geographical location, an AV owner/controller review, an AV owner/controller rating, an AV owner/controller detail, a preferred AV owner/controller, a fleet manager geographical location, a fleet manager review, a fleet manager rating, a fleet manager detail, a preferred fleet manager, a logistics provider geographical location, a logistics provider review, a logistics provider rating, a logistics provider detail, a preferred logistics provider, a logistics supplier geographical location, a logistics supplier review, a logistics supplier rating, a logistics supplier detail, a preferred logistics supplier, a conveyance industry segment detail, a preferred conveyance industry segment, a good detail, an item detail, a type of vehicle detail, a vehicle detail, a measurement of one or more statistical variable, a level of service detail, fuel consumption, battery level, vehicle diagnostic, vehicle capacity, or a combination thereof.

In some embodiments, all or some of the plurality of CSOs with corresponding conveyance data are filtered relating to the client preference and the real time or near real time geographical location of the client, to identify all or some of the plurality of fCSOs with corresponding conveyance data by one or more of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

Another embodiment includes wherein the pCSO with corresponding conveyance data is identified from all or some of the plurality of fCSOs with corresponding conveyance data relating to a weighted average of the client preference.

In a further embodiment, a different geographical location is used other than the real time or near real time geographical location of the client when filtering all or some of the plurality of CSOs with corresponding conveyance data. In some embodiments, the plurality of fCSOs may be single fCSO. An embodiment includes where the client secures or obtains the fCSO other than the pCSO.
Visual Representation: The following are illustrative, non-limiting examples and embodiments of a "visual representation" as used in the present disclosure:
In an embodiment, the visual representation is compiled on the central server and transmitted to the application. The visual representation may include one or more of a dynamic map and a heat map, or a pCSO in real time or near real time, related to the client preference, the real time or near real time geographical location of the client, or a combination thereof.

In another embodiment, the client preference is displayed as one or more icon or visual with or on the visual representation, to allow the client to evaluate all or some of the plurality of fCSOs with corresponding conveyance data, the pCSO with corresponding conveyance data, or a combination thereof, and secure the pCSO relating to a service provider or a good supplier.

In another embodiment, the pCSO, the client preference, or a combination thereof, is displayed in a visually identifiable format compared to all or some of the plurality of fCSOs relating to a service provider or a good supplier operating in a conveyance industry.

In an additional embodiment the dynamic map may include a geographical map that displays in real time or near real time, all or some of the plurality of fCSOs with corresponding conveyance data, the pCSO with corresponding conveyance data, the client preference, or a combination thereof.

All or some of the plurality of fCSOs with corresponding conveyance data, the pCSO with corresponding conveyance data, the client preference, or a combination thereof, relating to a service provider or a good supplier operating in a conveyance industry segment, may be displayed individually as a mobile or transitory icon or a mobile or transitory visual and updates or changes in real time or near real time.

Further, all or some of the plurality of fCSOs with corresponding conveyance data, the pCSO with corresponding conveyance data, the client preference, or a combination thereof, relating to an individual service provider or an individual good supplier operating in a conveyance industry segment, may be displayed as a distinguishable icon or a distinguishable visual and updates or changes in real time or near real time.

All or some of the plurality of fCSOs with corresponding conveyance data, the pCSO with corresponding conveyance data, the client preference, or a combination thereof, relating to an individual service provider or an individual good supplier may be displayed as an icon or visual and updates or changes in real time or near real time.

In another embodiment all or some of the fCSOs with corresponding conveyance data, the pCSO with corresponding conveyance data, the client preference, or a combination thereof, relating to an individual service provider or an individual good supplier may be displayed as or with a different icon, a different symbol, a different color, a different shading, a different pattern, a different visual, or a combination thereof.

All or some of the fCSOs with corresponding conveyance data, the pCSO with corresponding conveyance data, the client preference, or a combination thereof, relating to an individual service provider or an individual good supplier is displayed as or with a similar icon, a similar symbol, a similar color, a similar shading, a similar pattern, a similar visual, or a combination thereof.

In some embodiments, the client updates, modifies, or changes the client preference and the dynamic map displays in real time or near real time, all or some of the plurality of fCSOs with corresponding conveyance data, the pCSO with corresponding conveyance data, the client preference, or a combination thereof, based on the updated, modified, or changed the client preference.

In a further embodiment, the heat map includes the geographical map that displays a visual depiction of a statistical variable of all or some of the CSOs with corresponding conveyance data; all or some of the plurality of fCSOs with corresponding conveyance data; all or some of the preferred conveyance service offerings ("pCSOs") with corresponding conveyance data; the client preference; or a combination thereof.

An additional embodiment includes wherein the statistical variable may include one or more of measurement of conveyance service availability, pricing, elevated pricing, CSO density, fCSO density, pCSO density, level of service density, conveyance service distance, estimated time of arrival, preferred conveyance client density, preferred good supplier density, preferred conveyance industry segment, conveyance industry segment density, client density, conveyance client density, service provider density, good supplier density, or a combination thereof.

An embodiment includes wherein at least one area of the heat map is distinguished in proportion to at least one measurement of the statistical variable and displayed as having a distinguishable hue, a distinguishable shade, a distinguishable saturation, a distinguishable opacity, a distinguishable color, a distinguishable value of color, a distinguishable pattern, a distinguishable hatch fill, a distinguishable shape, a distinguishable image, a distinguishable animation, or a combination thereof. Areas of the heat map may be distinguished in proportion to a measurement of the statistical variable and displayed as having one or a combination of a distinguishable visual characteristics such as hue, shade, saturation, opacity, color, color value, pattern, fill, shape, image, animation, or a combination thereof.

In some embodiments, the pCSO is not identified prior to compiling the heat map, a real time or near real time heat map, a historical heat map, a predictive heat map, or a combination thereof.

In a further embodiment, a real time or near real time heat map is compiled from the statistical variable of the CSO with corresponding conveyance data, the fCSO with corresponding conveyance data, the pCSO with corresponding conveyance data, the client preference, or a combination thereof.

An additional embodiment includes a historical heat map compiled from the statistical variable of all or some of past the plurality of CSOs with corresponding conveyance data, all or some of past the plurality of fCSOs with corresponding conveyance data, all or some of past the pCSO with corresponding conveyance data, the client preference, or a combination thereof.

An embodiment includes a predictive heat map compiled from the statistical variable of all or some of past the plurality of CSOs with corresponding conveyance data, all or some of past the plurality of fCSOs with corresponding conveyance data, all or some of past the pCSO with corresponding conveyance data, all or some of the plurality of CSOs with corresponding conveyance data, all or some of the plurality of fCSOs with corresponding conveyance data, all or some of the pCSO with corresponding conveyance data, the client preference, or a combination thereof.

In an embodiment, the predictive heat map identifies or estimates one or more of future conveyance service availability, future pricing, future elevated pricing, future CSO density, future fCSO density, future pCSO density, future level of service density, future conveyance industry segment density, future client density, future conveyance client density, future service provider density, future good supplier density, future level of service demand, future conveyance industry segment demand, future conveyance service demand, future service provider demand, future good supplier demand, future conveyance service supply, future client supply, or a combination thereof.

In an embodiment, the predictive heat map generates a visual notification or an audio notification to notify the client of a future change or update to the statistical variable, the measurement of the statistical variable, or a combination thereof.

In one embodiment, the client, the central server, the application, or a combination thereof, secures the pCSO. In another embodiment, the client may secure multiple pCSOs concurrently.

In a further embodiment, one or more of the pCSO with corresponding conveyance data, the fCSO with corresponding conveyance data, the CSO with corresponding conveyance data, the additional fCSO with corresponding conveyance data, the additional pCSO with corresponding conveyance data, the real time or near real time geographical location(s) of the client(s), the client preference(s), the beginning service geographical location, the ending service geographical location, or a combination thereof, is identified or updated in real time or near real time as the real time or near real time geographical location of the client updates or changes or as traffic information updates or changes.

In another embodiment, the client browses or navigates an area of the visual representation to identify and then secure the pCSO or the fCSO by selecting or accepting the pCSO, the fCSO, the client preference, or a combination thereof. An embodiment includes wherein the visual representation is displayed on a remote display.

In another embodiment, one or more of the application, the terminal, the central server, the external server(s), the link, or a combination thereof, are combined or integrated.

One or more of the pCSO with corresponding conveyance data, the fCSO with corresponding conveyance data, the CSO with corresponding conveyance data, the real time or near real time geographical location of the client, the client preference, the additional fCSO with corresponding conveyance data, the additional pCSO with corresponding conveyance data, a secured pCSO with corresponding conveyance data, the beginning service geographical location, the ending service geographical location, or a combination thereof, may be transmitted and/or updated in real time or near real time.

In another embodiment, one or more of the pCSO with corresponding conveyance data, the fCSO with corresponding conveyance data, the CSO with corresponding conveyance data, the real time or near real time geographical location of the client, the client preference, the additional fCSO with corresponding conveyance data, the additional pCSO with corresponding conveyance data, a secured pCSO with corresponding conveyance data, the beginning service geographical location, the ending service geographical location, or a combination thereof, are transmitted in real time or near real time between the application and the external server and updated in real time or near real time.

In another embodiment, one or more of the pCSO with corresponding conveyance data, the fCSO with corresponding conveyance data, the CSO with corresponding conveyance data, the real time or near real time geographical location of the client, the client preference, the additional fCSO with corresponding conveyance data, the additional pCSO with corresponding conveyance data, a secured pCSO with corresponding conveyance data, the beginning service geographical location, the ending service geographical location, or a combination thereof, are transmitted in real time or near real time between the central server and the external server and updated in real time or near real time.

### EXAMPLE 4: Securing Preferred Conveyance Service Offering

In this example, an embodiment is described for assisting a client in a process of securing or obtaining, within the conveyance industry, a preferred conveyance service offering ("pCSO") using a visual representation. Generally, see **Fig. 6** and **Fig. 7** for an exemplary system and **Fig. 8** for an exemplary method of the present invention.

**FIG. 8** provides a flowchart of steps of an exemplary method in a preferable but not necessarily required order. The flowchart describes steps of how a conveyance client **1** can secure a preferred conveyance service offering ("pCSO") **18** by analyzing or evaluating a visual representation, in this example, a heat map **12.** A link **8** can be a connection or an association with a software function or a software component relating to an application **6,** a terminal **7,** a central server **9,** an external server **10,** or a combination thereof.

| | |
|---|---|
| Step 1. | A conveyance client uses a terminal to access an application. |
| Step 2. | The conveyance client can optionally be authenticated. |
| Step 3. | The conveyance client enters a beginning service geographical location and an ending service geographical location. |
| Step 4. | The beginning service geographical location and the ending service geographical location are transmitted to the central server. |
| Step 5. | A beginning service geographical location and an ending service geographical location are transmitted from the central server to the external server. |
| Step 6. | Conveyance service offering are transmitted continuously from the external server to the central server. |
| Step 7. | The conveyance service offerings can be stored, standardized, and/or aggregated, at least once on the central server. |
| Step 8. | The conveyance client uses the application to enter conveyance client preference(s). |
| Step 9. | The conveyance client preference(s) and the client's geographical location are transmitted to the central server. |
| Step 10. | The conveyance service offering(s) can be filtered by the central server according to the conveyance client preference(s) and the client's geographical location to generate filtered conveyance service offering(s). |
| Step 11. | The filtered conveyance service offering(s) are transmitted from the central server to the application. |
| Step 12. | The application compiles a heat map by combining a geographical map with conveyance data relating to the filtered conveyance service offering. The heat map can be displayed on the application and updated in substantially real time. |
| Step 13. | The conveyance client evaluates the heat map. |
| Step 14. | After evaluating the heat map, the conveyance client can use the application to secure a preferred conveyance service offering. |
| Step 15. | A conveyance client can then receive the conveyance service. |

This example can be applied to any conveyance of goods or services and may involve more than one conveyance industry segment, however, this example is in the ride-hail industry segment. In this example, a conveyance client **1** can be a passenger, a representative **2** can be a driver, and a preferred conveyance service offering ("pCSO") **18** is a ride service offering.

A central server **9** can continuously receive conveyance service offerings ("CSOs") **16** from more than one external server **10** by way of a link **8** in real time or near real time and can store, standardize, and aggregate CSOs **16** in real time or near real time. A central server **9** can sort filtered CSOs **17** in real time or near real time, or use another technique, to identify a preferred conveyance service offering ("pCSO") **18.** A conveyance client **1** can access an application **6** using a terminal **7** to gain knowledge of the ride-hail industry segment, such as current prices of CSOs **16.** When a conveyance client **1** would like to receive a ride in the ride-hail industry segment, a conveyance client **1** would optionally login to an application **6** and be authenticated.

Once logged into an application **6,** a conveyance client **1** can input or provide a beginning service geographical location, an ending service geographical location, and a conveyance client preference **4** into an application **6.** In this example, a conveyance client **1** can input or provide one conveyance client preference **4,** a pricing preference. A pricing preference can be, e.g., a preference of elevated pricing of no more than 2x normal pricing for the cost of a conveyance service. The conveyance client preference **4** allows a conveyance client **1** to evaluate a heat map **12** with filtered conveyance service offerings ("fCSOs") **17** that are more desirable to a conveyance client **1.** Central server **9** can filter out CSOs **16** that do not match or satisfy the conveyance client preference **4** for a conveyance client **1.** Benefits of conveyance client preferences **4** can be to allow a conveyance client **1** to better meet their criteria in receiving a conveyance service such as lower pricing, shorter wait time, shorter time to destination, more suitable CSOs **16,** or a combination thereof. The conveyance client preference **4** for this example and a real time or near real time geographical location of a conveyance client **1** can be transmitted to a central server **9** by way of a link **8.**

A central server **9** can filter CSOs **16** into fCSOs **17** by comparing to a conveyance client preference **4** and a real time or near real time geographical location of a conveyance client **1.** CSOs **16** that match the indicated two conveyance client preferences **4** can be identified as fCSOs **17.** CSOs **16** that do not match the indicated two conveyance client preferences **4** can be discarded or ignored as not being fCSOs **17.** Preferably, additional CSOs **16** can be received and continuously filtered by a central server **9** into additional fCSOs **17.**

fCSOs **17** can be transmitted from a central server **9** to an application **6** by way of a link **8.** An application **6** can then compile a heat map **12** displaying, e.g., elevated pricing metrics of fCSOs **17** as distinguishable shades of color on a heat map **12.** A heat map **12** can be compiled on an application **6** by combining a geographical map relating to a real time or near real time geographical location of a conveyance client **1** with conveyance data relating to elevated pricing metrics of fCSOs **17.** Conveyance data relating to the elevated pricing metrics of fCSOs **17** can be positioned on a heat map **12** relating to corresponding geographical locations contained therein. A heat map **12** can be refreshed continuously in real time or near real time with updated conveyance data relating to the elevated pricing metrics of fCSOs **17.**

A conveyance client **1** can then visually evaluate a heat map **12** prior to securing a filtered conveyance service offering ("fCSO") **17** or a pCSO **18** after which the conveyance client receives the requested conveyance service.

In one example, service providers **5** #1 and #2 can display elevated pricing of 1.5x at a real time or near real time geographical location of a conveyance client **1.** Service provider **5** #3 can display elevated pricing of 2x at the real time or near real time geographical location of a conveyance client **1** and elevated pricing of 1.8x one hundred yards east of the real time or near real time geographical location of a conveyance client **1.** Conveyance client 1 can evaluate a heat map **12** and find that just two hundred feet north of a substantially real time geographical location of a conveyance client **1,** there is no elevated pricing for service provider **5** #1.

In this example, a conveyance client **1** chooses to walk from his or her current location north two hundred feet to secure the pCSO **18** with no elevated pricing from service provider **5** #1. A conveyance client **1** can receive a conveyance service from service provider 5 #1.

The application **6,** central server **9,** external server(s) **10,** terminal **7,** link **8,** or a combination thereof, can be combined or integrated. The client **1** can utilize a visual representation that can display a heat map **12** on terminal **7** that can be integrated or associated with application **6,** central server **9,** external server(s) **10,** link **8,** or a combination thereof.

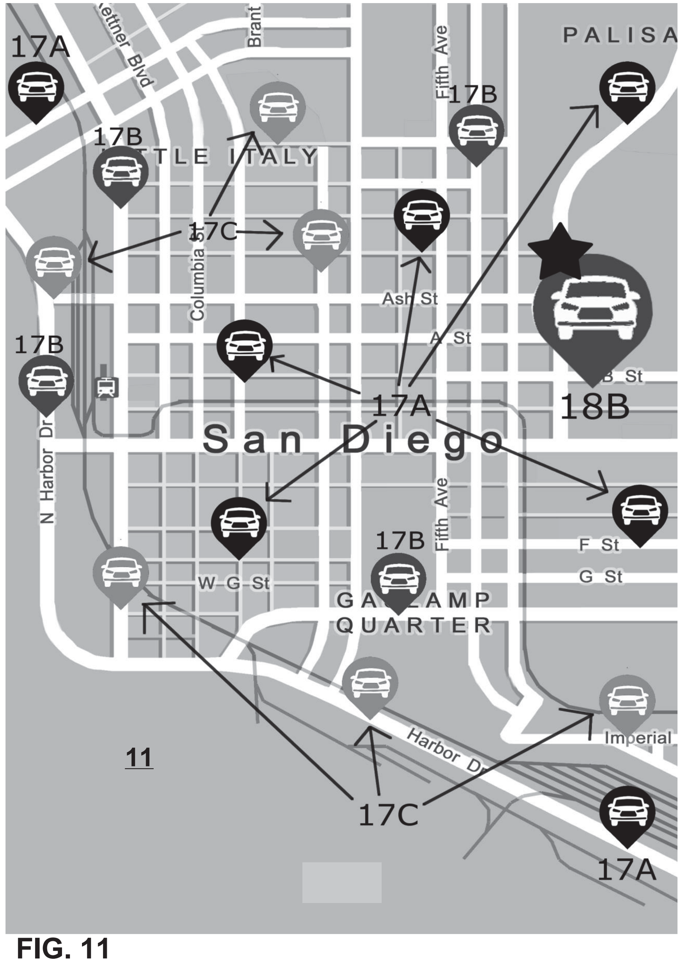

**FIG. 11** provides an exemplary display of a visual representation, in this example a dynamic map **11** where a conveyance client **1** can benefit from the present invention. A dynamic map **11** can be used by a conveyance client **1** to analyze or evaluate and then secure or obtain the preferred conveyance service offering ("pCSO") **18.** The filtered conveyance service offerings ("fCSOs") **17A, 17B,** and **17C** and the pCSO **18B** are associated with different service providers **5A, 5B,** and **5C** respectively. A link **8** can be a one connection or an association with a software function or a software component relating to an application **6,** a terminal **7,** a central server **9,** an external server **10,** or a combination thereof. The pCSO **18B** can be visually identifiable compared to fCSOs **17A, 17B,** and **17C.** In this exemplary figure, a star is used in addition to a larger icon to demonstrate pCSO **18B** as being visually identifiable. At least one different icon, symbol, color, shade, or visual can be used to identify individual fCSOs **17A, 17B,** and **17C** and the pCSO **18B** that are from different service providers **5.** In this figure, icons displaying a car are ride service offerings from the ride-hail industry segment. Each individual icon, symbol, color, shade, or visual can be mobile or dynamic and updated in real time or near real time on an application **6.**

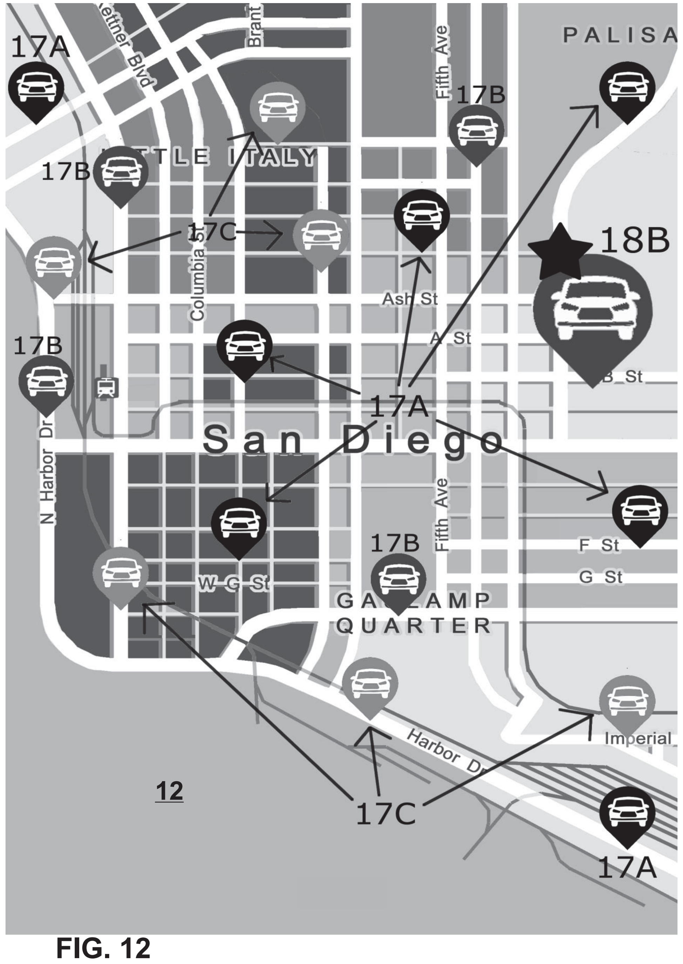

**Figure 12** provides an example of a combination of a dynamic map **11** and a heat map **12** which may be used by conveyance client **1** to evaluate on both a micro and macro level view of a conveyance industry segment and then secure the preferred conveyance service offering ("pCSO") **18.** The filtered conveyance service offerings ("fCSOs") **17A, 17B,** and **17C** and the pCSO **18B** are associated with different service providers **5A, 5B,** and **5C** respectively. A link **8** can be a connection or an association with a software function or a software component relating to an application **6,** a terminal **7,** a central server **9,** an external server **10,** or a combination thereof.

The pCSO **18B** can be visually identifiable compared to fCSOs **17A, 17B,** and **17C.** In this exemplary figure, a star is used in addition to a larger icon to demonstrate the pCSO **18B** as being visually identifiable. At least one different icon, symbol, color, shade, or visual can be used to identify individual fCSOs **17A, 17B,** and **17C** and the pCSO **18B** that are from different service providers **5.** In this figure, icons displaying a car are ride service offerings from the ride-hail industry segment. Each individual icon, symbol, color, shade, or visual can be mobile or dynamic and updated in real time or near real time on an application **6.**

The sample dynamic map **11** shown in **FIG. 12** displays fCSOs **17A, 17B,** and **17C** and the pCSO **18B** in combination with a heat map **12** showing areas with elevated pricing. Areas of the combination of a dynamic map **11** and a heat map **12** can be shaded or patterned in proportion to the measurement of an elevated pricing metric being displayed on a geographical map. Darker shaded areas can represent areas with higher elevated pricing whereas lighter shaded areas can represent areas with lower elevated pricing or potentially no elevated pricing. A conveyance client **1** can use this combination of a dynamic map **11** and a heat map **12** to analyze and identify areas of elevated pricing to position themselves in areas of lower pricing shown as lighter shaded areas. In this figure, the conveyance client **1** can walk to a lighter shaded area with lower pricing and then secure the pCSO **18B.**

Additional definitions, features and embodiments of the visual representation and method(s) for generating them are described below:
Standardizing Conveyance Service Offerings (CSOs): In one embodiment, some or all of the plurality of CSOs, the real time or near real time geographical location of the client, or a combination thereof, may be structured in a different format, and are standardized or converted into a uniform format. In another embodiment, all or some of the plurality of CSOs are structured in a uniform format prior to being transmitted from the external server to the central server and are not standardized. A further embodiment includes, wherein step A-C can be in any order prior to filtering all or some of the plurality of CSOs.
Transmitting Client Preference and Geographical Location: In an embodiment, the client preference, once inputted or provided into the application, may be stored or cached on the application, the computer readable memory of the central server, or a combination thereof, and the client preference is not inputted or provided again into the application by the client. In another embodiment, the client preference is stored or cached in the computer readable memory of the central server and the client preference is not transmitted again from the application to the central server. In still another embodiment, the client preference, the real time or near real time geographical location of the client, or a combination thereof, may be transmitted from the application to the central server at any time prior to filtering all or some of the plurality of CSOs.
Filtering Conveyance Service Offerings (CSOs): In some embodiments, all or some of the CSOs are filtered relating to the client preference and the real time or near real time geographical location of the client, to identify all or some of the plurality of fCSOs by one or more process of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

In another embodiment, all or some of the plurality of CSOs are filtered in real time or near real time and the pCSO is identified in real time or near real time from all or some of the plurality of fCSOs on the application by: (a) transmitting in real time or near real time, all or some of the plurality of CSOs from the central server to the application by way of a link between the central server and the application; (b) filtering in real time or near real time, all or some of the plurality of CSOs by using the client preference and the real time or near real time geographical location of the client, to identify all or some of the plurality of fCSOs; and (c)identifying in real time or near real time, the pCSO from all or some of the plurality of fCSOs relating to the client preference.

In a further embodiment, a different geographical location may be used other than the real time or near real time geographical location of the client when filtering all or some of the plurality of CSOs.
Identifying Preferred Conveyance Service Offering (pCSO): In some embodiments, the pCSO relating to the client preference is identified from all or some of the plurality of fCSOs by using one or more of a sorting algorithm, a selection algorithm, a search algorithm, a merge algorithm, a maximum function, a minimum function, a graph algorithm, a graph search algorithm, a tree algorithm, a tree search algorithm, a matrix calculation, a matrix algorithm, a comparison, or a combination thereof.

Another embodiment includes wherein the pCSO is identified from the plurality of fCSOs relating to a weighted average of the client preference.

In a further embodiment, the pCSO is identified from all or some of the plurality of fCSOs on the application by: (a) transmitting in real time or near real time, all or some of the plurality of fCSOs from the central server to the application by way of a link between the central server and the application; and (b) identifying in real time or near real time, the pCSO from all or some of the plurality of fCSOs relating to the client preference.
Displaying a Visual Representation: An embodiment includes the visual representation may be displayed on a remote display and may include one or more of a dynamic map and heat map, or a combination thereof. In some embodiments, the visual representation may be compiled on the central server and transmitted to the application.

A further embodiment includes wherein the client may use the visual representation to secure the pCSO in real time or near real time, related to the client preference, the real time or near real time geographical location of the client, or a combination thereof. The client preference may be displayed as one or more icon or visual with or on the visual representation, to allow the client to evaluate all or some of the plurality of fCSOs, the pCSO, or a combination thereof, and secure the pCSO relating to a service provider or a good supplier.

Another embodiment includes wherein the pCSO, the client preference, or a combination thereof, is displayed in a visually identifiable format compared to all or some of the plurality of fCSOs relating to a service provider or a good supplier operating.

An additional embodiment includes wherein the dynamic map includes the geographical map that displays in real time or near real time, all or some of the plurality of fCSOs with corresponding conveyance data, the pCSO with corresponding conveyance data, the client preference, or a combination thereof.

A further embodiment includes wherein all or some of the plurality of fCSOs with corresponding conveyance data, the pCSO with corresponding conveyance data, the client preference, or a combination thereof, relating to a service provider or a good supplier operating in a conveyance industry segment, is displayed individually as a mobile or transitory icon or a mobile or transitory visual and updates or changes in real time or near real time.

A further embodiment includes wherein all or some of the plurality of fCSOs, the pCSO, the client preference, or a combination thereof, relating to an individual service provider or an individual good supplier operating is displayed as a distinguishable icon or visual and updates or changes in real time or near real time.

A further embodiment includes wherein all or some of the plurality of fCSOs, the pCSO, the client preference, or a combination thereof, relating to an individual service provider or an individual good supplier operating is displayed as an icon or visual and updates or changes in real time or near real time.

A further embodiment includes wherein all or some of the plurality of fCSOs with corresponding conveyance data, the pCSO with corresponding conveyance data, the client preference, or a combination thereof, relating to an individual service provider or an individual good supplier is displayed as or with a different icon, a different symbol, a different color, a different shading, a different pattern, a different visual, or a combination thereof.

A further embodiment includes wherein all or some of the plurality of fCSOs, the pCSO, the client preference, or a combination thereof, relating to an individual service provider or an individual good supplier is displayed as or with a similar icon, a similar symbol, a similar color, a similar shading, a similar pattern, a similar visual, or a combination thereof.

A further embodiment includes wherein the client updates, modifies, or changes the client preference and the dynamic map displays in real time or near real time, all or some of the plurality of fCSOs with corresponding conveyance data, the pCSO with corresponding conveyance data, the client preference, or a combination thereof, based on the updated, modified, or changed the client preference.

An additional embodiment includes wherein the heat map includes the geographical map that displays a visual depiction of one or more statistical variable of all or some of the plurality of CSOs with corresponding conveyance data; all or some of the plurality of fCSOs with corresponding conveyance data; all or some of the pCSO with corresponding conveyance data; the client preference; or a combination thereof.

An embodiment includes wherein the statistical variable includes a measurement of conveyance service availability, pricing, elevated pricing, CSR density, fCSO density, pCSO density, level of service density, a conveyance service distance, an estimated time of arrival, preferred conveyance client density, preferred good supplier density, a preferred conveyance industry segment, conveyance industry segment density, client density, conveyance client density, service provider density, good supplier density, or a combination thereof.

Another embodiment includes wherein an area of the heat map is distinguished in proportion to a measurement of the statistical variable and displayed as having one or more of a distinguishable hue, shade, saturation, opacity, color, value of color, pattern, fill, shape, image, animation, or a combination thereof.

A further embodiment includes wherein the pCSO is not identified prior to compiling the heat map, a real time or near real time heat map, a historical heat map, a predictive heat map, or a combination thereof.

Another embodiment includes wherein a substantially real time heat map is compiled from the statistical variable of all or some of the CSOs with corresponding conveyance data, all or some of the fCSOs with corresponding conveyance data, all or some of the pCSO with corresponding conveyance data, the client preference, or a combination thereof.

An embodiment includes wherein a historical heat map is compiled from the statistical variable of all or some of past the plurality of CSOs with corresponding conveyance data, all or some of past the plurality of fCSOs with corresponding conveyance data, all or some of past the pCSO with corresponding conveyance data, the client preference, or a combination thereof.

In another embodiment, a predictive heat map may be compiled from the statistical variable of all or some past CSOs with corresponding conveyance data, all or some past fCSOs with corresponding conveyance data, all or some past pCSO with corresponding conveyance data, all or some of the CSOs with corresponding conveyance data, all or some fCSOs with corresponding conveyance data, all or some pCSO with corresponding conveyance data, the client preference, or a combination thereof.

The predictive heat map may identify or estimate one or more of future conveyance service availability, future pricing, future elevated pricing, future CSR density, future fCSO density, future pCSO density, future level of service density, future conveyance industry segment density, future client density, future conveyance client density, future service provider density, future good supplier density, future level of service demand, future conveyance industry segment demand, future conveyance service demand, future service provider demand, future good supplier demand, future conveyance service supply, future client supply, or a combination thereof.

An additional embodiment includes wherein the predictive heat map generates a visual notification or an audio notification to notify the client of a future change or update to the statistical variable, the measurement of the statistical variable, or a combination thereof.

In one embodiment, a function of the central server or the external server may be performed by the application. In some embodiments, the application operates on the central server. Further, a function of the application is performed by the central server or the external server. Another embodiment includes wherein the application operates on the central server. Another embodiment includes wherein the central server may be located on or associated with the terminal.

An additional embodiment includes wherein the client, the central server, the application, or a combination thereof, secures the pCSO. Another embodiment includes wherein the client secures more than one the pCSOs concurrently. A further embodiment includes wherein the client secures a fCSO other than the pCSO.

An embodiment includes wherein all or some of the plurality of CSOs with corresponding conveyance data are sourced or provided by a service provider or a good supplier operating in a conveyance industry segment.

An embodiment includes wherein the plurality of CSOs is a single conveyance service offering. Another embodiment includes wherein the plurality of fCSOs is a single filtered conveyance service offering.

An additional embodiment includes wherein all or some of the pCSO with corresponding conveyance data, all or some of the plurality of fCSOs with corresponding conveyance data, all or some of the plurality of CSOs with corresponding conveyance data, all or some of subsequent or additional the plurality of fCSOs with corresponding conveyance data, all or some of subsequent or additional the pCSO with corresponding conveyance data, all or some of the real time or near real time geographical location of the client, the client preference, the beginning service geographical location, the ending service geographical location, or a combination thereof, is identified or updated in real time or near real time as the real time or near real time geographical location of the client updates or changes or as traffic information updates or changes.

A further embodiment includes wherein the client browses or navigates an area of the visual representation to identify and then secure the pCSO or the fCSO by selecting or accepting the pCSO, the fCSO, the client preference, or a combination thereof.

In some embodiments, the central server is located on or associated with the terminal. In other embodiments, the application, the terminal, the central server, the external server, a link, or a combination thereof, may be combined or integrated.

Another embodiment includes wherein the beginning service geographical location, the ending service geographical location, the client preference, or a combination thereof, is provided prior to receiving all or some of the plurality of CSOs on or at the central server.

Another embodiment includes wherein all or some of the pCSO with corresponding conveyance data, all or some of the plurality of fCSOs with corresponding conveyance data, all or some of the plurality of CSOs with corresponding conveyance data, all or some of the real time or near real time geographical location of the client, the client preference, all or some of subsequent or additional the plurality of fCSOs with corresponding conveyance data, all or some of subsequent or additional the pCSO with corresponding conveyance data, a secured pCSO with corresponding conveyance data, the beginning service geographical location, the ending service geographical location, or a combination thereof, is transmitted between the application and the central server and updated in real time or near real time by way of a link between the application and the central server.

Another embodiment includes wherein all or some of the pCSO with corresponding conveyance data, all or some of the plurality of fCSOs with corresponding conveyance data, all or some of the plurality of CSOs with corresponding conveyance data, all or some of the real time or near real time geographical location of the client, the client preference, all or some of subsequent or additional the plurality of fCSOs with corresponding conveyance data, all or some of subsequent or additional the pCSO with corresponding conveyance data, a secured pCSO with corresponding conveyance data, the beginning service geographical location, the ending service geographical location, or a combination thereof, is transmitted between the application and the external server and updated in real time or near real time by way of a link between the application and the external server.

In some embodiments, wherein all or some of the pCSO with corresponding conveyance data, all or some of the plurality of fCSOs with corresponding conveyance data, all or some of the plurality of CSOs with corresponding conveyance data, all or some of the real time or near real time geographical location of the client, the client preference, all or some of subsequent or additional the plurality of fCSOs with corresponding conveyance data, all or some of subsequent or additional the pCSO with corresponding conveyance data, a secured pCSO with corresponding conveyance data, the beginning service geographical location, the ending service geographical location, or a combination thereof, is transmitted between the central server and the external server and updated in real time or near real time by way of a link between the central server and the external server.

### EXAMPLE 5: Heat Map(s)

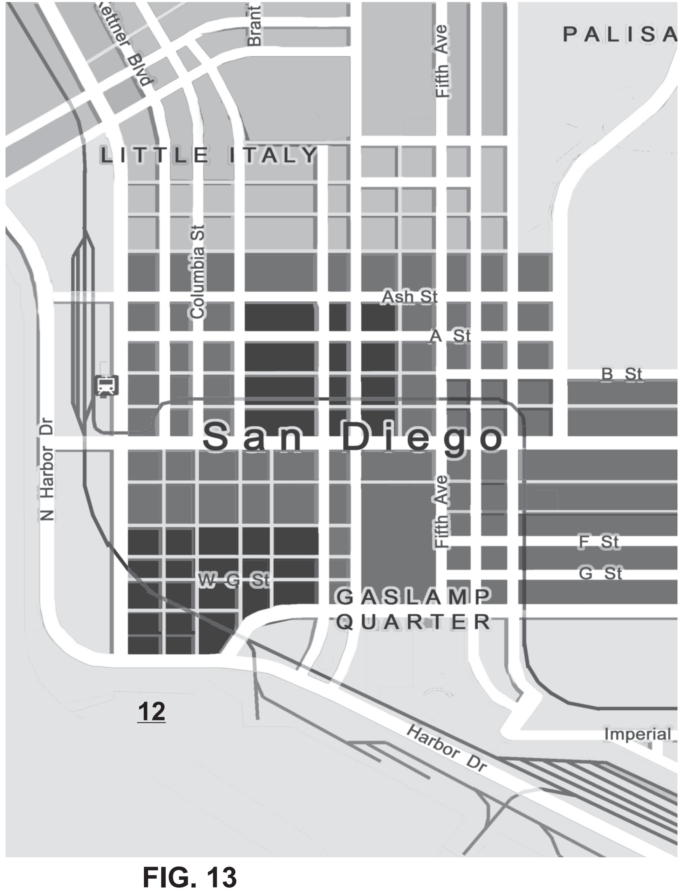

**Figure 13** provides an exemplary display of a visual representation, in this example a heat map **12** where a conveyance client **1** or a representative **2** can benefit from the present invention. At least one area of a heat map **12** can be shaded or patterned in proportion to at least one measurement of at least one statistical variable. Darker shaded areas, for example, can represent areas with a higher measurement of a statistical variable whereas lighter shaded areas can represent areas with a lower measurement of a statistical variable. For example, in this exemplary figure, a statistical variable can be an elevated pricing metric where darker shaded areas can represent areas with higher elevated pricing and lighter shaded areas can represent areas with lower elevated pricing or potentially no elevated pricing. A conveyance client **1** or a representative **2** can use a heat map **12** to analyze or evaluate and then secure or obtain preferred conveyance services. A link **8** can be a connection or an association with a software function or a software component relating to an application **6,** a terminal **7,** a central server **9,** an external server **10,** or a combination thereof.

### EXAMPLE 6: Identifying Preferred Conveyance Service Request (pCSR)

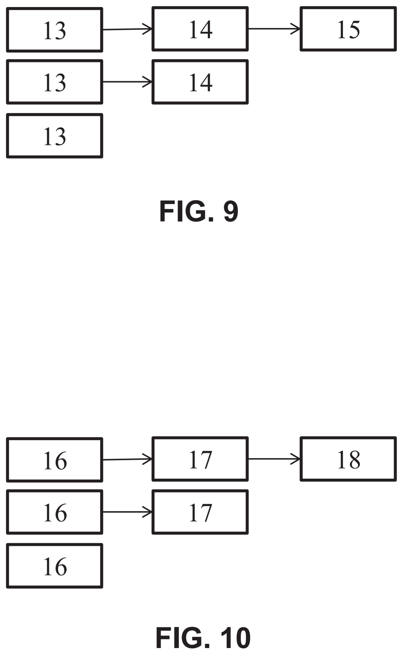

This example illustrates how a conveyance service request ("CSR") becomes a preferred conveyance service request ("pCSR"). The following are steps of an exemplary method in a preferable but not required order. Generally, see **FIG. 9** for both an exemplary system and method of the present invention.

The following example illustrates the steps within the processing of conveyance service request ("CSRs") **13** to provide filtered conveyance service requests ("fCSRs") **14** and then a preferred conveyance service request ("pCSR") **15** using a system such as that shown in FIG. **2** and FIG. **9****.** The present example can be applied to any conveyance of goods or services, however, the following is an example in a freight delivery industry segment. In this example, a conveyance client **1** can be a company that orders biohazardous material, a representative **2** can be a truck driver, and a pCSR **15** can be a freight delivery service request.

A central server **9** can receive CSRs **13** from an external server **10** continuously or repeatedly in real time or near real time and can pre-categorize CSRs **13** by city. A central server **9** can store, standardize, aggregate, or a combination thereof, CSRs **13** in any order. A representative **2** can input or provide one representative preference **3,** a real time or near real time geographical location of a representative **2,** or a combination thereof, to a central server **9.** A central server **9** can compare pre-categorized CSRs **13** to the real time or near real time geographical location of a representative **2** and discard or ignore CSRs **13** being in a different city other than a representative **2.** A subset of CSRs **13** within the city of a representative **2** that also matches or satisfies a freight preference can be identified as fCSRs **14.**

In this specific example, a freight preference can be given a weight of 100% and can be set to include only CSRs **13** relating to conveying biohazardous materials. A filtered conveyance service request ("fCSR") **14** relating to conveying biohazardous materials can be assigned a score of 10 out of 10 by a central server **9.** A fCSR **14** not relating to conveying biohazardous materials can be assigned a score of 0 out of 10 by a central server **9.**

For example, a fCSR **14** in a freight delivery industry segment that relates to conveying biohazardous materials can be calculated or determined by a central server **9** as having a weighted average of (100% of 10) that can equal 10 based on a freight preference. A maximum function can be utilized to identify a fCSR **14** having the highest weighted average in comparison to other fCSRs **14** with lower weighted averages as a pCSR **15.** A representative **2** can secure or obtain the pCSR **15.** An application **6,** a central server **9,** an external server **10,** a terminal **7,** a link **8,** or a combination thereof, can be combined or integrated.

**Figure 9** illustrates a flowchart of the transformation of a conveyance service request ("CSR") **13** into a preferred conveyance service request ("pCSR") **15.** Once a central server **9** receives a CSR **13** from at least one external server **10,** a central server **9** can filter a CSR **13** using a representative preference **3** and preferably a real time or near real time geographical location of a representative **2** into a filtered conveyance service request ("fCSR") **14.** A central server **9** can calculate the weighted average of a representative preference **3.** A central server **9** can preferably sort a fCSR **14** in an order relating to the corresponding weighted averages to identify a pCSR **15.** A pCSR **15** can be identified by a central server **9** as a fCSR **14** that has the highest weighted average from the fCSR **14.** Not every CSR **13** can become a fCSR **14** and not every fCSR **14** can become a pCSR **15.** At least one function of a central server **9** can be performed by an application **6.** A link **8** can be a connection or an association with a software function or a software component relating to an application **6,** a terminal **7,** a central server **9,** an external server **10,** or a combination thereof.

### EXAMPLE 7: Identifying Preferred Conveyance Service Offering (pCSO)

This example illustrates how a conveyance service offering ("CSO") becomes a preferred conveyance service offering ("pCSO"). The following are steps of an exemplary method in a preferable but not required order. See **FIG. 10** for both an exemplary system and method of the present invention.

The following example illustrates the steps within the processing of conveyance service offerings ("CSOs") **16** to provide filtered conveyance service offerings ("fCSOs") **17** and then a preferred conveyance service offering ("pCSO") **18** using a system such as that shown in FIG. **7** and FIG. **10****.** A conveyance client **1** can be a passenger, a representative **2** can be a driver, and a preferred conveyance service offering **18** can be a ride service offering. In this example, a conveyance client **1** can use a dynamic map **11** to secure a pCSO **18.**

A central server **9** can receive CSOs **16** from an external server **10** continuously or repeatedly in real time or near real time. A central server **9** can store, standardize, aggregate, or a combination thereof, CSOs **16** in any order. A conveyance client **1** can input or provide two conveyance client preferences **4,** a real time or near real time geographical location of a client **1,** or a combination thereof, to a central server **9.** A central server **9** can compare CSOs **16** to the real time or near real time geographical location of a conveyance client **1** and discard or ignore CSOs **16** that are not associated with selected service providers **5.** A subset of CSOs **16** that match or satisfy a service provider preference can be identified as fCSOs **17.**

A service provider inclusion preference can be given a weight of 40% by a conveyance client **1** and can be set to include only Company A and Company B. A filtered conveyance service offering ("fCSO") **17** associated with Company A and Company B can be assigned a score of 10 out of 10 by a central server **9.** A fCSO **17** not associated with Company A and Company B can be assigned a score of 0 out of 10 by a central server **9.**

A pricing preference can be given a weight of 60% and can be set by a conveyance client 1 to include fCSOs **17** that cost less than $20.00. A fCSO **17** that costs more than $20.00 can be assigned a score of 0 out of 10 by a central server **9.** A fCSO **17** that costs between $10.00-$20.00 can be assigned a score of 5 out of 10 by a central server **9.** A fCSO **17** that costs less than $10.00 can be assigned a score of 10 out of 10 by a central server **9.**

A fCSO **17** associated with Company A and costs $15.00 can be calculated or determined by a central server **9** as having a weighted average of (40% of 10) plus (60% of 5) that can equal 7 based on a service provider inclusion preference and a pricing preference. A fCSO **17** can be sorted in a descending order relating to a weighted average of 7 in this instance and can be identified as a pCSO **18** in comparison to other fCSOs **17** with lower weighted averages. A conveyance client **1** can evaluate a dynamic map such as the example shown in **FIG. 7** and/or **FIG. 11****,** and then secure a pCSO **18** relating to Company A and costs $15.00. A conveyance client **1** can receive a conveyance service provided by Company A.

**FIG. 10** illustrates a flowchart of the transformation of a conveyance service offering ("CSR") **16** into a preferred conveyance service offering ("pCSO") **18.** Once a central server **9** receives a CSO **16** from at least one external server **10,** a central server **9** can filter a CSO **16** using a conveyance client preference **4** and preferably a real time or near real time geographical location of a conveyance client **1** into a filtered conveyance service offering ("fCSO") **17.** A central server **9** can calculate the weighted average of a conveyance client preference **4.** A central server **9** can preferably sort a fCSO **17** in an order relating to the corresponding weighted averages to identify a pCSO **18.** A pCSO **18** can be identified by a central server **9** as a fCSO **17** that has the highest weighted average from a fCSO **17.** Not every CSO **16** can become a fCSO **17** and not every fCSO **17** can become a pCSO **18.** At least one function of a central server **9** can be performed by an application **6.** A link **8** can be a connection or an association with a software function or a software component relating to an application **6,** a terminal **7,** a central server **9,** an external server **10,** or a combination thereof.

This example illustrates the use of the system and method by a conveyance client who enters one or more conveyance client preference to identify and secure a preferred conveyance service offering. For purposes of this example, reference can be made to **FIGs. 6-8****.**

In a sample application to a food delivery industry segment, a conveyance client **1** can be a person that can order food, a representative **2** can be a driver, and a preferred conveyance service offering ("pCSO") **18** can be a food delivery service offering.

A central server **9** can receive conveyance service offerings ("CSOs") **16** from an external server **10** continuously or repeatedly in real time or near real time and can pre-categorize CSOs **16** by zip code. A central server **9** can store, standardize, aggregate, or a combination thereof, CSOs **16** in any order. A conveyance client **1** can input or provide one conveyance client preference **4,** the real time or near real time geographical location of a conveyance client **1,** or a combination thereof, to a central server **9.** A central server **9** can compare pre-categorized CSOs **16** to the real time or near real time geographical location of a conveyance client **1** and discard or ignore CSOs **16** being in a different zip code area other than a conveyance client **1.** A subset of CSOs **16** within the zip code area of a conveyance client **1** that also matches or satisfies an estimated time of arrival preference can be identified as filtered conveyance service offerings ("fCSOs") **17.**

In this example, an estimated time of arrival preference can be given a weight of 100% and can be set to less than twenty minutes by a conveyance client **1.** A filtered conveyance service offering ("fCSO") **17** with an estimated time of arrival of more than twenty minutes can be assigned a score of 10 out of 10 by a central server **9.** A fCSO **17** with an estimated time of arrival of less than or equal to twenty minutes can be assigned a score of 0.5 per minute by a central server **9.** A fCSO **17** with an estimated time of arrival of fourteen minutes can be assigned a score of 7 out of 10 or a fCSO **17** with an estimated time of arrival of six minutes can be assigned a score of 3 out of 10. A fCSO **17** in a food delivery industry segment with an estimated time of arrival of four minutes can be calculated or determined by a central server **9** as having a weighted average of (100% of 2) that can equal 2 based on an estimated time of arrival preference. A minimum function can be utilized to identify a fCSO **17** having the lowest weighted average in comparison to other fCSOs **17** with higher weighted averages as a preferred conveyance service offering ("pCSO") **18.** A conveyance client **1** can secure the pCSO **18.** An application **6,** a central server **9,** an external server **10,** a terminal **7,** a link **8,** or a combination thereof, can be combined or integrated.

### EXAMPLE 8: Integration of Hardware & Software

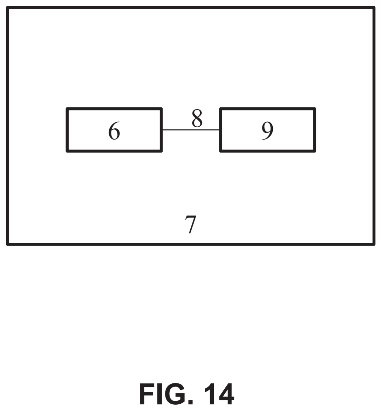

In this example, an embodiment is described for integrating hardware and software. This example describes selected features of an exemplary system, network, and method of use of the inventive scheme from which a representative **2,** a conveyance client **1,** a fleet manager, a good supplier, a service provider **5,** a dispatcher, a logistics provider, a logistics supplier, or a combination thereof, can benefit. Numerical references refer to those in the figures. Generally, see **FIG. 14** for an exemplary system, network, and method of the present invention.

**FIG. 14** provides a high-level diagram showing an exemplary integration of hardware and software. An application **6,** a central server **9,** an external server **10,** a terminal **7,** a link **8,** or a combination thereof, can be combined or integrated. An application **6,** a central server **9,** an external server **10,** a link **8,** or a combination thereof, can be combined or integrated on a terminal **7.** An application **6,** a central server **9,** an external server **10,** a link **8,** or a combination thereof, can be combined or integrated on a terminal **7** associated with at least one conveyance client **1** or at least one representative **2.** In this exemplary figure, it can be common that an application **6,** a central server **9,** an external server **10,** a terminal **7,** a link **8,** or a combination thereof, can be combined or integrated on a smartphone. In this exemplary figure, a representative **2** can utilize a smartphone that can combine or integrate an application **6,** a central server **9,** an external server **10,** a terminal **7,** a link **8,** or a combination thereof. In this exemplary figure, a conveyance client **1** can utilize a smartphone that can combine or integrate an application **6,** a central server **9,** an external server **10,** a terminal **7,** a link **8,** or a combination thereof. A link **8** can be a connection or an association with a software function or a software component relating to an application **6,** a terminal **7,** a central server **9,** an external server **10,** or a combination thereof.

The following detailed description of invention, additional definitions, embodiments of aspects of the inventive system and method, and examples of terms and concepts used herein for securing a preferred conveyance service request ("pCSR") and performing a conveyance service within the conveyance industry. The following detailed description of invention and examples of terms and concepts used herein for securing a preferred conveyance service offering ("pCSO") and receiving a conveyance service within the conveyance industry. The system and method include but is not limited to the following hardware, software, parties, and some information involved in securing a pCSR or a pCSO within the conveyance industry.
Near Real Time or Real Time: The following are illustrative, non-limiting examples and embodiments of "substantially real time" or "near real time" as used in the invention disclosure:
Near real time can for example pertain to a delay introduced, by automated data processing, between at least one occurrence of an event and a use of the processed data. Near real time can refer to the timeliness of data or information, which can be delayed by the time required for electronic communication and automatic data processing. Near real time can imply no significant delays. Real time or near real time can be in substantially real time or in substantially near real time.

A real time or near real time can be in or similar to real time. A real time or near real time can depict at least one event or at least one situation as it existed at the current time less the processing time. At least one function of a network, a system, a method, or a combination thereof, can be performed in real time or near real time. A real time or near real time geographical location of an autonomous vehicle ("AV"), a representative, or a conveyance client can be updated in real time or near real time.
Conveyance Client: The following are illustrative, non-limiting examples and embodiments of a "conveyance client or client" as used in the present disclosure:
A conveyance client ("client") includes one or more of a person, an entity, a robot, a machine, or a combination thereof, that can evaluate and then secure a preferred conveyance service offering ("pCSO"). A client does not have to be a consumer of a conveyance service. A conveyance client can secure a conveyance service offering ("CSO") for one or more of another person, another machine, another conveyance client, or a combination thereof. A conveyance client or a consumer of a service can receive or request a conveyance service.

A client can input or provide a conveyance client preference to be used to filter a CSO. A conveyance client can input or provide a conveyance client preference used to identify one or more of a pCSO, a filtered conveyance service offering ("fCSO"), or a combination thereof. A conveyance client can perform a function in real time or near real time. A conveyance client can secure a pCSO via one or more of a terminal, an application, a central server, an external server, or a combination thereof. A conveyance client can secure or obtain a CSO, a fCSO, a pCSO, or a combination thereof, relating to a service provider in a conveyance industry segment.

A conveyance client can input or generate a conveyance service request ("CSR"), which can become a filtered conveyance service request ("fCSR") and/or a preferred conveyance service request ("pCSR") for or with one or more of a representative, an autonomous vehicle ("AV"), an AV owner/controller, a service provider, a good supplier, a fleet manager, a logistics provider, a logistics supplier, a map provider, a third party, or a combination thereof.

To provide a few examples, a conveyance client can secure a fCSO other than a pCSO. A conveyance client can be a digital personal assistant or a machine, capable of securing a pCSO. A conveyance client can be a passenger in the ride-hail industry segment. A conveyance client can be a consumer of a good in the food delivery industry segment. A conveyance client can be a consumer of freight in the freight delivery industry segment. A conveyance client can secure a CSO, fCSO, a pCSO, or a combination thereof, relating to an individual service provider in an individual conveyance industry segment.

A conveyance client can use a visual representation such as a dynamic map, a heat map, or a combination thereof, to evaluate and then secure a pCSO. A conveyance client can secure more than one representative or more than one AV for a pCSO. A conveyance client can utilize or perform a function of a visual representation the same or similar as a representative.
Service Provider: The following are illustrative, non-limiting examples and embodiments of a "service provider" as used in the present disclosure:
A service provider can be an entity or business that can retain or contract with one or more of a representative, an autonomous vehicle ("AV"), an AV owner/controller, a good supplier, a fleet manager, a logistics provider, a logistics supplier, a map provider, a third party, or a combination thereof, to provide a conveyance service. A service provider can facilitate a conveyance service between a representative, an AV, an AV owner/controller, a good supplier, a fleet manager, a conveyance client, a logistics provider, a logistics supplier, a map provider, a third party, or a combination thereof. A service provider can be an entity or business that can for example provide or perform a service, a delivery service, or a combination thereof.

A service provider, via at least one external server, can be a source or provider of some or all conveyance service requests ("CSRs") with corresponding conveyance data, all or some conveyance service offerings ("CSOs") with corresponding conveyance data, or a combination thereof, relating to a conveyance industry segment. A service provider can use a central server, at least one external server, at least one application, or a combination thereof, to facilitate and perform a conveyance service.

A service provider can operate in one or more conveyance industry segment. A service provider can independently control or operate a conveyance network of one or more of a representative, an AV, a good supplier, a map provider, a third party, a conveyance client, or a combination thereof. A service provider can utilize Information Technology infrastructure relating to one or more of a service provider, a good supplier, an AV owner/controller, a fleet manager, a logistics provider, a logistics supplier, a map provider, a third party, or a combination thereof. A service provider can perform a function in real time or near real time. A service provider can accept or decline a preferred conveyance service request ("pCSR") or a preferred conveyance service offering ("pCSO").

A service provider can use a visual representation, a dynamic map, a heat map, or a combination thereof, to facilitate, operate, or manage a conveyance service. A service provider can use a visual representation, a dynamic map, a heat map, or a combination thereof, to facilitate, operate, or manage a conveyance service for a client or a representative. A service provider can use a visual representation, a dynamic map, a heat map, or a combination thereof, as a tool for a client or a representative to secure a pCSO or a pCSR. A map provider can use a visual representation, a dynamic map, a heat map, or a combination thereof, to facilitate, operate, or manage a conveyance service for a service provider. A service provider can have at least one CSR displayed on a visual representation that can be provided by a map provider or a map provider application. A service provider can have at least one CSO displayed on a visual representation that can be provided by a map provider or a map provider application.

A service provider can own, operate, or control an AV, i.e., the AV owner/controller. A service provider can operate, own, or control an AV on behalf of a third party. A service provider can optionally be perceived or referred to as the AV owner/controller. A service provider can operate, own, or control a network to facilitate a conveyance service in a conveyance industry segment. A service provider can operate, own, or control an AV, a representative, or a combination thereof, on at least one network. A service provider can operate, own, or control an AV, a representative, or a combination thereof, on another network. A service provider can operate, own, or control an AV, a representative, or a combination thereof, on behalf of a third party on a network. A service provider can operate or control an AV for or on behalf of an OEM or an auto manufacturer to provide a conveyance service. A service provider can control or operate an AV or a fleet of AVs for or on behalf of an OEM on at least one network that can operate in at least one conveyance industry segment. A service provider can utilize one or more external server for or with at least one conveyance industry segment. A service provider can lease or sublease an AV or and AV fleet. A service provider can lease or sublease an AV or a fleet of AVs from a third party.

To provide further examples, a service provider can be but is not limited to a vehicle that has a designated locker or the like that serve as a good supplier or an AV. A service supplier can have different types of vehicles for different types of occasions. A service provider can be but is not limited to a vehicle that has a compartment or the like that can serve as a mobile good supplier, a mobile AV, a mobile store front, a last mile delivery vehicle, a mobile logistics provider, a mobile supplier, or a combination thereof.

Further examples of service providers include a rideshare service controller, a ride-hail service controller, a car-share service controller, a taxi service controller, a shuttle service controller, a person delivery service controller, a food delivery service controller, a good delivery service controller, an animal delivery service controller, a medical service and delivery controller, a courier service controller, an item delivery service controller, a freight delivery service controller, a peer-to-peer conveyance service controller, a delivery service controller, a transportation service controller, or a combination thereof.

A service provider can be perceived or referred to as a representative when utilizing an AV. A service provider can be perceived or referred to as an AV, a representative, a good supplier, a fleet manager, an AV owner/controller, a logistics provider, a logistics supplier, a map provider, a third party, or a combination thereof.

A service provider can operate in an individual conveyance industry segment. A service provider can be a source or provider of all or some of CSRs in conjunction with corresponding conveyance data, all or some of CSOs in conjunction with corresponding conveyance data, conveyance data relating to an AV, a real time or near real time geographical location(s) of one or more of a representative, a conveyance client, and an AV, or a combination thereof. Providing further illustrative examples, a service provider can have or utilize at least one API that can provide all or some CSRs in conjunction with corresponding conveyance data, all or some CSOs in conjunction with corresponding conveyance data, all or some of real time or near real time geographical location of one or more of a representative, a conveyance client, and an AV, all or some of conveyance data relating to an AV, or a combination thereof. A service provider can have or generate all or some of conveyance data.
Good Supplier: The following are illustrative, non-limiting examples and embodiments of a "good supplier" as used in the present disclosure:
A good supplier can be an entity or a business that can provide or supply a good, an article, a thing, an item, or a combination thereof, to be conveyed in a conveyance service. A good supplier can be an entity or a business that can for example provide or supply a service, a delivery service, or a combination thereof.

A good supplier can be an entity or a business that can retain or contract with one or more of a representative, an autonomous vehicle ("AV"), an AV owner/controller, a service provider, a fleet manager, a logistics provider, a logistics supplier, a map provider, a third party, or a combination thereof, to provide a conveyance service. A good supplier can facilitate a conveyance service between one or more of a representative, an AV, an AV owner/controller, a service provider, a fleet manager, a logistics provider, a logistics supplier, a conveyance client, a map provider, a third party, or a combination thereof. A good supplier can optionally retain and/or contract with a representative, an AV, or a combination thereof. A good supplier can use a central server, at least one external server, an application, or a combination thereof, to facilitate a conveyance service.

A good supplier can utilize at least one external server that can be a source or a provider of a conveyance service request ("CSR") with corresponding conveyance data, a conveyance service offering ("CSO") with corresponding conveyance data, or a combination thereof, relating to at least one conveyance industry segment. A good supplier can use a central server, at least one external server, an application, or a combination thereof, to facilitate and perform a conveyance service. A good supplier can have or utilize at least one API that can provide all or some of a CSR in conjunction with corresponding conveyance data, all or some of a CSO in conjunction with corresponding conveyance data, all or some of a real time or near real time geographical location of one or more of a representative, a conveyance client, and an AV, all or some of conveyance data relating to an AV, or a combination thereof. A good supplier can have or generate all or some of conveyance data. A good supplier can utilize at least one external server for or with a conveyance industry segment.

A good supplier can operate in a conveyance industry segment. A good supplier can operate for or with a service provider or the like. A good supplier can independently control or operate one or more of a conveyance network of a representative, an AV, a good supplier, a map provider, a third party, a conveyance client, or a combination thereof. A good supplier can utilize Information Technology infrastructure relating to one or more of a good supplier, a service provider, an AV owner/controller, a fleet manager, a logistics provider, a logistics supplier, a map provider, a third party, or a combination thereof. A good supplier can perform at least one function in real time or near real time. A good supplier can accept or decline a preferred conveyance service request ("pCSR") or a preferred conveyance service offering ("pCSO").

A good supplier can use a visual representation, a dynamic map, a heat map, or a combination thereof, to facilitate, operate, or manage a conveyance service. A good supplier can use a visual representation, a dynamic map, a heat map, or a combination thereof, to facilitate, operate, or manage a conveyance service for a conveyance client or a representative. A good supplier can use a visual representation, a dynamic map, a heat map, or a combination thereof, as a tool for a conveyance client or a representative to secure a pCSO or a pCSR. A map provider can use a visual representation, a dynamic map, a heat map, or a combination thereof, to facilitate, operate, or manage a conveyance service for a good supplier. A good supplier can have a CSR displayed on a visual representation that can be provided by a map provider or a map provider application. A good supplier can have a CSO displayed on a visual representation that can be provided by a map provider or a map provider application.

A good supplier can operate, own, or control an AV, i.e., the AV owner/controller. A good supplier can operate, own, or control an AV on behalf of a third party. A good supplier can operate, own, or control a network to facilitate a conveyance service in at least one conveyance industry segment. A good supplier can operate, own, or control an AV on at least one network. A good supplier can operate, own, or control an AV on another network. A good supplier can operate, own, or control an AV on behalf of a third party on a network. A good supplier can lease or sublease an AV or an AV fleet. A good supplier can lease or sublease an AV or a fleet of an AVs from a third party.

A good supplier can be but is not limited to a vehicle that can have a designated locker or the like that can be a service provider or an AV. A good supplier can be but is not limited to a vehicle that can have or utilize a compartment that can be a mobile service provider, a mobile AV, a mobile store front, a last mile delivery vehicle, a mobile logistics provider, a mobile logistics supplier, or a combination thereof.

A good supplier can be but is not limited to a food delivery service controller, a good delivery service controller, an animal delivery service controller, a medical service and delivery controller, a courier service controller, an item delivery service controller, a freight delivery service controller, a peer-to-peer conveyance service controller, a delivery service controller, a transportation service controller, or a combination thereof.

A good supplier can be perceived or referred to as a service provider. A good supplier can optionally be perceived or referred to as an AV, a representative, a service provider, a fleet manager, an AV owner/controller, a logistics provider, a logistics supplier, a map provider, at least on third party, or a combination thereof.

A good supplier can be a food truck. A good supplier can be an entity that produces or supplies freight. A good supplier can provide or perform a conveyance service relating to a food item. A good supplier can operate in at least one individual conveyance industry segment. A good supplier can operate for an individual service provider. A good supplier can be a source or a provider of all or some of a CSR in conjunction with corresponding conveyance data, all or some of a CSO in conjunction with corresponding conveyance data, a real time or near real time geographical location of one or more of a representative, a conveyance client, and an AV, all or some of conveyance data relating to an AV, or a combination thereof.
Representative: The following are illustrative, non-limiting examples and embodiments of a "representative" as used in the present disclosure:
A representative can be a person, an entity, a robot, or a machine, that can secure a preferred conveyance service request ("pCSR"), a filtered conveyance service request ("fCSR"), a conveyance service request ("CSR"), or a combination thereof. A representative can provide or perform a conveyance service of a person, a good, an article, a thing, an item, a conveyance client, or a combination thereof. A representative can be retained by or contracted with a service provider, a good supplier, an AV owner/controller, a fleet manager, a logistics provider, a logistics supplier, or a combination thereof. A representative can be an entity or a person that can for example provide or perform a service, a delivery service, or a combination thereof. A representative can own, operate, or control at least one autonomous vehicle ("AV").

A representative can, at any time, sign on and/or sign off of one or more of a service provider network, an AV owner/controller, a fleet manager network, a logistics provider network, a logistics supplier network, an application, a central server, an external server, or a combination thereof. A representative can sign in to a service provider network, an owner/controller of an AV network, a fleet manager network, a logistics provider network, a logistics supplier network, a central server, an external server, or a combination thereof. Once a beginning service geographical location, an ending service geographical location, pricing information, or a combination thereof, is known, a conveyance service offering ("CSO") relating to a representative can be generated.

A representative can input or provide a representative preference to be used to filter a CSR. A representative can input or provide a representative preference used to identify one or more of a pCSR, a fCSR, or a combination thereof.

A representative can use an application to access a service provider network, a good supplier network, an AV owner/controller network, a fleet manager network, a logistics provider network, a logistics supplier network, or a combination thereof, via a terminal, a central server, an external server, an application, or a combination thereof, to facilitate a conveyance service. A representative can provide a conveyance service in at least one conveyance industry segment. A representative can provide a conveyance service for a service provider, a good supplier, an AV owner/controller, a fleet manager, a logistics provider, a logistics supplier, or a combination thereof. A representative can use Information Technology infrastructure relating to a service provider, a good supplier, an AV owner/controller, a fleet manager, a logistics provider, a logistics supplier, or a combination thereof. A representative can perform at least one function in real time or near real time.

A representative can secure or obtain a fCSR other than a pCSR. A representative can secure a pCSR using an application, a central server, an external server, or a combination thereof. A representative can use a visual representation such as but not limited to a dynamic map, a heat map, or a combination thereof, to evaluate and then secure or obtain pCSR.

A representative can be perceived or referred to as a service provider or the like when utilizing an AV. A representative can be perceived or referred to as an AV owner/controller or the like when utilizing an AV. A representative can be perceived or referred to as an AV, an AV owner/controller, a service provider, a good supplier, a fleet manager, a logistics provider, a logistics supplier, a third party, or a combination thereof. A representative can use an AV to perform a conveyance service. A representative can be perceived or referred to as a good supplier when utilizing at least one AV.

A representative can perform all or some of a conveyance service. A representative can perform all or some of a conveyance service in conjunction with an AV. A representative can perform part of a conveyance service and an AV can perform another part of a conveyance service. A representative can perform part of a conveyance service during a waypoint and an AV can perform another part of a conveyance service.

A representative can be an independent third party. A representative can be an independent contractor. In the ride-hail/ride-share industry segment, a representative can be a driver. In the food delivery industry segment, a representative can be a driver picking up a food item and dropping a food item off to a conveyance client. In the courier industry segment, a representative can be a person picking up and dropping off a good, a thing, an article, or a combination thereof. A representative can provide a conveyance service in at least one individual conveyance industry segment. A representative can provide a conveyance service for at least one individual service provider. A representative can pick up food and put the food in an AV to be delivered. A representative can order food and put the food in an AV to be delivered. A representative can put food in an AV, such as a drone, to be delivered. A representative can put food in an AV, such as an autonomous ground vehicle to be delivered.

A representative can utilize or perform at least one function of a visual representation the same or similar as a conveyance client. A representative can be managed or operated with an AV or a fleet of AVs to perform a conveyance service. A service provider, a fleet manager, a logistics provider, or a logistics supplier, or the like can use a representative and an AV to perform a conveyance service in at least one conveyance industry segment. A representative can have or generate all or some of conveyance data.
Visual Representation: The following are illustrative, non-limiting examples and embodiments of a "visual representation" and uses thereof as used in the present disclosure:
A visual representation can facilitate at least one operation or at least one function to secure a preferred conveyance service request ("pCSR") or a preferred conveyance service offering ("pCSO"). A visual representation can be for example utilized or operated by a client, a representative, a service provider, a good supplier, a fleet manager, an AV owner/controller, a logistics provider, a logistics supplier, a map provider, a third party, or a combination thereof.

A visual representation can be a tool used to assist a representative evaluate a conveyance service request ("CSR") or a CSR metric on a geographical map to secure a pCSR. A visual representation can be a tool used to assist a conveyance client evaluate a conveyance service offering ("CSO") or a CSO metric on a geographical map to secure a pCSO. A visual representation can be viewed from a perspective, a point of reference, a point of interest, or a combination thereof. A visual representation can be one or more of a dynamic map, a real time or near real time heat map, a historical heat map, a predictive heat map, or a combination thereof.

A visual representation can facilitate securing or obtaining a pCSR or a pCSO. A visual representation can be used to facilitate securing a pCSR or a pCSO. A visual representation can facilitate securing a pCSR or a pCSO utilizing an application. A visual representation can facilitate securing a pCSR or a pCSO, utilizing a service provider application, a third party application, or the like. A visual representation can facilitate securing a pCSR or a pCSO utilizing more than one application. A third party can provide a visual representation on a third party application that can be used to facilitate securing a pCSR on a service provider application or the like. A third party can provide a visual representation on a third party application that can be used to facilitate securing a pCSO on a service provider application or the like. A visual representation can be compiled with information or data from a map provider.

A visual representation can be, for example, a geographical map that can display one or more of a pCSR in conjunction with corresponding conveyance data, a filtered conveyance service request ("fCSR") in conjunction with corresponding conveyance data, a CSR in conjunction with corresponding conveyance data, a pCSO in conjunction with corresponding conveyance data, a filtered conveyance service offering ("fCSO") in conjunction with corresponding conveyance data, a CSO in conjunction with corresponding conveyance data, at least one metric relating to a respective request or offering, a real time or near real time geographical location of a representative, a real time or near real time geographical location of an autonomous vehicle ("AV"), a real time or near real time geographical location of a service provider, a real time or near real time geographical location of a good supplier, a real time or near real time geographical location of a fleet manager, a real time or near real time geographical location of a conveyance client, a real time or near real time geographical location of a logistics provider, real time or near real time geographical location of a logistics supplier, a conveyance client preference, a representative preference, or a combination thereof. A visual representation can be a geographical map that can display one or more of a pCSO in conjunction with corresponding conveyance data, a fCSO in conjunction with corresponding conveyance data, a CSO in conjunction with corresponding conveyance data, at least one metric relating to a respective offering, or a combination thereof.

A visual representation can be displayed in or on an AV. A visual representation can be displayed in or on an AV to show a route or a path for an AV. A visual representation can be utilized by a conveyance client in an AV. A visual representation can have or be associated with a commercial or an advertisement. A visual representation can be an interactive map. A visual representation can be an interactive map that can be used by a client or a representative.

A visual representation can be an interactive map that can be used by a conveyance client to communicate with one or more of a service provider, a good supplier, a fleet manager, an AV owner/controller, a logistics provider, a logistics supplier, an AV, a map provider, a third party, a representative, or a combination thereof. A visual representation can be an interactive map that can be used by a representative to communicate with one or more of a service provider, a good supplier, a fleet manager, an AV owner/controller, a logistics provider, a logistics supplier, an AV, a map provider, a third party, a conveyance client, or a combination thereof.

A visual representation can be utilized and updated in real time or near real time by communicating information or data all or some of a pCSR in conjunction with corresponding conveyance data, all or some of a fCSR in conjunction with corresponding conveyance data, all or some of a CSR in conjunction with corresponding conveyance data, all or some of a pCSO in conjunction with corresponding conveyance data, all or some of a fCSO in conjunction with corresponding conveyance data, all or some of a CSO in conjunction with corresponding conveyance data, all or some of subsequent or additional plurality of filtered conveyance service offerings ("fCSOs") in conjunction with corresponding conveyance data, all or some of a subsequent or additional a pCSO in conjunction with corresponding conveyance data, a beginning service geographical location, an ending service geographical location, all or some of a real time or near real time geographical location of a representative, all or some of a real time or near real time geographical location of a conveyance client, a representative preference, a conveyance client preference, a secured pCSR, a secured pCSO, or the like. A visual representation can be utilized and updated in real time or near real time by communicating information or data with a central server, an external server, an application, or a combination thereof.

A visual representation can be compiled on an application, a central server, or a combination thereof. A visual representation can be displayed on an application, a central server, a remote display, or a combination thereof. A visual representation can be in any form or format, preferably visual. A visual representation can utilize an application, a terminal, a central server, an external server, a link, or a combination thereof, that can be combined or integrated. A visual representation can utilize an application, a terminal, a central server, an external server, a link, or a combination thereof, that can be combined or integrated on a smartphone. A visual representation can utilize an application, an AV, a terminal, a central server, an external server, a link, or a combination thereof, that can be combined or integrated. A variation in the form, format, and order of a visual representation component is within the scope of the present invention. A visual representation can be updated or refreshed in real time or near real time. A visual representation can perform at least one function in real time or near real time.

A representative can use a visual representation to apply a representative preference to display one or more of a pCSR, a fCSR, or a combination thereof, that can relate to a representative preference. Applying or using a representative preference can allow a representative to filter out, hide, or remove a CSR from a visual representation that do not match a representative preference, to better identify a pCSR or at least one geographical area to secure a pCSR. A representative can browse or navigate at least one area of a visual representation to identify and then secure a pCSR or a fCSR by selecting a pCSR or a fCSR.

A conveyance client can use a visual representation to apply a conveyance client preference to display one or more of a pCSO, a fCSO, or a combination thereof, that can relate to a conveyance client preference. Applying or using a conveyance client preference can allow a conveyance client to filter out, hide, or remove a CSO from a visual representation that do not match a conveyance client preference, to better identify a pCSO or at least one geographical area to secure a pCSO. A conveyance client can browse or navigate at least one area of a visual representation to identify and then secure a pCSO or a fCSO by selecting a pCSO or a fCSO.

A visual representation can display one or more of a CSR, a CSR metric, a CSO, a CSO metric, or a combination thereof, in at least one conveyance industry segment on a geographical map respectively. A visual representation can be a tool that can display including but not limited one or more of a CSR, a CSR metric, a CSO, a CSO metric, or a combination thereof, relating to at least one service provider on a geographical map respectively. A visual representation can display at least one route from a representative to a beginning service geographical location and then to an ending service geographical location.

A service provider, a good supplier, a fleet manager, an AV owner/controller, a logistics provider, a logistics supplier, a map provider, a third party, or a combination thereof, can be displayed on or with a visual representation that can display a level of service preference. An AV owner/controller, a service provider, a good supplier, a fleet manager, a logistics provider, a logistics supplier, a map provider, a third party, or a combination thereof, can be displayed on or with a dynamic map that can display a level of service preference. An AV owner/controller, a service provider, a good supplier, a fleet manager, a logistics provider, a logistics supplier, a map provider, a third party, or a combination thereof, can be displayed on or with a heat map that can display a level of service preference.

A visual representation can comprise a dynamic map and can display a level of service preference relating to a service provider, a good supplier, an AV owner/controller, a fleet manager, a logistics provider, a logistics supplier, a map provider, a third party, or a combination thereof operating in at least one conveyance industry segment. A visual representation can display a dynamic map with a level of service preference as a tab or an icon relating to a service provider, a good supplier, an AV owner/controller, a fleet manager, a logistics provider, a logistics supplier, a map provider, a third party, or a combination thereof.

A level of service preference can be displayed on or with a visual representation to identify different levels of service that a service provider, a good supplier, an AV owner/controller, a fleet manager, a logistics provider, a logistics supplier, a map provider, a third party, or a combination thereof, can provide. A level of service preference can be displayed as an icon or a visual with or on a visual representation to allow a selection of different levels of service that a service provider, a good supplier, an AV owner/controller, a fleet manager, a logistics provider, a logistics supplier, a map provider, a third party, or a combination thereof, can provide. A level of service preference can be displayed on a visual representation to identify different levels of service that a service provider, a good supplier, an AV owner/controller, a fleet manager, a logistics provider, a logistics supplier, a map provider, a third party, or a combination thereof, can provide. A level of service preference can be used by a conveyance client to identify a luxury vehicle, an environmentally friendly vehicle, a driverless vehicle, or the like.

A visual representation can display one or more of a dynamic map, a conveyance client preference, a CSO, a fCSO, a pCSO, a real time or near real time geographical location of a conveyance client, or a combination thereof. A visual representation can display a dynamic map, a conveyance client preference, a CSO, a fCSO, a pCSO, or a combination thereof, relating to a real time or near real time geographical location of a conveyance client. A visual representation can display a dynamic map, a conveyance client preference, a CSO, a fCSO, a pCSO, all or some of a real time or near real time geographical location of a conveyance client, or a combination thereof, relating to a conveyance client preference.

A representative can use a visual representation to evaluate a historical pCSR relating to a service provider. A conveyance client can use a visual representation to evaluate a historical pCSO relating to a service provider. A visual representation can be compiled on a third party server such as but not limited to a map provider server. A representative and/or a conveyance client can use a visual representation to evaluate pricing information or another metric from a service provider respectively. A visual representation can be used to evaluate at least one area on a geographical map that can show a metric relating to an individual conveyance industry segment. A visual representation can be used to evaluate at least one area on a geographical map that can show a metric relating to an individual service provider.
Dynamic Map: The following are illustrative, non-limiting examples and embodiments of a "dynamic map" as used in the present disclosure:
A dynamic map can be at least one visual representation that can for example facilitate at least one operation or at least one function to secure or obtain a preferred conveyance service request ("pCSR") or a preferred conveyance service offering ("pCSO"). A dynamic map can be a visual representation that can for example be utilized or operated by a conveyance client, a representative, a service provider, a good supplier, a fleet manager, an AV owner/controller, a logistics provider, a logistics supplier, a map provider, a third party, or a combination thereof.

A dynamic map can be for example at least one geographical map that can display one or more of a conveyance service request ("CSR") in conjunction with corresponding conveyance data, a filtered conveyance service request ("fCSR") in conjunction with corresponding conveyance data, a pCSR in conjunction with corresponding conveyance data, or a combination thereof. A dynamic map can be for example at least one geographical map that can display one or more of a conveyance service offering ("CSO") in conjunction with corresponding conveyance data, a filtered conveyance service offering ("fCSO") in conjunction with corresponding conveyance data, a pCSO in conjunction with corresponding conveyance data, or a combination thereof. A dynamic map can be for example at least one geographical map that can display a real time or near real time geographical location of an autonomous vehicle ("AV"), a real time or near real time geographical location of a representative, a real time or near real time geographical location of a conveyance client, or a combination thereof.

A dynamic map can be used by a representative or the like to evaluate and then secure or obtain a pCSR. A dynamic map can be used by a representative or the like to find or identify and secure a pCSR for a representative relating to a service provider or the like operating in at least one conveyance industry segment. A dynamic map can be used by a conveyance client to analyze or evaluate and then secure or obtain a pCSO. A dynamic map can be used by a conveyance client to find or identify and secure a pCSO for a conveyance client relating to a service provider or the like operating in at least one conveyance industry segment. A dynamic map can facilitate securing a pCSR or a pCSO. A dynamic map can be used to facilitate securing a pCSR or a pCSO. A dynamic map can facilitate securing a pCSR or a pCSO utilizing an application. A dynamic map can facilitate securing pCSR or a pCSO, utilizing a service provider application, a third party application, a map provider application, or the like.

A dynamic map can be but is not limited to at least one geographical map that can display a distinguishable conveyance client, a distinguishable representative, a distinguishable AV, a distinguishable service provider, a distinguishable good supplier, or the like. A pCSR, a fCSR, a pCSO, a fCSO, a conveyance client, a representative, an AV, a service provider, a good supplier, an AV owner/controller, a fleet manager, a logistics provider, a logistics supplier, a map provider, a third party, or a combination thereof, can be displayed individually as a mobile or transitory icon or a mobile or transitory visual on a dynamic map. A dynamic map can be compiled on one or more of an application, a central server, an external server, or a combination thereof. A dynamic map can be in any form or format, preferably visual. At least one variation in the form, format, and order of at least one dynamic map component is within the scope of the present invention.

A dynamic map can be viewed from at least one perspective, at least one point of reference, at least one point of interest, or a combination thereof. A substantially real time geographical location of a conveyance client, a representative, an AV, a service provider, a good supplier, an AV owner/controller, a logistics provider, a logistics supplier, a fleet manager, a map provider, a third party, or a combination thereof, can change and can be updated in real time or near real time and can optionally reflect their availability status. A dynamic map can be updated or refreshed in real time or near real time. A dynamic map can perform a function in real time or near real time.

A dynamic map can be used to evaluate an area on a geographical map that can show a different service provider or another conveyance service metric relating to a service provider. A dynamic map can be used to evaluate an area on a geographical map that can show an available service provider or another conveyance service metric relating to at least one conveyance industry segment. A dynamic map can be used to evaluate a location of one or more of a conveyance client, a representative, an AV, a service provider, a good supplier, an AV owner/controller, a fleet manager, a logistics provider, a logistics supplier, a map provider, a third party, or a combination thereof, from at least one service provider. A dynamic map can be combined with a heat map. A pCSR can be displayed in a visually identifiable format compared to a fCSR. A pCSO can be displayed in a visually identifiable format compared to a fCSO. A representative can use a dynamic map to evaluate a fCSR, a pCSR, a client, a good supplier, a conveyance service metric, or a combination thereof, relating to a service provider across at least one conveyance industry segment. A client can use a dynamic map to evaluate one or more of a fCSO, a pCSO, a representative, an AV, a good supplier, a conveyance service metric, or a combination thereof, relating to a service provider across at least one conveyance industry segment.

A map provider can provide or utilize a dynamic map that can display at least one individual service provider, at least one individual good supplier, or the like with associated conveyance service offerings ("CSOs") or associated conveyance service requests ("CSRs").

A service provider, a good supplier, a fleet manager, an AV owner/controller, a logistics provider, a logistics supplier, a representative, a conveyance client, a map provider, a third party, or a combination thereof, can be displayed on or with a dynamic map that can display a level of service preference. A level of service preference can be displayed on a dynamic map to identify different levels of service that a service provider or the like can provide. An AV owner/controller, a service provider, a good supplier, a fleet manager, a logistics provider, a logistics supplier, a conveyance client, a representative, a third party, or a combination thereof, can be displayed on or with a dynamic map that can display a level of service preference and can be represented by a mobile or transitory icon.

A conveyance client can visually identify at least one service provider, at least one good supplier, or the like and the corresponding CSO associated on a dynamic map. As an example, a conveyance client can visually identify three service providers on a dynamic map with the associated CSOs along with pricing information. A representative can visually identify at least one service provider, at least one good supplier, or the like and the corresponding CSR associated on a dynamic map. As an example, a representative can visually identify four good suppliers on a dynamic map with the associated CSRs along with pricing information.

An individual service provider can be displayed as at least one of a different icon, a different symbol, a different color, a different shading, a different visual, or the like. An individual service provider can be displayed as at least one of a similar icon, a similar icon symbol, a similar icon color, a similar icon shading, a similar icon visual, or the like for at least one of a conveyance service, a level of service, or a combination thereof. A service provider can be displayed on a dynamic map using at least one of a similar or different icon, a similar or different symbol, a similar or different color, a similar or different shading, a similar or different visual, or the like but can be identifiably different.

A dynamic map can utilize an application, a terminal, a central server, an external server, a link, or a combination thereof, that can be combined or integrated. A dynamic map can utilize an application, a terminal, a central server, at least one external server, a link, or a combination thereof, that can be combined or integrated on a smartphone. A dynamic map can be compiled on a central server and then transmitted to and displayed on an application. A dynamic map can be used for an individual conveyance industry segment. A dynamic map can be used for at least one individual service provider or the like. A dynamic map can have one car icon or the like represent a service provider as half black/half white. A dynamic map can display at least one icon or the like to show that a conveyance client has inputted or generated a CSR to at least one service provider by displaying a conveyance client and/or a CSR as half red and half blue. A dynamic map can display at least one icon or the like to show that a representative or an AV can work for at least one additional service provider by displaying at least one car icon or the like and/or a CSO as half black and half pink.

A dynamic map can facilitate securing or obtaining a pCSO utilizing more than one application. A third party can provide a dynamic map on a third party application that can be used to facilitate securing or obtaining a pCSO on a service provider application or the like. A dynamic map can facilitate securing or obtaining a pCSR utilizing more than one application. A third party can provide a dynamic map on a third party application that can be used to facilitate securing or obtaining a pCSR on a service provider application or the like.
Heat Map: The following are illustrative, non-limiting examples and embodiments of a "heat map" as used in the present disclosure:
A heat map can be a visual representation that can facilitate at least one operation or at least one function to secure a preferred conveyance service request ("pCSR") or a preferred conveyance service offering ("pCSO"). A heat map can be at least one visual representation that can for example be utilized or operated by a conveyance client, a representative, a service provider, a good supplier, a fleet manager, an AV owner/controller, a logistics provider, a logistics supplier, a map provider, a third party, or a combination thereof.

A heat map can for example provide an improved way to visualize how at least one metric varies across at least one geographical area or can show at least one level of variability within at least one geographical region of at least one metric. A heat map can be a geographical map in which an area can be shaded or patterned in proportion to a measurement of a statistical variable being displayed on a geographical map. A heat map can be used by a representative to analyze or evaluate and then preferably secure or obtain a pCSR. A heat map can be used by a conveyance client to analyze or evaluate and then preferably secure or obtain a pCSO.

A statistical variable can be aggregated or not aggregated. A statistical variable can be quantitative, qualitative, or a combination thereof. A statistical variable can be one or more of a measurement of conveyance service availability, pricing, elevated pricing, conveyance service offering ("CSO") density, filtered conveyance service offering ("fCSO") density, pCSO density, conveyance service request ("CSR") density, filtered conveyance service request ("fCSR") density, pCSR density, preferred good supplier density, a preferred conveyance industry segment, conveyance industry segment density, level of service density, a conveyance service distance, an estimated time of arrival, preferred representative density, representative density, conveyance client density, service provider density, good supplier density, or a combination thereof.

At least one metric can be a basis for comparison or at least one reference point against which another thing can be evaluated. At least one metric can be at least one standard of measurement by which value, efficiency, performance, progress or quality of a process, a product, or a variable can be assessed. A distinguishable pricing metric, a distinguishable conveyance service metric, a distinguishable conveyance client metric, a distinguishable representative metric, a distinguishable autonomous vehicle ("AV") metric, a distinguishable service provider metric, and/or a distinguishable good supplier metric can optionally be aggregated and/or differentiated on at least one heat map. At least one variation in the form, format, and order of a heat map component is within the scope of the present invention. At least one heat map can be in any form or format, preferably visual. At least one heat map can be viewed from one or more of a perspective, a point of reference, a point of interest, or a combination thereof. A heat map can be compiled on one or more of an application, a central server, or a combination thereof.

A conveyance client can visually identify at least one metric or at least one statistical variable relating to a service provider, a good supplier, a map provider, or the like associated with a heat map. As an example, a conveyance client can visually identify two service providers on a heat map with the different pricing information. A representative can visually identify at least one metric or at least one statistical variable relating to a service provider, a good supplier, a map provider, or the like associated with a heat map. As an example, a representative can visually identify three good suppliers on a heat map with different elevated pricing information.

A heat map can be updated or refreshed in real time or near real time. A heat map can perform at least one function in real time or near real time.

A heat map can be at least one geographical map that can display at least one visual depiction of at least one statistical variable of one or more of a CSR in conjunction with corresponding conveyance data, a fCSR in conjunction with corresponding conveyance data, a pCSR in conjunction with corresponding conveyance data, or a combination thereof. A heat map can be at least one geographical map that can display at least one visual depiction of at least one statistical variable of one or more of a CSO in conjunction with corresponding conveyance data, a fCSO in conjunction with corresponding conveyance data, a pCSO in conjunction with corresponding conveyance data, or a combination thereof. A representative can use a heat map to evaluate at least one measurement of at least one statistical variable from a service provider, a good supplier, or the like across at least one conveyance industry segment. A conveyance client can use a heat map to evaluate at least one measurement of at least one statistical variable from a service provider, a good supplier, or the like across at least one conveyance industry segment.

A heat map can be used to evaluate an area on a geographical map that can show a pricing metric or another conveyance service metric relating to a service provider, a good supplier, or the like. A heat map can be used to evaluate an area on a geographical map that can show a pricing metric or another conveyance service metric relating to at least one conveyance industry segment. A heat map can be combined with a dynamic map.

A heat map can be one or more of a real time or near real time heat map, a historical heat map, a predictive heat map, or a combination thereof. A real time or near real time heat map, a historical heat map, a predictive heat map, or a combination thereof, can be at least one tool to aid a representative or a client when evaluating at least one conveyance service metric. A real time or near real time heat map can display a time frame in seconds, minutes, hours, days, or any other increment of time. A historical heat map can display at least one time frame in seconds, minutes, hours, days, or any other increment of time. A predictive heat map can provide an estimate in seconds, minutes, hours, days, or any other increment of time. A predictive heat map can incorporate a feedback mechanism to improve quality of a future estimate. A predictive heat map can incorporate a feedback mechanism from one or more of a representative, an AV, a conveyance client, a good supplier, a service provider, an AV owner/controller, a fleet manager, a logistics provider, a logistics supplier, a map provider, a third party, or a combination thereof.

A heat map can be viewed from at least one perspective, at least one point of reference, at least one point of interest, or a combination thereof. A heat map can be a geographical map that can display a real time or near real time geographical location of one or more of an AV, a representative, a conveyance client, a service provider, a good supplier, a fleet manager, a third party, or a combination thereof.

A service provider, a good supplier, a fleet manager, an AV owner/controller, a logistics provider, a logistics supplier, a representative, a conveyance client, a map provider, a third party, or a combination thereof, can be displayed on or with a heat map that can display a level of service preference. A level of service preference can be displayed on a heat map to identify a metric or a statistical variable relating to a service provider, a good supplier, a map provider, or the like. A service provider, a good supplier, a fleet manager, an AV owner/controller, a logistics provider, a logistics supplier, a conveyance client, a representative, a third party, or a combination thereof, can be displayed on or with a heat map that can display a level of service.

A heat map can facilitate securing a pCSR or a pCSO. A heat map can be used to facilitate securing a pCSR or a pCSO. A heat map can facilitate securing a pCSR or a pCSO utilizing an application. A heat map can facilitate securing a pCSR or a pCSO, utilizing a service provider application, a third party application, a map provider application, or the like. A heat map can facilitate securing a pCSO utilizing more than one application. A third party can provide a heat map on a third party application that can be used to facilitate securing a pCSO on a service provider application or the like. A heat map can facilitate securing a pCSR utilizing more than one application. A third party can provide a heat map on a third party application that can be used to facilitate securing a pCSR on a service provider application or the like. A heat map can be used by a representative to analyze or evaluate and then secure or obtain a pCSR. A heat map can be used by a representative to find or identify and secure a pCSR for a representative relating to a service provider or the like operating in at least one conveyance industry segment. A heat map can be used by a conveyance client to analyze or evaluate and then secure or obtain a pCSO. A heat map can be used by a conveyance client to find or identify and secure a pCSO for a conveyance client relating to a service provider or the like operating in at least one conveyance industry segment.

A heat map can be used to analyze or evaluate an area on a geographical map that can show a different service provider or at least one conveyance service metric relating to a service provider, a good supplier, or the like. A heat map can be used to evaluate an area on a geographical map that can show another conveyance service metric, an available service provider, an available good supplier, or the like, relating to a conveyance industry segment. A heat map can be used to evaluate a location of one or more of a conveyance client, a representative, an AV, a service provider, a good supplier, an AV owner/controller, a fleet manager, a logistics provider, a logistics supplier, a map provider, a third party, or a combination thereof, from at least one service provider.

A statistical variable can be but is not limited to one or more of conveyance service availability, pricing, elevated pricing, CSR density, CSO density, fCSR density, fCSO density, pCSR density, pCSO density, level of service density, a conveyance service distance, an estimated time of arrival, preferred conveyance client density, preferred representative density, preferred good supplier density, a preferred conveyance industry segment, conveyance industry segment density, representative density, conveyance client density, service provider density, good supplier density, or a combination thereof. A statistical variable can be displayed as but not limited to at least one of a distinguishable hue, a distinguishable shade, a distinguishable saturation, a distinguishable opacity, a distinguishable color, a distinguishable color value, a distinguishable pattern, a distinguishable hatch fill, a distinguishable fill, a distinguishable shape, a distinguishable image, a distinguishable animation, or a combination thereof.

A heat map can optionally be a geographical map that can be separate or can be at least one layer on a dynamic map. A heat map can be compiled on a central server and then transmitted to and displayed on an application or a remote display. A heat map can be a choropleth map, a thematic map, or the like.

A map provider can provide or utilize a heat map that can display at least one metric or at least one statistical variable relating to at least one of an individual service provider, an individual good supplier, or the like. A heat map can depict a pricing metric or another relevant conveyance service metric. A heat map can depict an estimated time of arrival. A heat map can depict an estimated time of arrival relating to one or more of a CSR, a fCSR, a pCSR, a CSO, a fCSO, a pCSO, a representative, a conveyance client, a service provider, a good supplier, an AV owner/controller, a fleet manager, a logistics provider, a logistics supplier, a map provider, a third party, or a combination thereof. An AV owner/controller, a service provider, a good supplier, a fleet manager, a logistics provider, a logistics supplier, or a combination thereof, can be displayed on or with a heat map that can display a level of service preference.

A central server or an application can generate prediction data based on a CSR in conjunction with corresponding conveyance data and/or a CSO in conjunction with corresponding conveyance data and can transmit to an application to create a predictive heat map. A heat map can be used for at least one individual conveyance industry segment. A heat map can be used for an individual service provider, an individual good supplier, or the like.

A pCSR is not identified prior to compiling a heat map, a real time or near real time heat map, a historical heat map, a predictive heat map, or a combination thereof. A pCSO is not identified prior to compiling a heat map, a real time or near real time heat map, a historical heat map, a predictive heat map, or a combination thereof.

A real time or near real time heat map can be compiled from at least one statistical variable of a CSR in conjunction with corresponding conveyance data, a fCSR in conjunction with corresponding conveyance data, a pCSR in conjunction with corresponding conveyance data, or a combination thereof. A real time or near real time heat map can be compiled from a statistical variable of a CSO in conjunction with corresponding conveyance data, a fCSO in conjunction with corresponding conveyance data, a pCSO in conjunction with corresponding conveyance data, or a combination thereof. A real time or near real time heat map can display current conveyance client density, current representative density, current AV density, current service provider density, current good supplier density, or a combination thereof, based on a current or historical estimated time of arrival.

A historical heat map can be compiled from at least one statistical variable of a past CSR in conjunction with corresponding conveyance data, a past fCSR in conjunction with corresponding conveyance data, a past pCSR in conjunction with corresponding conveyance data, or a combination thereof. A historical heat map can be compiled from at least one statistical variable of a past CSO in conjunction with corresponding conveyance data, a past fCSO in conjunction with corresponding conveyance data, a past pCSO in conjunction with corresponding conveyance data, or a combination thereof. A historical heat map can be used to evaluate a historical trend relating to a conveyance industry segment. A historical heat map can display including but not limited historical conveyance client density, historical representative density, historical AV density, historical service provider density, historical good supplier density, or a combination thereof, based on a historical estimated time of arrival.

A predictive heat map can be compiled from a statistical variable of a substantially real time CSR in conjunction with corresponding conveyance data, a past CSR in conjunction with corresponding conveyance data, a substantially real time fCSR in conjunction with corresponding conveyance data, a past fCSR in conjunction with corresponding conveyance data, a substantially real time pCSR in conjunction with corresponding conveyance data, a past pCSR in conjunction with corresponding conveyance data, or a combination thereof.

A predictive heat map can be compiled from at least one statistical variable of a real time or near real time CSO in conjunction with corresponding conveyance data, a past CSO in conjunction with corresponding conveyance data, a real time or near real time fCSO in conjunction with corresponding conveyance data, a past fCSO in conjunction with corresponding conveyance data, a real time or near real time pCSO in conjunction with corresponding conveyance data, a past pCSO in conjunction with corresponding conveyance data, or a combination thereof. A predictive heat map can display one or more of future conveyance client density, future representative density, future AV density, future service provider density, future good supplier density, or a combination thereof, based on a current and historical estimated time of arrival.

A predictive heat map can utilize a neural network or the like, a machine learning technology or the like, or quantum computing or the like. A predictive heat map can be used by a representative or a client to find a potential upcoming area with elevated pricing.

A predictive heat map can identify or estimate at least one of but not limited to future conveyance service availability, future pricing, future elevated pricing, future CSR density, future CSO density, future fCSR density, future fCSO density, future pCSR density, future pCSO density, future level of service density, future conveyance industry segment density, future representative density, future client density, future service provider density, future good supplier density, future level of service demand, future conveyance industry demand, future conveyance service demand, future service provider demand, future good supplier demand, future conveyance service supply, future representative supply, or a combination thereof.

A predictive heat map can generate a visual notification or an audio notification to notify a representative or a conveyance client of a future change or update of a statistical variable, a measurement of a statistical variable, or a combination thereof.

A heat map can utilize an application, a terminal, a central server, an external server, a link, or a combination thereof, that can be combined or integrated. A heat map can utilize an application, a terminal, a central server, an external server, a link, or a combination thereof, that can be combined or integrated on a smartphone. A real time or near real time heat map can utilize an application, a terminal, a central server, an external server, a link, or a combination thereof, that can be combined or integrated. A historical heat map can utilize an application, a terminal, a central server, an external server, a link, or a combination thereof, that can be combined or integrated. A predictive heat map can utilize an application, a terminal, a central server, an external server, a link, or a combination thereof, that can be combined or integrated.
Application: The following are illustrative, non-limiting examples and embodiments of an "application" as used in the present disclosure:
An application can be a software that can facilitate at least one operation or at least one function to secure a preferred conveyance service request ("pCSR") or a preferred conveyance service offering ("pCSO"). An application can be a software that can be utilized or operated by a conveyance client, a representative, an AV owner/controller, a service provider, a good supplier, a fleet manager, a logistics provider, a logistics supplier, a map provider, a third party, or a combination thereof. An application can be a software such as a smartphone application, a computer application, a computer program, an API, a website, a web application, a smartphone application, a cloud application, a service, or the like.

An application can be but is not limited to software that can facilitate analyzing, evaluating, securing, obtaining, accepting, declining, canceling, displaying, communicating, or a combination thereof, a pCSR, a pCSO, a real time or near real time geographical location of a conveyance client, a real time or near real time geographical location of a representative, or a combination thereof. An application can be provided in any form or format, such as any appropriate tangible or intangible medium of expression but can be provided in an electronic form. An application can be associated with one or more of a central server, a link, an external server, an application, a good supplier, a service provider, an AV owner/controller, a good supplier, a fleet manager, a logistics provider, a logistics supplier, a map provider, a third party, a conveyance client, a representative, or a combination thereof.

An application can be software appropriate for communicating to or with one or more of a central server, an external server, an application, a good supplier, an autonomous vehicle ("AV"), a terminal, a service provider, a good supplier, a fleet manager, a logistics provider, a logistics supplier, a representative, a client, a map provider, a third party, or a combination thereof. An application can operate on one or more of a terminal, a central server, an external server, or a combination thereof. An application can standardize or convert a conveyance service request ("CSR") or a conveyance service offering ("CSO"), a real time or near real time geographical location of a conveyance client, a real time or near real time geographical location of a representative, or a combination thereof structured in a different format, into a uniform format. A representative can input or provide a representative preference into an application. A conveyance client can input or provide a conveyance client preference into an application.

An application can provide a real time or near real time geographical location of a representative, a real time or near real time geographical location of a client, a real time or near real time geographical location of a service provider, a real time or near real time geographical location of a good supplier, a real time or near real time geographical location of a fleet manager, a real time or near real time geographical location of a logistics provider, a real time or near real time geographical location of a logistics supplier, a real time or near real time geographical location of a map provider, a real time or near real time geographical location of a third party, or a combination thereof, using a geographical location module of a terminal. Information and/or data inputted or discovered by an application can be cached. An application can be updated or refreshed in real time or near real. An application can perform a function in real time or near real time.

An application can communicate information or data all or some of a pCSR in conjunction with corresponding conveyance data, all or some of a filtered conveyance service request ("fCSR") in conjunction with corresponding conveyance data, all or some of a CSR in conjunction with corresponding conveyance data, all or some of a pCSO in conjunction with corresponding conveyance data, all or some of a filtered conveyance service offering ("fCSO") in conjunction with corresponding conveyance data, all or some of a CSO in conjunction with corresponding conveyance data, all or some of subsequent or additional plurality of filtered conveyance service offerings ("fCSOs") in conjunction with corresponding conveyance data, all or some of subsequent or additional a pCSO in conjunction with corresponding conveyance data, a beginning service geographical location, an ending service geographical location, all or some of a real time or near real time geographical location of a representative, all or some of a real time or near real time geographical location of a conveyance client, a representative preference, a conveyance client preference, a secured pCSR, or a secured pCSO. An application can communicate all or some of the information or data with a central server, an external server, an application, or a combination thereof.

An application can filter and identify all or some of a pCSR in conjunction with corresponding conveyance data, all or some of a fCSR in conjunction with corresponding conveyance data, all or some of a CSR in conjunction with corresponding conveyance data, all or some of a pCSO in conjunction with corresponding conveyance data, all or some of a fCSO in conjunction with corresponding conveyance data, all or some of a CSO in conjunction with corresponding conveyance data, all or some of subsequent or additional plurality of fCSOs in conjunction with corresponding conveyance data, all or some of subsequent or additional a pCSO in conjunction with corresponding conveyance data, a beginning service geographical location, an ending service geographical location, all or some of a real time or near real time geographical location of a representative, all or some of a real time or near real time geographical location of a client, a representative preference, a client preference, a secured pCSR, a secured pCSO, or a combination thereof, together or separately.

An application can be a software that can facilitate at least one operation or at least one function to secure a CSR, a fCSR, a pCSR, a CSO, a fCSO, a pCSO, or a combination thereof. A CSO or a CSR can be pre-filtered or pre-categorized on a central server, an external server, an application, or a combination thereof.

An application can be used to analyze, evaluate, secure, or obtain, accept, decline, cancel, or communicate a pCSR or a pCSO. An application can be used by one or more of a representative, a conveyance client, a service provider, a good supplier, a fleet manager, a logistics provider, a logistics supplier, a map provider, a third party, or a combination thereof. An application can be used, accessed, controlled, or operated by one or more of a representative, a conveyance client, a service provider, a good supplier, a fleet manager, a logistics provider, a logistics supplier, a map provider, a third party, or a combination thereof, to optionally evaluate and then secure a pCSR, a pCSO, or a combination thereof.

An application can display a visual representation of one or more of a dynamic map, a heat map, or a combination thereof. An application can display a secured pCSR. An application can display a secured pCSO. An application can display conveyance data relating to one or more of a CSR, a fCSR, a pCSR, a CSO, a fCSO, a pCSO, or a combination thereof.

An application, a terminal, a central server, an external server, a link, or a combination thereof, can be combined or integrated. There can be at least one different variation of the application used by one or more of a representative, a conveyance client, a service provider, a good supplier, a fleet manager, a logistics provider, a logistics supplier, a map provider, a third party, or a combination thereof. An application can transmit an inertial Measurement Unit (IMU) reading of a terminal to a central server to determine an orientation or a direction of a representative, a conveyance client, a service provider, a good supplier, a fleet manager, a logistics provider, a logistics supplier, a map provider, a third party, or a combination thereof. An application can be in at least one form of a mobile application, a non-mobile application, a website, a plugin, or a combination thereof.

An application can operate on a central server, an external server, or a combination thereof. An application can perform a central server function or an external server function. An application can perform a similar function as a central server or an external server function to identify a pCSR or a pCSO. At least one different application can be used by a representative, a conveyance client, a service provider, a good supplier, a fleet manager, a logistics provider, a logistics supplier, a map provider, a third party, or a combination thereof.

A pCSR in conjunction with corresponding conveyance data or a pCSO in conjunction with corresponding conveyance data can be transmitted to an application and can be displayed as a pop-up, an icon, a visual, a symbol, a pattern, a marker, a notification, an alert, a message, a short message service, a multimedia messaging service, a smart messaging service, an extended message service, or a combination thereof.

An application can secure a pCSR, a fCSR, a CSR, a pCSO, a fCSO, a CSO, or a combination thereof, and can communicate directly or indirectly with a central server, an external server, an application, a service provider, a good supplier, a fleet manager, a logistics provider, a logistics supplier, a map provider, a third party, a representative, a conveyance client, or a combination thereof.

An application can secure a pCSR, a fCSR, a pCSO, a fCSO, or a combination thereof, and can communicate indirectly with an external server or a service provider via a central server. An application can secure a pCSR, a fCSR, a pCSO, a fCSO, or a combination thereof, and can communicate directly with an external server, a service provider, or the like.

An application can be a service provider application, a good supplier application, an AV owner/controller application, a fleet manager application, a logistics provider application, a logistics supplier application, a representative application, a conveyance client application, a map provider application, a third party application, or a combination thereof. A map provider can provide an application that can be utilized by a conveyance client or a representative. A map provider can provide a visual representation on an application that can be utilized by a conveyance client or a representative.

An application can be accessed, controlled, or operated remotely by a service provider, a good supplier, a fleet manager, a logistics provider, a logistics supplier, a representative, a conveyance client, a map provider, a third party, or a combination thereof, to optionally evaluate and then secure a pCSR or a pCSO.

An application can manage or process a CSO the same as a CSR. An application can manage or process a CSR the same as a CSO. A CSR or a CSO can be filtered in real time or near real time on an application. A pCSR can be identified in real time, from a fCSR on an application. A pCSO can be identified in real time or near real time, from a fCSO on an application.

A different geographical location can be used other than a real time or near real time geographical location of a representative when filtering a CSR. A different geographical location can be used other than a real time or near real time geographical location of a conveyance client when filtering a CSO. An application can expose or be accessed through at least one API relating to a service provider, a good supplier, a fleet manager, a logistics provider, a logistics supplier, a map provider, a third party, or the like.

There can be one or more applications or at least one different application on or associated with an AV. There can be one or more applications or more than one different application with different function that can reside on or be associated with one AV. For example, there can be two different applications on or associated with one AV, the first being a dealership application allowing for vehicle maintenance and the second being an application integrated with a central server that facilitates conveyance services. An application can be associated with a single AV or a fleet of AVs.

The following provides different examples of an application that might be used by various parties:
A conveyance client can access an application via a terminal. A conveyance client can evaluate and then secure a pCSO.

A representative can access an application via a terminal. A representative can evaluate and then secure a pCSR.

A map provider can provide a visual representation via an application. A conveyance client can evaluate and secure a pCSO. A representative can evaluate and secure a pCSR.
Terminal: The following are illustrative, non-limiting examples and embodiments of a "terminal" as used in the present disclosure:
A terminal can be a hardware that can facilitate at least one operation or at least one function to secure a preferred conveyance service request ("pCSR") or a preferred conveyance service offering ("pCSO"). A terminal can be a hardware that can be utilized or operated by a conveyance client, a representative, a map provider, a third party, an AV owner/controller, a service provider, a good supplier, a fleet manager, a logistics provider, a logistics supplier, or a combination thereof.

A terminal can be but is not limited to a device that can facilitate operating an application. A terminal can for example be capable of communicating with a central server, an external server, an application, or a combination thereof, by way of a link. A terminal can be but is not limited to an electronic computing device that can include a computer processor, a computer readable memory, an input source, a geographical location module, a display, a network interface, or a combination thereof. A terminal can encompass hardware and/or software alone or in a combination.

A terminal can be for example a smartphone or smart device that can be utilized to combine or integrate an application, a central server, an external server, a terminal, a link, or a combination thereof. A terminal can be used to access an application. An application can operate on a terminal. An operating system can run on a terminal. A terminal can facilitate one or more of a display function, an input function, an operation, or a combination thereof, of an application. An application can provide a real time or near real time geographical location of one or more of a representative, a conveyance client, a service provider, a good supplier, a fleet manager, a logistics provider, a logistics supplier, a map provider, a third party, an AV owner/controller, or a combination thereof, using a geographical location module of a terminal. A terminal can be associated with a display or a remote display.

A terminal can be but is not limited to a computer, a smartphone device, a plug-in device, a mobile computing device, a handheld computing device, a tablet computing device, a laptop computing device, a wearable computing device, a portable computing device, a fixed computing device, a non-fixed computing device, a physiologically embedded computing device, a biologically integrated computing device, an in-Vehicle infotainment device, an internet of Things (IoT) device, a projecting device, a computing device embedded in a vehicle, a head-up display, a voice recognition, a voice control, or a combination thereof.

An Inertial Measurement Unit (IMU) reading of a terminal can be used to determine an orientation or a direction of at least one of a representative, a conveyance client, a service provider, a good supplier, a fleet manager, a logistics provider, a logistics supplier, a map provider, a third party, an AV owner/controller, or a combination thereof. A geographical location module of a terminal can include but is not limited to a Global Positioning System (GPS), a satellite tracking, a RFID tracking, a radiolocation, a WiFi positioning system, geofencing, a global system for mobile communications, a cell phone triangulation, an internet tracking, or a combination thereof.

An application, a central server, an external server, a link, or a combination thereof, can be combined or integrated on a terminal, such as a smartphone. A terminal does not need a physical connection to be associated or communicate with an application, a link, a terminal, a central server, an external server, an AV, or a combination thereof.

A central server can optionally be located on a terminal. An input source of a terminal can be a touchscreen, a keypad, a keyboard, a voice controlled input, or a combination thereof. A visual representation can be displayed on an application using a display of a terminal. A terminal can be a smartphone that can be used by a representative, a conveyance client, an AV owner/controller, a service provider, a good supplier, a fleet manager, a logistics provider, a logistics supplier, a map provider, a third party, or a combination thereof.
Link: The following are illustrative, non-limiting examples and embodiments of a "link" as used in the present disclosure:
A link can be a software and/or a hardware that can for example facilitate at least one operation or at least one function to secure or obtain a preferred conveyance service request ("pCSR") or at least one preferred conveyance service offering ("pCSO"). A link can be a software and/or a hardware that can for example be utilized or operated by a conveyance client, a representative, an AV owner/controller, a service provider, a good supplier, a fleet manager, a logistics provider, a logistics supplier, a map provider, a third party, or a combination thereof.

A link can be for example at least one connection or at least one association with a software function, a software operation, a software component, a software module, or a combination thereof. A link can connect or be associated with at least one software function or at least one software operation. A link can connect or be associated with at least one software module. A link can include but is not limited to an electronic communication network channel. A link can be for example at least one appropriate link that can allow an efficient, rapid, accurate, or the like transmission of information or data. A link can be but is not limited to at least one combination of at least one connection between a central server, an external server, a terminal, an AV, an application, or a combination thereof. Preferably, a link between a central server, an external server, a terminal, an application, an owner/controller application, or a combination thereof, can be via the Internet, preferably secure, and can be more preferably encrypted. The definition of a link can encompass hardware and/or software alone or in a combination.

A link can be utilized by a representative, a conveyance client, an AV owner/controller, a service provider, a good supplier, a fleet manager, a logistics provider, a logistics supplier, a map provider, a third party, or a combination thereof, to a conveyance service request ("CSR") in conjunction with corresponding conveyance data. At least one link can be utilized by a representative, a conveyance client, an AV owner/controller, a service provider, a good supplier, a fleet manager, a logistics provider, a logistics supplier, a map provider, a third party, or a combination thereof, to communicate a conveyance service offering ("CSO") in conjunction with corresponding conveyance data. At least one link can be utilized by a service provider, a good supplier, a fleet manager, an AV owner/controller, a logistics provider, a logistics supplier, a representative, a conveyance client, a map provider, a third party, or a combination thereof, to facilitate a conveyance service.

At least one link can be utilized to communicate information or data all or some of a pCSR in conjunction with corresponding conveyance data, all or some of a filtered conveyance service request ("fCSR") in conjunction with corresponding conveyance data, all or some of a CSR in conjunction with corresponding conveyance data, all or some of a pCSO in conjunction with corresponding conveyance data, all or some of a filtered conveyance service offering ("fCSO") in conjunction with corresponding conveyance data, all or some of a CSO in conjunction with corresponding conveyance data, all or some of subsequent or additional plurality of filtered conveyance service offerings ("fCSOs") in conjunction with corresponding conveyance data, all or some of subsequent or additional a pCSO in conjunction with corresponding conveyance data, a beginning service geographical location, an ending service geographical location, all or some of a real time or near real time geographical location of one or more of a representative, and a conveyance client, a representative preference, a conveyance client preference, a secured or obtained pCSR, a secured or obtained pCSO, or the like. A link can communicate or provide data or information in real time or near real time. A link can be updated or refreshed in real time or near real. A link can perform at least one function in real time or near real time.

A link can be in at least one form of a software interface or an API. A link can be at least one inter-process communication. A link can be utilized to connect to or be associated with an application, a terminal, a central server, an external server, or a combination thereof, on one software application. A central server can connect to or communicate with an application, a terminal, a central server, an external server, or a combination thereof, on the same software application. A link can be utilized to connect to or be associated with an application, a terminal, a central server, an external server, or a combination thereof, to secure or obtain a pCSO, or a combination thereof. A link does not need a physical connection to connect or communicate with an application, a terminal, a central server, an external server, an AV, or a combination thereof. A link can be any appropriate connection, such as one or more of type of connection selected from WiFi, a wireless, an ethernet, LTE, 3G, 4G, 5G, 6G or 7G, RFID, Bluetooth, BLE, PAN, LAN, MAN, WAN, WLAN, GSM, GPRS, UMTS, dial-up, broadband, mobile, DSL, cable, wired, satellite, ISDN, fiber-optic, infrared, client-server network such as a cloud computing network, another appropriate method, means, hardware and/or software capable of conveying information, or a combination thereof. A link can be but is not limited to at least one combination of a connection between a central server, an external server, a terminal, an application, or a combination thereof, that can be integrated or combined on a terminal, being a smartphone. An application, a central server, an external server, a link, or a combination thereof, can be combined or integrated on a terminal, such a smartphone. A link can be but is not limited to at least one combination of a connection between a central server, an external server, a terminal, an AV, an application, an application associated with an AV, or a combination thereof.

A link can be utilized by a representative, a conveyance client, an AV owner/controller, a service provider, a good supplier, a fleet manager, a logistics provider, a logistics supplier, a map provider, a third party, or a combination thereof, to communicate a CSR in conjunction with conveyance data, a fCSR in conjunction with conveyance data, a pCSR in conjunction with conveyance data, a CSO in conjunction with conveyance data, a fCSO in conjunction with conveyance data, a pCSO in conjunction with conveyance data, or a combination thereof, with a central server, an external server, a terminal, an AV, an application, an application associated with an AV, a map provider, a third party, a representative, a conveyance client, or a combination thereof.

A link can be but is not limited to at least one combination of at least one connection between a central server, an external server, a terminal, an AV, an application, an application associated with an AV, or a combination thereof. A link can connect a central server with at least one other central server. A link can be utilized by an AV owner/controller, a service provider, a good supplier, a fleet manager, a logistics provider, a logistics supplier, or a combination thereof, to communicate with a map provider or a third party indirectly or directly.
Central Server: The following are illustrative, non-limiting examples and embodiments of a "central server" as used in the present disclosure:
A central server can be software and/or hardware that can for example facilitate at least one operation or at least one function to secure or obtain a preferred conveyance service request ("pCSR") or a preferred conveyance service offering ("pCSO"). A central server can be a software and/or a hardware that can be utilized or operated by a conveyance client, a service provider, a representative, a good supplier, a fleet manager, a logistics provider, a logistics supplier, a map provider, a third party, or a combination thereof. A central server can be a software and/or a hardware, for example, a smartphone application, a computer application, a computer program, a website, a web application, a cloud application, a service, or the like.

A central server can facilitate at least one operation or at least one function to secure or obtain a pCSR or a pCSO. A central server can include but is not limited to a computer processor, a computer readable memory, a network interface, or a combination thereof. A central server can be a computer network system. A computer readable memory of a central server can be but is not limited to a database, a database table, a database result set, a cloud storage, a hard disk drive, a solid state drive, an optical disk drive, a flash memory, a random Access Memory (RAM), a tape, or a combination thereof. A central server can encompass hardware and/or software alone or in a combination. A central server can be a secure server. A central server can be made secure using hardware and/or software commercially available. Additionally, a central server can include encryption software such that communications entering or exiting a server are encrypted. Encryption hardware and/or software are commercially available. A central server can be updated or refreshed in real time or near real time. A central server can perform at least one function in real time or near real time.

A central server can be associated with one or more of an external server, a link, a good supplier, an autonomous vehicle ("AV"), an application, a central server, a service provider, a representative, a conveyance client, or a combination thereof. A central server can encompass different hardware and/or software alone or in a combination. A central server can include or connect to a database. A computer readable memory of a central server can be or include a database that a central server can use or connect to. A central server can store, retrieve, or utilize any information or data from a database, a real time database, a near real time database, a database trigger, a database table, a database row, a database column, a database result set, a database node, a database edge, a database property, a blockchain, a blockchain technology, or a combination thereof. A central server can store or retrieve any information or data in a database, a schemaless database, a graph database, a relational database, a non-relational database, a distributed database, a parallel database, or the like.

A central server can connect to or communicate with one or more of an application, at least one external server, a central server, a terminal, or a combination thereof, by way of a link. A central server can control at least one flow of information or data between one or more of an application, at least one external server, a central server, or a combination thereof, in either direction. A central server can be a server in an individual geographical location or an additional geographical location. A central server can be a single Internet location.

A central server can communicate information or data all or some of a pCSR in conjunction with corresponding conveyance data, all or some of a filtered conveyance service request ("fCSR") in conjunction with corresponding conveyance data, all or some of a conveyance service request ("CSR") in conjunction with corresponding conveyance data, all or some of a pCSO in conjunction with corresponding conveyance data, all or some of a filtered conveyance service offering ("fCSO") in conjunction with corresponding conveyance data, all or some of a conveyance service offering ("CSO") in conjunction with corresponding conveyance data, all or some of subsequent or additional plurality of filtered conveyance service offerings ("fCSOs") in conjunction with corresponding conveyance data, all or some of subsequent or additional a pCSO in conjunction with corresponding conveyance data, a beginning service geographical location, an ending service geographical location, all or some of a real time or near real time geographical location of a representative, all or some of a real time or near real time geographical location of a conveyance client, a representative preference, a conveyance client preference, a secured pCSR, or a secured pCSO. A central server can communicate all or some of the information or data with a central server, an external server, an application, or a combination thereof.

A central server can filter and identify all or some of a pCSR in conjunction with corresponding conveyance data, all or some of a fCSR in conjunction with corresponding conveyance data, all or some of a CSR in conjunction with corresponding conveyance data, all or some of a pCSO in conjunction with corresponding conveyance data, all or some of a fCSO in conjunction with corresponding conveyance data, all or some of a CSO in conjunction with corresponding conveyance data, all or some of subsequent or additional plurality of fCSOs in conjunction with corresponding conveyance data, all or some of subsequent or additional a pCSO in conjunction with corresponding conveyance data, a beginning service geographical location, an ending service geographical location, all or some of a real time or near real time geographical location of a representative, all or some of a real time or near real time geographical location of a conveyance client, a representative preference, a conveyance client preference, a secured pCSR, a secured pCSO, or a combination thereof, together or separately.

A central server can be software and/or hardware that can facilitate at least one operation or at least one function to secure or obtain a CSR, a fCSR, a pCSR, a CSO, a fCSO, a pCSO, or a combination thereof.

A central server can secure or obtain a pCSR, a fCSR, a CSR, a pCSO, a fCSO, a CSO, or a combination thereof, and can communicate directly or indirectly with a central server, an external server, an application, a terminal, an AV, an AV owner/controller, a service provider, a good supplier, a fleet manager, a logistics provider, a logistics supplier, a third party, a map provider, a conveyance client, a representative, or a combination thereof.

A central server can standardize or convert a CSR, structured in a different format, into a uniform format. A central server can standardize or convert a CSO, structured in a different format, into a uniform format. A CSR can be structured in a uniform format prior to being transmitted from an external server and is not needed to be standardized. A CSO can be structured in a uniform format prior to being transmitted from an external server and is not needed to be standardized.

A central server can use a database, a database table, a result set, or the like, to filter a CSR or a CSO. A central server can use a database, a database table, a result set, or the like, to identify a pCSR or a pCSO. A central server can use a graph database to identify a pCSR, a pCSO, or a combination thereof, that can be in the closest proximity. A central server can utilize a directed graph or an undirected graph with a node and/or an edge to identify an AV within the shortest travel time to a client, a pCSR, a pCSO, or a combination thereof.

A central server can filter a CSR relating to a representative preference and preferably a real time or near real time geographical location of a representative, to identify a fCSR by a process of one or more of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

A central server can filter a CSO relating to a client preference and preferably a real time or near real time geographical location of a conveyance client, to identify a fCSO by a process of one or more of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

A central server can filter, categorize, or the like, a CSR upon being received. A central server can filter, categorize, or the like, a CSO upon being received. A central server can filter a CSR or a CSO more than once. A central server can receive, transmit, store, standardize, aggregate, or a combination thereof, a CSR in any order prior to filtering a CSR. A central server can receive, transmit, store, standardize, aggregate, or a combination thereof, a CSO in any order prior to filtering a CSO.

A central server can identify a pCSR from a fCSR or a pre-filtered CSR. A central server can identify a pCSO from a fCSO or a pre-filtered CSO. A pCSR relating to a representative preference can be identified from a fCSR by using one or more of a sorting algorithm, a selection algorithm, a search algorithm, a merge algorithm, a maximum function, a minimum function, a graph algorithm, a graph search algorithm, a tree algorithm, a tree search algorithm, a matrix calculation, a matrix algorithm, a comparison, or a combination thereof. A pCSO relating to a conveyance client preference can be identified from a fCSO by using one or more of a sorting algorithm, a selection algorithm, a search algorithm, a merge algorithm, a maximum function, a minimum function, a graph algorithm, a graph search algorithm, a tree algorithm, a tree search algorithm, a matrix calculation, a matrix algorithm, a comparison, or a combination thereof.

A central server can preferably sort, or the like, a fCSR using a representative preference to identify a pCSR. A fCSR can be sorted relating to a weighted average of a representative preference however, sorting is not required to identify a pCSR. A central server can sort, or the like, a fCSO using a conveyance client preference to identify a pCSO. A fCSO can be sorted relating to a weighted average of a conveyance client preference however, sorting is not required to identify a pCSO. A central server can sort, or the like, a fCSR or a fCSO more than once to identify a pCSR or a pCSO respectively. A central server can sort, or the like, a fCSR in an order relating to a weighted average of a representative preference to identify a pCSR. A central server can sort, or the like, a fCSO in an order relating to a weighted average of a conveyance client preference to identify a pCSO.

A central server can process or facilitate one or more of a CSR, a fCSR, a pCSR, or a combination thereof, relating to a service provider operating in a conveyance industry segment. A central server can process or facilitate one or more of a CSO, a fCSO, a pCSO, or a combination thereof, relating a service provider operating in a conveyance industry segment. A central server can use or have a default representative preference, a default conveyance client preference, or a combination thereof.

If a CSR is pre-filtered or pre-categorized, then a CSR can be perceived or referred to as a fCSR and a central server can identify a pCSR. If a CSO is pre-filtered or pre-categorized, then a CSO can be perceived or referred to as a fCSR and a central server can identify a pCSO.

A central server can include a distinct server operably linked in the same or a different geographical location. As an example, a central server can be dispersed across a geographical location such as Los Angeles and New York. A central server can optionally be part of a terminal. A central server can optionally be part of an application. A central server can optionally be located on a terminal. An application can optionally operate on a central server. At least one function of a central server or an external server can be performed by an application. At least one function of an application can be performed by a central server or an external server. At least one function of a central server can be performed by an external server. A central server can include or utilize quantum computing. A central server can include or utilize a neural network. A central server can include or utilize machine learning technology. As an example, a central server can use machine learning technology or the like to identify at least one pattern that can improve a visual representation.

A central server can aggregate a CSR, a CSO, or a combination thereof, within a service provider, an AV owner/controller, a good supplier, a fleet manager, a logistics provider, a logistics supplier, a map provider, or a combination thereof. A central server can process or facilitate a CSR, a fCSR, a pCSR, a CSO, a fCSO, a pCSO, or a combination thereof, from an individual service provider relating to an individual conveyance industry segment. A central server can compile at least one visual representation to be transmitted to an application.

A CSR, a CSO, all or some of a real time or near real time geographical location of a representative, all or some of a real time or near real time geographical location of a conveyance client, or a combination thereof, can be transmitted from an external server to a central server by way of a link. A CSR, a CSO, all or some of a real time or near real time geographical location of a conveyance client, all or some of a real time or near real time geographical location of a representative, or a combination thereof, can be transmitted from a service provider, an AV owner/controller, a good supplier, a fleet manager, a logistics provider, a logistics supplier, a map provider, or a combination thereof, to a central server by way of a link.

A central server can execute at least one function for a conveyance client one or more of receiving, standardizing, aggregating, filtering, and sorting or the like, a CSO in conjunction with corresponding conveyance data, and securing or obtaining a pCSO. A central server can execute at least one function for a representative and/or an AV, including one or more of receiving, standardizing, aggregating, filtering, and sorting or the like, a CSR in conjunction with corresponding conveyance data, and securing or obtaining a pCSR.

A different geographical location can be used other than a real time or near real time geographical location of a representative when filtering a CSR. A different geographical location can be used other than a real time or near real time geographical location of a conveyance client when filtering a CSO.

A conveyance client preference, a real time or near real time geographical location of a conveyance client, or a combination thereof, can be transmitted to a central server at any time prior to filtering a CSO. A representative preference, a real time or near real time geographical location of a representative, or a combination thereof, can be transmitted to a central server at any time prior to filtering a CSR.

A central server can use an equal weight or an unequal weight for a representative preference when calculating a weighted average to identify a pCSR. A central server can use an equal weight or an unequal weight for a conveyance client preference when calculating a weighted average to identify a pCSO.

When a central server receives a CSR or a CSO, a central server can categorize or pre-filter a CSR or a CSO. A central server can obtain or receive a pre-filtered or a pre-categorized CSR relating to a geographical area. A central server can obtain or receive a pre-filtered or a pre-categorized CSR relating to a level of service. A central server can obtain or receive a pre-filtered or a pre-categorized CSO relating to a geographical area. A central server can obtain or receive a pre-filtered or a pre-categorized CSO relating to level of service. A CSR or a CSO can be pre-filtered or pre-categorized on a central server based on a geographical area. A CSR or a CSO can be pre-filtered or pre-categorized on a central server based on a level of service.

When a central server receives all or some of conveyance service offerings ("CSOs") or all or some of conveyance service requests ("CSRs"), a central server can categorize or pre-filter all or some of CSOs or all or some of CSRs. A central server can obtain or receive all or some of the pre-filtered CSOs, or all or some of the pre-categorized CSRs, relating to a geographical area. A central server can obtain or receive all or some of a pre-filtered CSRs or all or some of pre-categorized CSOs, relating to a level of service. All or some of CSRs or all or some of CSOs can be pre-filtered or pre-categorized on a central server based on a geographical area. All or some of CSRs or all or some of CSOs can be pre-filtered or pre-categorized on a central server based on a level of service. A CSR can be pre-filtered or pre-categorized on an external server or a central server, a CSR can become a fCSR and filtering is not required on a central server. If a CSR is pre-filtered or pre-categorized, a central server does not need to filter a CSR and can identify a pCSR. A CSO can be pre-filtered or pre-categorized on an external server or a central server, a CSO can become a fCSO and filtering is not required on a central server. If a CSO is pre-filtered or pre-categorized, a central server does not need to filter a CSO and can identify a pCSO.

A CSR can be filtered based on a representative preference on a central server after being pre-filtered or pre-categorized. A CSR can be filtered based on a representative preference on a central server after being pre-filtered or pre-categorized on an external server. A CSO can be filtered based on a conveyance client preference on a central server after being pre-filtered or pre-categorized. A CSO can be filtered based on a conveyance client preference on a central server after being pre-filtered or pre-categorized on an external server.

When a central server obtains a pre-filtered CSR, a central server can compare a pre-filtered CSR to a representative preference to identify a fCSR. When a central server obtains a pre-filtered CSO, a central server can compare a pre-filtered CSO to a conveyance client preference to identify a fCSO. If a CSR or a CSO is pre-filtered, then a CSR or a CSO is not filtered. A pre-filtered CSR or a pre-filtered CSO can be perceived or referred to as a fCSR or a fCSO respectively. A central server can filter a CSR or a CSO at least once. A central server can sort or the like, a CSR or a CSO at least once to identify a pCSR or a pCSO. A central server can filter a CSR or a CSO more than once based on a pricing preference and then a service provider preference. A CSR or a CSO can be categorized by a geographical location after being received on a central server. A fCSR can be sorted in an ascending or descending order relating to a weighted average of a representative preference to identify a pCSR. A fCSO can be sorted in an ascending or descending order relating to a weighted average of a conveyance client preference to identify a pCSO.

A pCSR, a fCSR, or a combination thereof, can be identified or updated in real time or near real time as a real time or near real time geographical location of a representative updates or changes. A pCSO, a fCSO, or a combination thereof, can be identified or updated in real time or near real time as a real time or near real time geographical location of a conveyance client updates or changes. A pCSR, a pCSO, a fCSR, a fCSO, a conveyance client preference, a representative preference, a secured pCSR, a secured pCSO, or a combination thereof, can be identified or updated in real time or near real time as traffic information updates or changes.

A central server can secure a pCSR, a fCSR, or a combination thereof, and can communicate directly with an external server or a service provider. A central server can secure a pCSO, a fCSO, or a combination thereof, and can communicate directly with an external server or a service provider. A secured pCSR or a secured pCSO can be sent to one or more of a service provider, an external server, a good supplier, a fleet manager, a logistics provider, a logistics supplier, a representative, a client, a map provider, or a combination thereof.

A central server, an external server, an application, a terminal, a link, or a combination thereof, can be combined or integrated. A central server can manage or process a CSO the same as a CSR. A central server can manage or process a CSR the same as a CSO. A CSO or a CSR can be pre-filtered or pre-categorized on a central server, an external server, an application, or a combination thereof.
System: The following are illustrative, non-limiting examples and embodiments of a "system" as used in the present disclosure:
A system can be but is not limited to a collection of elements that can secure a preferred conveyance service request ("pCSR") or a preferred conveyance service offering ("pCSO"). A system can be a collection of elements, where an element can be associated or integrated with another element. The collection of elements or individual elements can be in the same or different locations. A system can be a computer program product.

In some embodiments, a conveyance client, an application, a representative, a terminal, a link, a central server, an external server, a service provider, a good supplier, a map provider, an AV, a visual representation, a dynamic map, a heat map, a real time or near real time heat map, a historical heat map, a predictive heat map, a representative preference, a conveyance client preference, conveyance data, a conveyance service request ("CSR"), a filtered conveyance service request ("fCSR"), a pCSR, a conveyance service offering ("CSO"), a filtered conveyance service offering ("fCSO"), and a pCSO can all be in a similar geographical location, or spread out in a distant location, including a cross-border location.

A system can be used to evaluate and secure a pCSR or a pCSO relating to a service provider or the like operating in at least one conveyance industry segment. A system can be updated or refreshed in real time or near real time. A system can perform at least one function in real time or near real time.
Method: The following are illustrative, non-limiting examples and embodiments of a "method" as used in the present disclosure:
A method can be a collection of elements that can secure a preferred conveyance service request ("pCSR") or a preferred conveyance service offering ("pCSO"). A method can be a collection of elements in which an element can be associated or integrated with another element. The collection of elements or individual elements can be in the same or different locations. A method can be a computer program product.

In some embodiments, a conveyance client, an application, a representative, a terminal, a link, a central server, an external server, a service provider, a good supplier, a map provider, an AV, a visual representation, a dynamic map, a heat map, a real time or near real time heat map, a historical heat map, a predictive heat map, a representative preference, a conveyance client preference, conveyance data, a conveyance service request ("CSR"), a filtered conveyance service request ("fCSR"), a pCSR, a conveyance service offering ("CSO"), a filtered conveyance service offering ("fCSO"), and a pCSO can all be in a similar geographical location, or spread out in a distant location, including a cross-border location.

A method can be used to evaluate and secure a pCSR or a pCSO relating to a service provider or the like operating in at least one conveyance industry segment. A method can be updated or refreshed in real time or near real time. A method can perform at least one function in real time or near real time.
External Server: The following are illustrative, non-limiting examples and embodiments of a "external server" as used in the present disclosure. As previously noted, "external server" may be one or more than one external server.

An external server can be a software and/or a hardware that can facilitate at least one operation or at least one function to secure a preferred conveyance service request ("pCSR") or a preferred conveyance service offering ("pCSO"). An external server can be a software and/or a hardware that can be utilized or operated by a conveyance client, a representative, a service provider, a good supplier, a fleet manager, an AV owner/controller, a logistics provider, a logistics supplier, a map provider, a third party, or a combination thereof. An external server can be a software and/or a hardware, for example, a computer application, a computer program, an API, a smartphone application, a website, a web application, a smartphone application, a cloud application, a service, or the like. An external server can be a software and/or a hardware that can facilitate at least one operation or at least one function to secure a CSR, a fCSR, a pCSR, a CSO, a fCSO, a pCSO, or a combination thereof.

An external server can communicate information or data including all or some of a pCSR in conjunction with corresponding conveyance data, all or some of a filtered conveyance service request ("fCSR") in conjunction with corresponding conveyance data, all or some of a conveyance service request ("CSR") in conjunction with corresponding conveyance data, all or some of a pCSO in conjunction with corresponding conveyance data, all or some of a filtered conveyance service offering ("fCSO") in conjunction with corresponding conveyance data, all or some of a conveyance service offering ("CSO") in conjunction with corresponding conveyance data, all or some of subsequent or additional plurality of filtered conveyance service offerings ("fCSOs") in conjunction with corresponding conveyance data, all or some of subsequent or additional a pCSO in conjunction with corresponding conveyance data, a beginning service geographical location, an ending service geographical location, all or some of a real time or near real time geographical location of a representative, all or some of a real time or near real time geographical location of a conveyance client, a representative preference, a conveyance client preference, a secured pCSR, or a secured pCSO. An external server can communicate all or some of the information or data with a central server, another external server, an application, or a combination thereof.

All or some of conveyance data relating to a CSR or a CSO can be sourced or provided by an external server that can be associated with a service provider, a good supplier, a fleet manager, a logistics provider, a logistics supplier, an AV owner/controller, a map provider, a third party, or a combination thereof. All or some of conveyance data relating to an autonomous vehicle ("AV") can be sourced or provided by an external server that can also have or provide a CSR in conjunction with corresponding conveyance data, a CSO in conjunction with corresponding conveyance data, or a combination thereof. All or some of conveyance data relating to an AV can be sourced or provided by an external server that does not have or does not provide a CSR with corresponding conveyance data, a CSO in conjunction with corresponding conveyance data, or a combination thereof. An AV, all or some of conveyance data relating to an AV, or a combination thereof, can be sourced or provided by a third party.

An external server can include but is not limited to at least one source of a CSR in conjunction with corresponding conveyance data, a CSO in conjunction with corresponding conveyance data, or a combination thereof. An external server can be at least one source of a real time or near real time CSR. An external server can be a source of a real time or near real time CSO. An external server can be a computer network system. An external server can include but is not limited to a computer processor, a computer readable memory, and a network interface. An external server can encompass hardware and/or software alone or in a combination.

All or some of conveyance data relating to a CSR or a CSO can be transmitted to or communicated with a central server, an external server, an application, an application that can be associated with an AV, a terminal, an AV owner/controller, a service provider, a good supplier, a fleet manager, a logistics provider, a logistics supplier, a map provider, a third party, a conveyance client, a representative, or a combination thereof.

A pCSR or a pCSO can be secured or obtained through or by a central server, an application, an external server, a terminal, a link, or a combination thereof. An external server can have or be associated with at least one database based on a data point. An external server can have or be associated with at least one database for a CSR, a CSO, or a combination thereof. An external server can have or be associated with a database based on a conveyance client preference, a representative preference, or a combination thereof. An external server can have or be associated with at least one database for at least one conveyance industry segment. An external server can have or be associated with a conveyance industry segment.

An external server can be but is not limited to a server that can connect to or communicate with a central server, an application, or a combination thereof, by way of a link. An external server can transmit in real time or near real time one or more of a CSR in conjunction with conveyance data, a CSO in conjunction with conveyance data, or a combination thereof, to a central server or an application by way of a link. An external server can encompass different hardware and/or software alone or in a combination. An external server can include or connect to at least one database. A computer readable memory of an external server can be a database that an external server can connect to.

An external server can have or be associated with one or more of a central server, an external server, a link, a terminal, a good supplier, an AV, an application, a service provider, a good supplier server, a fleet manager server, an AV owner/controller server, a logistics provider, a logistics supplier, a map provider, a third party, a conveyance client, a representative, or a combination thereof. An external server can optionally be perceived or referred to as a service provider server, a good supplier server, a fleet manager server, an AV owner/controller server, a logistics provider server, a logistics supplier server, a map provider server, a third party server, or the like.

An external server can be a server in an individual geographical location or an additional geographical location. An external server can, but need not, relate to a single Internet location. Preferably, an external server can be a secure server. An external service can be made secure using hardware and/or software that is commercially available. An external server can include encryption software such that communications entering or exiting an external server are encrypted. Encryption hardware and/or software are commercially available.

An external server can expose or be accessed through at least one API relating to a service provider, a good supplier, an AV owner/controller, a fleet manager, a logistics provider, a logistics supplier, a map provider, a third party, or the like. An external server can be associated with an Application Program Interface (API) or the like. An external server Application Program Interface (API) can be used to facilitate communication between one or more of a central server, an external server, an application, a terminal, a conveyance client, a representative, a map provider, a third party, a service provider, a good supplier, an AV owner/controller, a fleet manager, a logistics provider, a logistics supplier, or a combination thereof. An external server can provide a CSR in conjunction with conveyance data, a CSO in conjunction with conveyance data, or a combination thereof, relating to a service provider. An external server can be updated or refreshed in real time or near real time. An external server can perform at least one function in real time or near real time.

An external server being a source of a CSR in conjunction with corresponding conveyance data, a CSO in conjunction with corresponding conveyance data, or a combination thereof, can be associated with an individual service provider, an individual good supplier, an individual fleet manager, an individual owner or an individual controller of an AV, an individual logistics provider, an individual logistics supplier, an individual map provider, an individual third party, an individual representative, an individual conveyance client, or the like.

An individual service provider or an individual map provider can be associated with an external server that can use a database based on a data point. An individual service provider or an individual map provider can be associated with an external server that can use a database for a CSR, a CSO, or a combination thereof. An individual service provider or an individual map provider can be associated with an external server that can use or have a database based on a conveyance client preference or a representative preference. An individual service provider or an individual map provider can be associated with an external server that uses a database for a conveyance industry segment. An individual service provider or an individual map provider can have, for example, one or more external server relating to a ride-hail industry segment and another external server relating to a freight industry segment. An individual service provider or an individual map provider can use an external server for a CSR, a CSO, or a combination thereof.

An external server can operate on a central server. An external server can include a distinct server operably linked in the same or a different geographical location. An external server can optionally be perceived or referred to as a peer-to-peer network. An external server can transmit a CSR, a CSO, or a combination thereof, that can be pre-standardized to or with a central server or an application. An external server can be a server that can connect to or communicate with an application, a central server, or a combination thereof, by way of a link. At least one function of an external server can be performed by a central server.

A CSR can be filtered based on a representative preference on a central server, an external server, an application, or a combination thereof, after being pre-filtered or pre-categorized on a central server, an external server, or an application, or a combination thereof. A CSO can be filtered based on a conveyance client preference on a central server, an external server, an application, or a combination thereof, after being pre-filtered or pre-categorized on a central server, an external server, or an application, or a combination thereof.

An external server can pre-filter or pre-categorize a CSR, a fCSR, a pCSR, a CSO, a fCSO, a pCSO, or a combination thereof. An external server can pre-filter or pre-categorize a CSR, a fCSR, a pCSR, a CSO, a fCSO, a pCSO, or a combination thereof, and a central server or an application does not need to filter or identify as preferred. An external server can pre-filter or pre-categorize a CSR, a fCSR, a pCSR, a CSO, a fCSO, a pCSO, or a combination thereof, relating to a geographical area. An external server can pre-filter or pre-categorize a CSR, a fCSR, a pCSR, a CSO, a fCSO, a pCSO, or a combination thereof, relating to a level of service preference.

An external server can filter and identify one or more of all or some of a pCSR in conjunction with corresponding conveyance data, all or some of a fCSR in conjunction with corresponding conveyance data, all or some of a CSR in conjunction with corresponding conveyance data, all or some of a pCSO in conjunction with corresponding conveyance data, all or some of a fCSO in conjunction with corresponding conveyance data, all or some of a CSO in conjunction with corresponding conveyance data, all or some of subsequent or additional plurality of fCSOs in conjunction with corresponding conveyance data, all or some of subsequent or additional a pCSO in conjunction with corresponding conveyance data, a beginning service geographical location, an ending service geographical location, all or some of a real time or near real time geographical location of a representative, all or some of a real time or near real time geographical location of a conveyance client, a representative preference, a conveyance client preference, a secured pCSR, a secured pCSO, or a combination thereof, together or separately.

An external server, a central server, an application, a terminal, a link, or a combination thereof, can be combined or integrated. An external server, a central server, an application, a terminal, a link, or a combination thereof, can be combined or integrated on a smartphone. An external server can manage or process a CSO the same or similar as a CSR. An external server can manage or process a CSR the same or similar as a CSO.

An external server can secure or obtain a pCSR, a fCSR, a CSR, a pCSO, a fCSO, a CSO, or a combination thereof, and can communicate directly or indirectly with a central server, an external server, an application, an AV, an AV owner/controller, a service provider, a good supplier, a fleet manager, a logistics provider, a logistics supplier, a map provider, a third party, a representative, a conveyance client, or a combination thereof.

A pCSR or a pCSO can be secured by a central server or an external server through an application. A pCSR or a pCSO can be secured and transmitted between an application and a central server by way of a link. A pCSR or a pCSO can be secured and transmitted between an application and an external server by way of a link. A pCSR or a pCSO can be secured and transmitted between an application and an external server through a central server by way of a link. An external server can connect to or communicate with two central servers belonging to two different entities. A secured pCSR, a secured pCSO, or a combination thereof, can be transmitted from an application to an external server or a central server through a link.
Conveyance Data: The following are illustrative, non-limiting examples and embodiments of "conveyance data" as used in the present disclosure:
Conveyance data can be information or data that can be used to facilitate at least one operation or at least one function to secure a preferred conveyance service request ("pCSR") or a preferred conveyance service offering ("pCSO"). Conveyance data can be information or data that can for example be utilized or managed by a representative, a conveyance client, a service provider, a good supplier, an AV owner/controller, a fleet manager, a logistics provider, a logistics supplier, a map provider, a third party, or a combination thereof.

Conveyance data can be for example data or information corresponding to a past metric, a current metric, a future metric, or a combination thereof, relating to a request or offering for transporting a person, a good, an article, a thing, or a combination thereof from a geographical location to another geographical location.

Conveyance data relating to a representative, a conveyance service request ("CSR"), a real time or near real time geographical location of a representative, or a combination thereof, can be sourced or provided from an external server, a central server, an application, or the like. Conveyance data relating to a representative, a CSR, a real time or near real time geographical location of a representative, or a combination thereof, can be sourced or provided by a service provider, a good supplier, an AV owner/controller, a fleet manager, a logistics provider, a logistics supplier, a map provider, a third party, a representative, or the like. Conveyance data relating to a representative, a CSR, a real time or near real time geographical location of a representative, or a combination thereof, can be generated by an external server, a central server, an application, or the like. Conveyance data relating to a representative, a CSR, a geographical location of a representative, or a combination thereof, can be generated by a service provider, a good supplier, an AV owner/controller, a fleet manager, a logistics provider, a logistics supplier, a map provider, a third party, a representative, or the like.

Conveyance data relating to a conveyance client, a conveyance service offering ("CSO"), a real time or near real time geographical location of a conveyance client, or a combination thereof, can be sourced or provided from an external server, a central server, an application, or the like. Conveyance data relating to a conveyance client, a CSO, a real time or near real time geographical location of a client, or a combination thereof, can be sourced or provided by a service provider, a good supplier, an AV owner/controller, a fleet manager, a logistics provider, a logistics supplier, a map provider, a third party, a client, or the like. Conveyance data relating to a conveyance client, a CSO, a real time or near real time geographical location of a conveyance client, or a combination thereof, can be generated by an external server, a central server, an application, or the like. Conveyance data relating to a conveyance client, a CSO, a real time or near real time geographical location of a conveyance client, or a combination thereof, can be generated by a service provider, a good supplier, an AV owner/controller, a fleet manager, a logistics provider, a logistics supplier, a map provider, a third party, a conveyance client, or the like.

Conveyance data can be sourced, provided, or generated by a technology, a software, a hardware, or a combination thereof, relating to a representative or a conveyance client. All or some of the conveyance data relating to a CSR or a CSO can be used by a service provider, a good supplier, a fleet manager, an AV owner/controller, a logistics provider, a logistics supplier, a map provider, a third party, a conveyance client, a representative, or a combination thereof, to analyze or evaluate and then secure or obtain a pCSR or a pCSO.

Conveyance data can be but is not limited to any data or information corresponding to a CSR, a fCSR, a pCSR, or a combination thereof, that can be transmitted between an external server, a central server, an application, a terminal, or a combination thereof, by way of a link. Conveyance data can be but is not limited to any data or information corresponding to a CSO, a fCSO, a pCSO, or a combination thereof, that can be transmitted between an external server, a central server, an application, a terminal, or a combination thereof, by way of a link. Conveyance data can be used by a representative, a conveyance client, or a combination thereof, to analyze or evaluate and then secure or obtain a conveyance service.

Conveyance data can be transmitted from an external server to a central server, an application, an external server, or a combination thereof. Conveyance data retrieved from an external server can be cached on a central server, an application, an external server, or a combination thereof, to provide enhanced performance and better avoid a relevant limitation one or more of a central server limitation, an external server limitation, a service provider limitation, a link limitation, and any involved service provider limitation.

Conveyance data can be stored or cached in a database. Conveyance data can be stored or cached in a database table. Conveyance data can be updated or refreshed in real time or near real time. Conveyance data can correspond to a pCSR, a fCSR, a CSR, or a combination thereof, relating to a service provider, a good supplier, an AV owner/controller, a fleet manager, a logistics provider, a logistics supplier, a map provider, a third party, a conveyance client, a representative, or a combination thereof. Conveyance data can correspond to a pCSO, a fCSO, a CSO, or a combination thereof, relating to a service provider, a good supplier, an AV owner/controller, a fleet manager, a logistics provider, a logistics supplier, a map provider, a third party, a conveyance client, a representative, or a combination thereof.

All or some of conveyance data can be but is not limited to any data or information relating to a CSR, a fCSR, a pCSR, or a combination thereof, that can be used to filter a CSR into a fCSR. All or some of conveyance data can be but is not limited to any data or information relating to a CSO, a fCSO, a pCSO, or a combination thereof, that can be used to filter a CSO into a fCSO. All or some of conveyance data can be but is not limited to any data or information relating to a CSR, a fCSR, a pCSR, or a combination thereof, that can be used to identify a pCSR from a fCSR. All or some of conveyance data can be but is not limited to any data or information relating to a CSO, a fCSO, a pCSO, or a combination thereof, that can be used to identify a pCSO from a fCSO.

All or some of conveyance data can be any data or information relating to a CSR, a fCSR, a pCSR, a CSO, a fCSO, a pCSO, or a combination thereof, can be stored, aggregated, standardized, filtered, identified as preferred, or the like. All or some of conveyance data can be any data or information relating to a CSR, a fCSR, a pCSR, a CSO, a fCSO, a pCSO, or a combination thereof, can be pre-filtered or pre-categorized. All or some of the conveyance data relating to a CSR, a fCSR, a pCSR, a CSO, a fCSO, a pCSO, or a combination thereof, can be pre-filtered or pre-categorized based on all or some of a real time or near real time geographical location of a representative or a conveyance client, respectively. Conveyance data can be for example used by a central server, an external server, an application, a representative, a conveyance client, or a combination thereof, to analyze or evaluate and then secure or obtain a pCSR or a pCSO. Conveyance data can include a statistical variable of a fCSR request or a fCSO. Conveyance data can include a statistical variable of a pCSR or a pCSO.

Conveyance data can be optimized to identify a pCSR or a pCSO. Conveyance data can include but is not limited to optimization data that can come from an AV, an AV sensor, a sensor data, a third party provider, a mapping provider, a remote server, an external server, a service provider, a conveyance client, or a representative. Conveyance data can for example, include but is not limited to, demographic data relating to a geographical area, a CSR, a CSO, all or some of conveyance data, all or some of conveyance data relating to an AV, a conveyance client, a representative, an AV owner/controller, a service provider, a good supplier, a fleet manager, a logistics provider, a logistics supplier, a map provider, a third party, or the like.

Conveyance data can be in real time or near real time and may include but is not limited to one or more of a beginning service geographical location, a ending service geographical location, pricing information, elevated pricing information, a representative preference, a conveyance client preference, a distance parameter, an estimated time of arrival, a time to destination, a conveyance client geographical location, a conveyance client review, a conveyance client rating, a conveyance client detail, a conveyance service detail, a conveyance service route, a preferred conveyance client, a sensor data, a representative geographical location, a representative review, a representative rating, a representative detail, an AV geographical location, an AV review, an AV rating, an AV detail, a preferred AV, a route planning preference, a fuel economy preference, a battery longevity preference, a vehicle capacity preference, a vehicle diagnostic preference, a conveyance data preference, a service provider geographical location, a service provider review, a service provider rating, a service provider detail, a preferred service provider, a good supplier geographical location, a good supplier review, a good supplier rating, a good supplier detail, a preferred good supplier, an AV owner/controller geographical location, an AV owner/controller review, an AV owner/controller rating, an AV owner/controller detail, a preferred AV owner/controller, a fleet manager geographical location, a fleet manager review, a fleet manager rating, a fleet manager detail, a preferred fleet manager, a logistics provider geographical location, a logistics provider review, a logistics provider rating, a logistics provider detail, a preferred logistics provider, a logistics supplier geographical location, a logistics supplier review, a logistics supplier rating, a logistics supplier detail, a preferred logistics supplier, a conveyance industry segment detail, a preferred conveyance industry segment, a good detail, an item detail, a type of vehicle detail, a vehicle detail, a measurement of one or more statistical variable, a level of service detail, fuel consumption, battery level, vehicle diagnostic, vehicle capacity, or a combination thereof.

All or some of conveyance data can be communicated with an application, a terminal, a central server, an external server, a link, or a combination thereof, that can be combined or integrated. Conveyance data can include for example a vehicle detail or an AV detail, which can be used to identify a preferred vehicle type, a preferred vehicle service, or a combination thereof. Conveyance data relating to a CSO or a CSR can be sourced or provided by an external server relating to an AV owner/controller, a service provider, a good supplier, a fleet manager, a logistics provider, a logistics supplier, a map provider, a third party, or the like.

Conveyance data can be generated or provided from a central server, an application, an external server, a terminal, or a combination thereof. Conveyance data relating to a statistical variable can be used to compile a heat map. Conveyance data relating to a statistical variable can comprise a measurement of an of conveyance service availability, pricing, elevated pricing, CSR density, fCSR density, pCSR density, CSO density, fCSO density, pCSO density, level of service density, a conveyance service distance, an estimated time of arrival, preferred conveyance client density, preferred good supplier density, a preferred conveyance industry segment, conveyance industry segment density, representative density, conveyance client density, service provider density, good supplier density, or a combination thereof.

All or some of the conveyance data relating to a CSO or a CSR, can include optimization data that can be provided by a third party map provider to be utilized with route planning and identifying a pCSO or a pCSR. Conveyance data can relate to the battery level of a device or a terminal belonging to a conveyance client. Conveyance data can include milestones, awards, incentives, number of rides completed, monetary earnings, financial information, or scheduling information.

A sensor data relating to an AV can be communicated to another AV, a service provider, a good supplier, an AV owner/controller, a fleet manager, a logistics provider, a logistics supplier, a map provider, a third party, a conveyance client, a representative, or a combination thereof. A sensor data can be used to communicate a status of an AV. A real time or near real time geographical location of an AV can be based on or related to a sensor data. Conveyance data relating to an AV such as a real time or near real time geographical location of an AV can be provided by an external server. All or some of conveyance data provided by an AV can be sourced from at least one various type of input such as a sensor, a transceiver, a receiver, an interface, an application, a terminal, or the like.
Conveyance Service Request (CSR): The following are illustrative, non-limiting examples and embodiments of a "conveyance service request (CSR)" as used in the present disclosure:
A conveyance service request ("CSR") can be for example a request from a conveyance client or an entity for the transportation of a person, a good, an article, a thing, or a combination thereof, from a geographical location to another geographical location. Once, for example, a beginning service geographical location, an ending service geographical location, or a combination thereof, is inputted or provided into an application, a central server, or an external server, a CSR relating to a client can be generated. When a CSR is considered, CSR in conjunction with corresponding conveyance data can also be considered.

A CSR in conjunction with corresponding conveyance data can be sourced or provided from an external server, a service provider, a good supplier, or a fleet manager, a map provider, a third party, or the like. A CSR can be stored or cached in a computer- readable memory and/or a database of a central server. A CSR can relate to at least one conveyance industry segment. A CSR can relate to a service provider, a good supplier, a fleet manager, an AV owner/controller, a logistics provider, a logistics supplier, a map provider, a third party, a representative, a conveyance client, or a combination thereof.

All or some of a CSR can have or be associated with corresponding conveyance data. All or some of a CSR can have or be associated with intrinsic conveyance data that can be stored in a database. All or some of a CSR can be associated with or inherently have associated conveyance data that can be used to filter and identify a preferred conveyance service request ("pCSR") to be secured or obtained. A CSR can be filtered once or more than once.

A CSR can be updated or refreshed in real time or near real time. A CSR can be pre-filtered or pre-categorized on a central server, an external server, an application, or a combination thereof. A CSR can be a filtered conveyance service request ("fCSR"), a pCSR, or a combination thereof, relating to a representative preference. A CSR can become a fCSR, a pCSR, or a combination thereof, based on a representative preference inputted or provided by a representative, a service provider, a good supplier, a fleet manager, a logistics provider, a logistics supplier, a map provider, a third party, or the like.

As an example, a CSR can be a ride-hail service request, a ride-share service request, a car-share service request, a peer-to-peer conveyance service request, a transportation service request, a person delivery service request, a taxi service request, a shuttle service request, a good delivery service request, an item delivery service request, a medical service and delivery request, a food delivery service request, a courier delivery service request, a freight delivery service request, an animal delivery request, a delivery service request, or a combination thereof.

A CSR can be perceived or referred to as a fCSR or pCSR. A CSR can be identified or referred to as a fCSR or a pCSR for or with a representative, a service provider, a good supplier, a fleet manager, a logistics provider, a logistics supplier, a map provider, a third party, or a combination thereof. A CSR can include a waypoint. A CSR can include a waypoint where a conveyance client can walk to a designated area to be picked up for a conveyance service. If a CSR is secured, that same secured CSR can be referred to or identified as a pCSR.

A CSR can be pre-scheduled. A thing to be conveyed can include a personal item such as keys or documents. A CSR can include special request information. A CSR can be stored or cached in a computer readable memory and/or a database of an application. A CSR can relate to an individual conveyance industry segment. A CSR can relate to an individual service provider, an individual map provider, an individual third party, an individual good supplier, an individual fleet manager, or the like. A CSR can be a pre-filtered CSR. A plurality of conveyance service requests ("CSRs") can be a single CSR. A CSR can be pre-filtered or pre-categorized on a central server based on a geographical location.
Filtered Conveyance Service Request (fCSR): The following are illustrative, non-limiting examples and embodiments of a "filtered conveyance service request (fCSR)" as used in the present disclosure:

A filtered conveyance service request ("fCSR") can be a conveyance service request ("CSR") that can be filtered with a representative preference, a real time or near real time geographical location of a representative, or a combination thereof. When a fCSR is considered, a fCSR in conjunction with corresponding conveyance data can also be considered. A fCSR can be updated or refreshed in real time or near real time.

A fCSR can be stored or cached in a computer readable memory and/or a database of a central server. When a representative preference is updated, modified, added, removed, and/or refreshed, a new set of a fCSR can be generated. A fCSR can relate to a conveyance industry segment. A fCSR can relate to a service provider, a good supplier, a fleet manager, an AV owner/controller, a logistics provider, a logistics supplier, a map provider, a third party, a representative, a conveyance client, or a combination thereof.

All or some of a fCSR can have or be associated with corresponding conveyance data. All or some of a fCSR can have or be associated with intrinsic conveyance data that can be stored in a database. All or some of a fCSR can be associated with or inherently have associated conveyance data that can be used to identify a preferred conveyance service request ("pCSR") to be secured. A fCSR can be pre-filtered or pre-categorized on a central server, an external server, an application, or a combination thereof. A fCSR can be filtered more than once. A fCSR can be a CSR that matches or satisfies a representative preference. A fCSR can become a pCSR based on a representative preference inputted or provided by a representative, a service provider, a good supplier, a fleet manager, a logistics provider, a logistics supplier, a map provider, a third party, or the like.

A fCSR can be displayed on an application. A fCSR can be displayed on a geographical map of a visual representation. A fCSR can relate to an individual conveyance industry segment. A fCSR can relate to an individual service provider, an individual map provider, an individual third party, an individual good supplier, or an individual fleet manager. If a representative secures a fCSR, that same a secured fCSR can be referred to or identified as a pCSR. A fCSR can be a pre-filtered CSR. A fCSR can be perceived or referred to as a CSR. A plurality of filtered conveyance service requests ("fCSRs") can be a single fCSR.
Preferred Conveyance Service Request (pCSR): The following are illustrative, non-limiting examples and embodiments of a "preferred conveyance service request (pCSR)" as used in the present disclosure:
A preferred conveyance service request ("pCSR") can be for example a request for transporting one or more of a person, a good, a thing, an article, or a combination thereof, from a geographical location to another geographical location that can be identified from a filtered conveyance service request ("fCSR"). A pCSR can be for example a request that a central server, a representative, an application, a good supplier, a fleet manager, a logistics provider, a logistics supplier, a map provider, a third party, or a combination thereof, identifies as preferred. When a pCSR is considered, a pCSR in conjunction with corresponding conveyance data can also be considered.

A pCSR can be stored or cached in a computer readable memory and/or a database of a central server. A pCSR can be originally sourced or provided by an external server, a service provider, a good supplier, a fleet manager, a map provider, a third party, or the like. A pCSR can be a conveyance service request ("CSR") or a fCSR that matches or satisfies a representative preference. A fCSR can be identified as preferred by a representative, an application, an AV owner/controller, an AV, a service provider, a good supplier, a fleet manager, a logistics provider, a logistics supplier, a map provider, a third party, or a combination thereof, and then a fCSR can become a pCSR.

A pCSR can be updated or changed in real time or near real time as a real time or near real time geographical location of a representative changes or updates. A pCSR can relate to a conveyance industry segment. A pCSR can relate to a service provider, a good supplier, a fleet manager, a logistics provider, a logistics supplier, a map provider, a third party, or a combination thereof. A pCSR can be updated or refreshed in real time or near real time. A pCSR can be identified as preferred with the highest weighted average of a representative preference. When a representative preference is updated, modified, added, removed, and/or refreshed, a new set of a pCSR can be generated or identified. A CSR can be filtered in real time or near real time by using a representative preference to create a set of a fCSR. A fCSR can be sorted in real time or near real time relating to a weighted average of a representative preference to identify a pCSR. A pCSR can be identified from a fCSR that has the highest weighted average of a representative preference. A representative preference can have an equal weight or an unequal weight when using a weighted average to identify a pCSR. A pCSR can be perceived/referred to as a CSR or a fCSR. More than one pCSR can be secured concurrently.

A pCSR can be updated in real time or near real time as traffic information changes or updates. A different geographical location can be used other than a real time or near real time geographical location of a representative or the like, when filtering a CSR, to identify a pCSR. An application can secure a pCSR. A pCSR can relate to an individual service provider, an individual map provider, an individual third party, an individual good supplier, an individual fleet manager, or the like.

A pCSR can be visually identifiable from a fCSR displayed on a visual representation. A pCSR can be displayed on a geographical map of a visual representation. A pCSR can be displayed on an application. A pCSR can relate to an individual conveyance industry segment. A central server, an application, a representative, or a combination thereof, can secure a pCSR for or with a representative. A pCSR can be pre-filtered or pre-categorized on a central server, an external server, an application, or a combination thereof.
Conveyance Service Offering: The following are illustrative, non-limiting examples and embodiments of a "conveyance service offering (CSO)" as used in the present disclosure.

A conveyance service offering ("CSO") can be for example an offering from a representative, an AV, a service provider, or the like for the transportation of one or more of a person, a good, an article, a thing, or a combination thereof, from a geographical location to another geographical location. Once a beginning service geographical location, an ending service geographical location, pricing information, or a combination thereof, is known, a CSO relating to a representative or an AV can be generated. When a CSO is considered, CSO in conjunction with corresponding conveyance data can also be considered.

All or some of a CSO can have or be associated with corresponding conveyance data. All or some of a CSO can have or be associated with intrinsic conveyance data that can be stored in a database. All or some of a CSO can be associated with or inherently have associated conveyance data that can be used to filter and identify a preferred conveyance service offering ("pCSO") to be secured.

A CSO can be sourced or provided from one or more of an external server, a service provider, a good supplier, a fleet manager, a map provider, a third party, or the like. A CSO can be stored or cached in a computer readable memory and/or a database of a central server. A CSO can relate to a conveyance industry segment. A CSO can relate to a service provider, a good supplier, a fleet manager, an AV owner/controller, a logistics provider, a logistics supplier, a map provider, a third party, a representative, a conveyance client, or a combination thereof.

A CSO can be updated or refreshed in real time or near real time. A CSO can be pre-filtered or pre-categorized on a central server, an external server, an application, or a combination thereof. A CSO can be a filtered conveyance service offering ("fCSO"), a pCSO, or a combination thereof, relating to a conveyance client preference. A CSO can become a fCSO, a pCSO, or a combination thereof, based on a conveyance client preference inputted or provided by a conveyance client. A CSO can be filtered once or more than once.

As an example, a CSO can be a ride-hail service offering, a ride-share service offering, a car-share service offering, a peer-to-peer conveyance service offering, a transportation service offering, a person delivery service offering, a taxi service offering, a shuttle service offering, a good delivery service offering, an item delivery service offering, a medical service and delivery offering, a food delivery service offering, a courier delivery service offering, a freight delivery service offering, an animal delivery service offering, a delivery service offering, or a combination thereof.

A CSO can be perceived or referred to as a fCSO or a pCSO. A CSO can be identified or referred to as a fCSO or a pCSO for or with a conveyance client. A CSO can include a waypoint. A CSO can include a waypoint where a conveyance client can walk to a designated area to be picked up for a conveyance service. If a CSO is secured, that same a secured CSO can be referred to or identified as a pCSO. A CSO can be pre-scheduled. A thing to be conveyed can include a personal item such as a clothing item or a purse. A CSO can include special offering information. A CSO can relate to an individual conveyance industry segment. A CSO offering can relate to an individual service provider, an individual map provider, an individual third party, an individual good supplier, an individual fleet manager, or the like. A CSO can be a pre-CSO. A plurality of conveyance service offerings ("CSOs") can be a single CSO. A CSO can be pre-filtered or pre-categorized on a central server based on a geographical location.
Filtered Conveyance Service Offering: The following are illustrative, non-limiting examples of a "filtered conveyance service offering" as used in the present disclosure.

A filtered conveyance service offering ("fCSO") can be a conveyance service offering ("CSO") that can be filtered with a conveyance client preference, a real time or near real time geographical location of a conveyance client, or a combination thereof. When a fCSO is considered, a fCSO in conjunction with corresponding conveyance data can also be considered. All or some of a fCSO can have or be associated with corresponding conveyance data. All or some of a fCSO can have or be associated with intrinsic conveyance data that can be stored in a database. All or some of a fCSO can be associated with or inherently have associated conveyance data that can be used to identify a preferred conveyance service offering ("pCSO") to be secured.

A fCSO can be stored or cached in a computer readable memory and/or a database of a central server. When a conveyance client preference is updated, modified, added, removed, and/or refreshed, a new set of a fCSO can be generated. A fCSO can relate to a conveyance industry segment. A fCSO can relate to a service provider, a good supplier, a fleet manager, an AV owner/controller, a logistics provider, a logistics supplier, a map provider, a third party, a representative, a conveyance client, or a combination thereof.

A fCSO can be updated or refreshed in real time or near real time. A fCSO can be pre-filtered or pre-categorized on a central server, an external server, an application, or a combination thereof. A fCSO can be filtered more than once. A fCSO can be a CSO that matches or satisfies a conveyance client preference. A fCSO can become a pCSO based on a conveyance client preference inputted or provided by a conveyance client.

A fCSO can be displayed on an application. A fCSO can be displayed on a geographical map of a visual representation. A fCSO can relate to an individual conveyance industry segment. A fCSO can relate to an individual service provider, an individual map provider, an individual third party, an individual good supplier, an individual fleet manager, or the like. If a conveyance client secures a fCSO, that same a secured fCSO can be referred to or identified as a pCSO. A fCSO can be a pre-filtered CSO. A fCSO can be perceived or referred to as a CSO. A plurality of filtered conveyance service offerings ("fCSOs") can be a single fCSO.
Preferred Conveyance Service Offering: The following are illustrative, non-limiting examples of a "preferred conveyance service offering" as used in the present disclosure.

A preferred conveyance service offering ("pCSO") can be for example an offering for transporting one or more of a person, a good, a thing, an article, or a combination thereof, from a geographical location to another geographical location that can be identified from a filtered conveyance service offering ("fCSO"). A pCSO can be for example an offering, including a conveyance client, a central server, an application, a good supplier, a fleet manager, a logistics provider, a logistics supplier, a map provider, a third party, or a combination thereof, identifies as preferred. When a pCSO is considered, a pCSO in conjunction with corresponding conveyance data can also be considered.

A pCSO can be stored or cached in a computer-readable memory and/or a database of a central server. A pCSO can be originally sourced or provided by an external server, a service provider, a good supplier, a fleet manager, a map provider, a third party, or the like. pCSO can be a conveyance service offering ("CSO") or a fCSO that can match or satisfy a conveyance client preference. A fCSO can be identified as preferred by a conveyance client, a service provider, a good supplier, a fleet manager, a logistics provider, a logistics supplier, a map provider, a third party, or a combination thereof, and then a fCSO can become a pCSO.

A pCSO can be updated or changed in real time or near real time as a real time or near real time geographical location of a conveyance client changes or updates. A pCSO can relate to a conveyance industry segment. A pCSO can relate to a service provider, a good supplier, a fleet manager, a logistics provider, a logistics supplier, a map provider, a third party, or a combination thereof. A pCSO can be updated or refreshed in real time or near real time. A pCSO can be identified as preferred with the highest weighted average of a conveyance client preference. When a conveyance client preference is updated, modified, added, removed, and/or refreshed, a new set of a pCSO can be generated or identified.

A CSO can be filtered in real time or near real time by using to a conveyance client preference to create a set of a fCSO. A fCSO can be sorted in real time or near real time relating to a weighted average of a conveyance client preference to identify pCSO. A pCSO can be identified from a fCSO that has the highest weighted average of a conveyance client preference. A conveyance client preference can have an equal weight or an unequal weight when using a weighted average to identify a pCSO. A pCSO can be perceived/referred to as a CSO or fCSO. More than one representative or more than one AV can be secured for an individual pCSO.

A pCSO can be updated in real time or near real time as traffic information changes or updates. A different geographical location can be used other than a real time or near real time geographical location of a conveyance client, when filtering a CSO, to identify a pCSO. An application can secure a pCSO. A pCSO can be visually identifiable from a fCSO displayed on a visual representation. A pCSO can relate to an individual conveyance industry segment. A pCSO can relate to an individual service provider, an individual map provider, an individual third party, an individual good supplier, an individual fleet manager, or the like. A pCSO can be displayed on a geographical map of a visual representation. A pCSO can be displayed on an application. A central server, an application, a conveyance client, or a combination thereof, can secure a pCSO for or with a conveyance client. A pCSO can be pre-filtered or pre-categorized on a central server, an external server, an application, or a combination thereof.

A level of service preference can be used by a conveyance client to identify a luxury vehicle, an environmentally friendly vehicle, or a driverless vehicle. A level of service preference can be utilized to identify a newer vehicle over an older vehicle.
Representative Preference: The following are illustrative, non-limiting examples and embodiments of a "representative preference" as used in the present disclosure

A representative preference can be a rule or a parameter that can be used to facilitate at least one operation or at least one function to secure a preferred conveyance service request ("pCSR"). A representative preference can be a rule or a parameter that can be utilized or operated by a representative, a service provider, a good supplier, a fleet manager, a logistics provider, a logistics supplier, a map provider, a third party, or a combination thereof. A representative preference can be any rule or parameter that can be used or utilized during a process of filtering and/or identifying a pCSR. A representative preference can be a rule or a parameter that can optimize all or some of conveyance data, a conveyance service request ("CSR"), or a combination thereof. A representative preference can relate directly or indirectly to a pCSR. A representative preference can be associated with or have at least one feature or a various feature that can be used to match a representative for or with a pCSR, a client, or a combination thereof. A representative preference can be a rule implemented in a rules-based system, a rules-based method, or a combination thereof. A representative preference can be a tool, for example, a rule or a parameter to filter, identify, secure, or a combination thereof, a pCSR, a filtered conveyance service request ("fCSR"), a CSR, or a combination thereof.

A representative preference can for example be used by a representative, a good supplier, a fleet manager, a logistics provider, a logistics supplier, a map provider, a third party, or a combination thereof, to identify and secure a pCSR for or with a representative. A representative preference or a set of a representative preference can be used to filter, identify as preferred, secure, or a combination thereof, a pCSR. A representative preference can be refined or customized by a representative, a service provider, a good supplier, a fleet manager, a logistics provider, a logistics supplier, a map provider, a third party, or a combination thereof. A representative preference can be fixed or built-in on a central server, an external server, an application, or a combination thereof. A representative preference can be made non-editable. A representative preference can be a digit or a number. A representative preference can include but is not limed to an option selected or provided by a representative, a good supplier, a fleet manager, a logistics provider, a logistics supplier, a map provider, a third party, or a combination thereof, to filter and/or sort a CSR in real time or near real time in order to identify a pCSR. A representative preference can be used to filter and identify a pCSR and then filter and identify a representative that can be identified as preferred, all or some of conveyance data relating to a representative, or a combination thereof, and be secured together. A representative preference can have or be associated with a set of preferences or a set of parameters that can be used to filter and identify a pCSR, a fCSR, a CSR, or a combination thereof.

A representative preference can be used to match or satisfy a pCSR, a fCSR, a CSR, or a combination thereof, with or for a representative. A representative preference can be used to match or satisfy a representative for or with a pCSR, a fCSR, a CSR, or a combination thereof. A representative preference can for example be utilized by a representative, a service provider, a good supplier, an AV owner/controller, a fleet manager, a logistics provider, a logistics supplier, a map provider, a third party, or a combination thereof, to identify and secure a pCSR.

A representative preference can be used to filter a CSR in any order prior to securing a match between a pCSR and a representative. A representative preference can be used to identify a pCSR in any order prior to securing a match between a pCSR and a representative. A representative preference can be pre-set on one or more of a central server, an external server, an application, a terminal or a combination thereof. A representative preference can be either inclusive or exclusive for filtering a CSR. An individual representative preference can have an equal weight or an unequal weight when calculating a weighted average to identify a pCSR. A fCSR can be sorted in real time or near real time in an order relating to a weighted average of a representative preference to identify a pCSR. A representative, a good supplier, a fleet manager, a logistics provider, a logistics supplier, a map provider, a third party, or a combination thereof, can optionally choose a weight for a representative preference to have an equal weight or an unequal weight. A representative, a good supplier, a fleet manager, a logistics provider, a logistics supplier, a map provider, a third party, or a combination thereof, can optionally choose a weight for a representative preference to filter, identify, secure or obtain, or a combination thereof, a pCSR.

A representative preference can be used to filter a CSR into a fCSR. A representative preference can be used to identify a pCSR from a fCSR. A representative preference can be used to filter all or some of conveyance data relating to a representative. A representative preference can be stored or cached on one or more of a central server, an application, an external server, a terminal, or a combination thereof. A representative preference can be stored or cached on or transmitted to a central server, an external server, a terminal, an application, or a combination thereof. A representative preference can be stored on or retrieved from a server that can be remote from a central server, an external server, an application, or a combination. A representative preference can be stored or cached in a database. A representative preference can be used in a database to filter and identify a pCSR, a fCSR, a CSR, or a combination thereof.

A representative, an AV owner/controller, a service provider, a good supplier, a fleet manager, a logistics provider, a logistics supplier, a map provider, a third party, or a combination thereof, can use a representative preference to filter and identify a pCSR, a fCSR, a CSR, or a combination thereof. A representative can input or provide a representative preference into an application, a central server, an external server, or a combination thereof, that can be used to identify and secure a pCSR. A representative, an AV owner/controller, a service provider, a good supplier, a fleet manager, a logistics provider, a logistics supplier, a map provider, a third party, or a combination thereof, can input or provide a representative preference into an application, a central server, or an external server that can be used to identify and secure a pCSR for or with a representative. A representative, an AV owner/controller, a service provider, a good supplier, a fleet manager, a logistics provider, a logistics supplier, a map provider, a third party, or a combination thereof, can use a representative preference to manage, control, or operate an at least one AV, a representative, or a combination thereof.

A representative preference can be updated or refreshed in real time or near real time. A representative preference can be used to perform at least one function in real time or near real time. A representative preference can be updated or changed and a new or different set of filtered conveyance service request(s) ("fCSRs"), preferred conveyance service request(s) ("pCSRs"), or a combination thereof, can be identified.

A central server, an application, an external server, or a combination thereof, can filter out, hide, or remove a CSR that does not meet or match the representative preference criteria for a representative. A representative preference can be used in conjunction with a real time or near real time geographical location of a representative or a different geographical location to filter a CSR into a fCSR. A representative preference can be used to identify a pCSR from a fCSR or a pre-filtered CSR. A representative preference can be used by a representative, a service provider, a good supplier, an AV owner/controller, a fleet manager, a logistics provider, a logistics supplier, a map provider, a third party, or a combination thereof.

A representative preference can be a rule or a parameter that can utilize a route planning information. A representative preference can be learned over time relating to a CSR, all or some of conveyance data, a conveyance client, a representative, an AV, an AV owner/controller, a service provider, a good supplier, a fleet manager, a logistics provider, a logistics supplier, a map provider, a third party, or a combination thereof. A representative preference can be a predictive preference that can utilize machine learning technology and/or quantum computing.

A level of service preference can be used to identify, for example, a vehicle type, a service type, a vehicle detail, or an AV detail. A representative preference can have or relate to a cultural trait of a regional area or a country. A representative preference can be a capacity preference that can be utilized to manage or monitor a capacity level relating to a vehicle, an AV, a representative, an AV owner/controller, a service provider, a good supplier, a fleet manager, a logistics provider/supplier, a map provider, a third party, or a combination thereof.

A representative preference can be but is not limited to one or more preferences selected from or relating to pricing, elevated pricing, geographical location, distance, route, service duration, beginning service geographical location, ending service geographical location, time, predictive, historical, efficiency, sensor(s), event (inclusion or exclusion), traffic-based, road condition, weather condition, transportation, route planning, fuel economy, battery longevity, vehicle capacity, vehicle diagnostic, conveyance data, duration of conveyance service, conveyance service request density, conveyance client density, conveyance client detail, conveyance client rating, representative density, AV density, service provider (inclusion or exclusion), service provider density, level of service, good supplier, good supplier density, AV owner/controller, AV owner/controller density, fleet manager, fleet manager density, logistics provider, logistics provider density, logistics supplier, logistics supplier density, good detail, conveyance industry segment, freight, waypoint, delivery service, oldest outstanding request, oldest outstanding offering, or a combination thereof.

If an efficiency preference is selected, a representative can accept an additional food delivery service request for the same restaurant to perform an additional conveyance service and earn more money. If a price preference is selected, then a CSR priced higher than a set minimum price can be identified as a pCSR. If a distance preference is selected, then a CSR within a selected distance can be identified as a pCSR. A good detail preference can include an item being fragile. If a good detail preference is selected, then a CSR for conveying a certain type and/or quantity of a good that a representative is capable of delivering can be identified as a pCSR, such as the capability to deliver a refrigerator or a mirror. If a freight preference is selected, then a CSR for conveying freight that a representative is capable of delivering can be identified as a pCSR, such as a CSR to deliver a biohazardous material or a flammable material.

A representative preference can be transmitted between or from an application to an external server by way of a link between an application and an external server.

A representative preference can be associated with a database, a database query, a database table, or a database result set. A database query can include or be associated with a representative preference. A representative preference can be related to or associated with another a representative preference. A representative preference can be used to retrieve data from database. A representative preference can be an internal part of a central server. A representative preference can be in a form or a format relating to a SQL parameter, or a variable. Multiple representative preferences can be used multiple times during a process of filtering and/or identifying a pCSR for or with a representative. A representative preference can be used with or within a conditional statement, a conditional expression, or a conditional construct. A representative preference can be used for altering a control flow based on a condition. A representative preference can have or be associated with a different set of preferences or a different set of parameters that can be used to filter and identify a pCSR, a fCSR, a CSR, or a combination thereof. Some representative preferences can be more relevant than other representative preferences when a central server filters and/or identifies a pCSR, a fCSR, a CSR, or a combination thereof. A representative preference can be used for filtering a CSR in a food delivery industry segment and a different representative preference can be used for filtering a CSR in a ride-hail industry segment.

Anytime a CSR is going through a process to become filtered or identified as preferred, all or some of conveyance data relating to a representative can go through a same or a similar process. A representative preference can use a sensor data to evaluate and secure a pCSR with or for a representative. A representative preference can use a sensor data to identify if an AV has enough battery to perform a conveyance service.

A transportation preference can be a parameter or a rule that can identify a conveyance service preference. A transportation preference can identify a CSR that requires handicap assistance. A transportation preference can identify a CSR that requires a luxury vehicle. An efficiency preference can be a parameter or a rule that can optimize vehicle utilization. A representative preference can be stored or cached in a database table. A representative preference can be stored or cached in a database that a central server, an external server, an application, or a combination thereof, can connect to or be associated with.

A predictive preference can be identified or learned over time based on a pattern relating to a CSR, all or some of conveyance data relating to a representative, a conveyance client, a representative, an AV, an AV owner/controller, a service provider, a good supplier, a fleet manager, a logistics provider/supplier, a map provider, a third party, or a combination thereof.

A time preference can relate to a time range, a pick-up time, a drop-off time, a pre-scheduled time, during a time of a day, a time of a week, a time of a month, a time of a year, or a combination thereof. A conveyance client detail preference can be a route preference provided by a conveyance client, an application, a central server, an external server, a third party, a map provider, or a combination thereof. A route planning preference can identify a route that can avoid toll roads. A route planning preference can identify an optimal navigational route that can aid in identifying a pCSR.

A route preference can be utilized to identify a historical route, a specific route, a favored route, an area, a specific location, or pricing information. A route preference can be learned over time to avoid traffic congestion on Highway Interstate 5 around 5PM during the week. A route preference can be to avoid a road, a street, a highway, or a neighborhood that a conveyance client or a recipient of a conveyance service prefers.

A level of service preference can be displayed as an icon or a visual with or on the visual representation to allow a selection of different levels of service that a representative, an AV, a service provider, or a good supplier can provide. A level of service preference can be displayed on or with a visual representation to identify different levels of service that an AV owner/controller, a service provider, a good supplier, a fleet manager, a logistics provider, a logistics supplier, a map provider, a third party, a representative, an AV, or a conveyance client can provide or receive. A level of service preference can be displayed as an icon with or on a visual representation to allow a selection of different levels of service that a representative, an AV, a conveyance client, a service provider, a good supplier, a fleet manager, a map provider, an AV owner/controller, a logistics provider, a logistics supplier, or a third party can provide.

A level of service preference can be displayed on a dynamic map to identify different levels of service that a representative, an AV, a conveyance client, a service provider, a good supplier, a fleet manager, an AV owner/controller, a logistics provider, a logistics supplier, a map provider, or a third party can provide or receive. A representative, an AV, a conveyance client, a service provider, a good supplier, a fleet manager, an AV owner/controller, a logistics provider, a logistics supplier, a map provider, a third party, or a combination thereof, can be displayed on or with a dynamic map that can display a level of service preference and can be represented by a mobile or transitory icon.

An event inclusion preference can identify a destination rating with 4 out of 5 stars for or with a representative. An event inclusion preference can identify an event or an area that can be optimal for a representative, or a service provider that can be currently well positioned in or near that event or area, but it may not be optimal for other representatives or service providers further away from that event or area.

A representative preference can be a good supplier preference that can enable a good supplier to delay or postpone a current or a future CSR. A conveyance client preference or a preference of a recipient of a conveyance service can be compared to or with a representative preference, to identify a match and secure a pCSR for or with a representative.

A representative preference can have or relate to a cultural trait that can impact a match between a representative and a pCSR. A representative preference can have or relate to a cultural trait that can impact all or some of a CSR. For example, Americans may prefer to have a representative preference with a shorter estimated time of arrival compared to Canadians.

A capacity preference can identify a maximum number of passengers or goods in a vehicle or an AV. A conveyance client can utilize a preference to specify if a conveyance client prefers an AV or a representative. A representative preference can be at least carpool preference. A representative preference can be used to identify a client or a group of a client that can be pooled together for a conveyance service to an ending service geographical location. A representative preference can relate to safety, for example, a vehicle being handicap-friendly.

A delivery service preference can be to filter out deliveries that can add more than 10 minutes to total travel time. A delivery service preference can specify a dimension for a good or an item. A delivery service preference can be used to identify a representative or a vehicle with a specific feature relating to a good or item delivery. A delivery service preference can be used to identify a pre-scheduled CSR or a pre-scheduled conveyance client.

A vehicle diagnostic preference can be to take a vehicle off the road or to not secure another CSR if a vehicle is due for maintenance. A vehicle diagnostic preference can be to take a vehicle off the road or to not secure another CSR if criteria regarding a vehicle is met. A vehicle diagnostic preference can be related to a sensor data on a vehicle or an AV.

A central server or an application can use or apply a second representative preference and a process can optionally be referred to or seen as an additional level of filtering. A central server or an application can filter conveyance service requests ("CSRs") using a two-step process to first filter CSRs based on a representative preference and then filter a subset of CSRs based on a different representative preference.

A representative preference can be transmitted to or uploaded to an external server. A representative preference can be utilized for pre-filtering CSRs on or at an external server, a central server, an application, or a combination thereof.

For example, when an individual representative preference has an unequal weight, a pricing preference can have 70% weight and a distance preference can have 30% weight which can be identified a pCSR when determining which fCSR has the highest weighted average.

A representative preference can be used for an individual conveyance industry segment. A representative preference can be used for an individual service provider, or a map provider. A representative can specify a representative preference to work in a given area by using a geographical location preference. A representative can specify a representative preference to work in a six-mile perimeter by using a geographical location preference.

A representative preference, once inputted or provided into an application, can be stored or cached on an application, a computer readable memory of a central server, or a combination thereof, and a representative preference is not inputted or provided again into an application by a representative. A representative preference can be stored or cached in a computer readable memory of a central server and a representative preference is not transmitted again from an application to a central server. A representative preference, a real time or near real time geographical location of a representative, or a combination thereof, can be transmitted from an application to a central server at any time prior to filtering a CSR. A representative preference can be the same or similar to a conveyance client preference. A representative preference can be the same or have similar logic as a conveyance client preference.
Conveyance Client Preference: The following are illustrative, non-limiting examples and embodiments of a "conveyance client preference" as used in the present disclosure.

A conveyance client preference is a rule or a parameter that is generally used to facilitate at least one operation or at least one function to secure a preferred conveyance service offering ("pCSO"). A conveyance client preference can be a rule or a parameter that can for example be utilized or operated by a conveyance client, a service provider, a good supplier, a fleet manager, a logistics provider, a logistics supplier, a map provider, a third party, or a combination thereof. A conveyance client preference can be any rule or parameter (or a set of rules or parameters) that is/are used during the process of filtering, identifying, matching and/or securing a filtered or pCSO.

A conveyance client preference can be used to optimize all or some of conveyance data, a conveyance service offering ("CSO"), or a combination thereof. A conveyance client preference can be one or more feature that is used to match a conveyance client with a pCSO, a representative, an AV, or a combination thereof. A conveyance client preference can be a rule implemented in a rules based system, rules based method, or a combination thereof.

A conveyance client preference can be refined or customized by one or a combination of a conveyance client, a service provider, a good supplier, a fleet manager, a logistics provider, a logistics supplier, a map provider, a third party. A client preference can be fixed or built-in on a central server, an external server, an application, or a combination thereof. A conveyance client preference can be made non-editable. A client preference can be a digit or a number.

A conveyance client preference can be used to match or satisfy a pCSO, a filtered conveyance service offering ("fCSO"), a CSO, or a combination thereof, with or for a conveyance client. A conveyance client preference can be used to match a conveyance client with a pCSO, a fCSO, a CSO, or a combination thereof. A conveyance client preference can be used by a conveyance client, a service provider, a good supplier, an AV owner/controller, a fleet manager, a logistics provider, a logistics supplier, a map provider, a third party, or a combination thereof, to identify and secure a pCSO.

A conveyance client preference can include an option selected or provided by a conveyance client, a good supplier, a fleet manager, a logistics provider, a logistics supplier, a map provider, a third party, or a combination thereof, to filter and/or sort a CSO in real time or near real time in order to identify a pCSO. A conveyance client preference can be applied in any order to filter a CSO prior to securing a match between a pCSO and a conveyance client.

A conveyance client preference can be pre-set on one or more of a central server, an external server, an application, a terminal. A conveyance client preference can be either inclusive or exclusive. An individual conveyance client preference can have an equal weight or an unequal weight when calculating a weighted average to identify a pCSO. The weight for a given conveyance client preference can optionally be chosen and/or input by one or a combination of the conveyance client, a good supplier, a service provider, a fleet manager, a logistics provider, a logistics supplier, a map provider, and a third party. A fCSO can be sorted in an order according to a weighted average of the conveyance client preferences.

A conveyance client preference can be stored or cached on one or more of a central server, an application, an external server, a terminal, or a database within a network.

A conveyance client preference can be updated or refreshed in real time or near real time. A conveyance client preference can be used to perform at least one function in real time or near real time. A conveyance client preference can be updated or changed and a new or different set of filtered conveyance service offering(s) ("fCSOs"), preferred conveyance service offering(s) ("pCSOs"), or a combination thereof, can be identified.

A central server, an application, an external server, or a combination thereof, can filter out, hide, or remove a CSO that does not meet or match client preference criteria for a client. A client preference can be used in conjunction with a real time or near real time geographical location of a client or a different geographical location to filter a CSO into a fCSO.

A conveyance client preference can be used to identify a pCSO from a fCSO or a pre-filtered CSO. A conveyance client preference can be used by a conveyance client, a service provider, a good supplier, an AV owner/controller, a fleet manager, a logistics provider, a logistics supplier, a map provider, a third party, or a combination thereof.

A client preference can be a rule or a parameter that can utilize a route planning information. A client preference can be learned over time relating to a CSO, all or some of conveyance data, a conveyance client, a representative, an AV, an AV owner/controller, a service provider, a good supplier, a fleet manager, a logistics provider, a logistics supplier, a map provider, a third party, or a combination thereof. A conveyance client preference can be a predictive preference that can utilize machine learning technology and/or quantum computing.

A level of service preference can be used to identify, for example, a vehicle type, a service type, a vehicle detail, or an AV detail. A conveyance client preference can have or relate to a cultural trait of a regional area or a country. A conveyance client preference can be a capacity preference that can be utilized to manage or monitor a capacity level relating to a vehicle, an AV, a conveyance client, a representative, an AV owner/controller, a service provider, a good supplier, a fleet manager, a logistics provider, a logistics supplier, a map provider, a third party, or a combination thereof.

A client preference can one or more preferences related to pricing, elevated pricing, geographical location, distance, route, service duration, beginning service geographical location, ending service geographical location, time, predictive, historical, efficiency, event inclusion, event exclusion, traffic-based, road condition, weather condition, duration of conveyance service, CSO density, representative detail, representative rating, representative density, conveyance client density, service provider inclusion, service provider exclusion, service provider density, level of service, good supplier inclusion, a good supplier exclusion, good supplier density, good detail, conveyance industry segment, freight, waypoint, delivery service, oldest outstanding offering, or a combination thereof.

The conveyance client preferences may also be preferences relating to transportation, route planning, fuel economy, battery longevity, vehicle capacity, vehicle diagnostic, conveyance data, conveyance client detail, conveyance client rating, AV density, service provider, good supplier, AV owner/controller, AV owner/controller density, fleet manager, fleet manager density, logistics provider, logistics provider density, logistics supplier, logistics supplier density, conveyance industry segment, or a combination thereof.

If a price preference is selected as a conveyance client preference, then a CSO without elevated pricing can be identified as a pCSO. If a level of service preference is selected, then a CSO with a higher quality of service such as "white glove services" or luxury services can be identified as a pCSO. If a price preference is selected, then a CSO priced lower than a set maximum price can be identified as a pCSO for a conveyance client.

If a representative rating preference is selected, then a CSO from a representative with a rating greater than or equal to a set minimum rating can be identified as a pCSO. When an individual conveyance client preference has an unequal weight, a pricing preference can have 90% weight and a service provider inclusion preference can have 10% weight which can be used to identify a pCSO when determining which a fCSO has the highest weighted average. For example, if an additional conveyance client preference were added to a first conveyance client preference, the weight of a conveyance client preference would sum to 100%.

A conveyance client preference can be transmitted between or from an application to an external server by way of a link between an application and an external server.

A conveyance client preference can be associated with a database, a database query, a database table, or a database result set. A database query can include or be associated with a conveyance client preference. A conveyance client preference can be related to or associated with another a conveyance client preference. A conveyance client preference can be used to retrieve data from database. A conveyance client preference can be an internal part of a central server. A conveyance client preference can be in a form or a format relating to a SQL parameter, or a variable. For example, conveyance client preferences can be used multiple times during a process of filtering and/or identifying a pCSO for or with a conveyance client. A conveyance client preference can be used with or within a conditional statement, a conditional expression, or a conditional construct. A conveyance client preference can be used for altering a control flow based on a condition.

A conveyance client preference can have or be associated with a different set of preferences or a different set of parameters that can be used to filter and identify a pCSO, a fCSO, a CSO, or a combination thereof. Some conveyance client preferences can be more relevant than other conveyance client preferences when a central server filters and/or identifies a pCSO, a fCSO, a CSO, or a combination thereof. A conveyance client preference can be used for filtering a CSO in a food delivery industry segment and a different conveyance client preference can be used for filtering a CSO in a ride-hail industry segment.

Anytime a CSO is going through a process to become filtered or identified as preferred, all or some of conveyance data relating to a conveyance client can go through a same or a similar process. A conveyance client preference can use a sensor data from a vehicle to evaluate and secure a pCSO with or for a conveyance client. A conveyance client preference can use a sensor data to identify if an AV has enough battery to perform a conveyance service.

A transportation preference can be a parameter or a rule that can identify a conveyance service preference. A transportation preference can identify a CSO that requires handicap assistance. A transportation preference can identify a CSO that requires a luxury vehicle. An efficiency preference can be a parameter or a rule that can optimize vehicle utilization. A conveyance client preference can be stored or cached in a database table. A conveyance client preference can be stored or cached in a database that a central server, an external server, an application, or a combination thereof, can connect to or be associated with.

A predictive preference can be identified or learned over time based on a pattern relating to a CSO, all or some of conveyance data relating to a client, a client, a representative, an AV, an AV owner/controller, a service provider, a good supplier, a fleet manager, a logistics provider, a logistics supplier, a map provider, a third party, or a combination thereof.

A time preference can relate to a time range, a pick-up time, a drop-off time, a pre-scheduled time, during a time of a day, a time of a week, a time of a month, a time of a year, or a combination thereof. A conveyance client detail preference can be a route preference provided by a conveyance client, an application, a central server, an external server, a third party, a map provider, or a combination thereof. A route planning preference can identify a route that can avoid toll roads. A route planning preference can identify an optimal navigational route that can aid in identifying a pCSO.

A route preference can be utilized to identify a historical route, a specific route, a favored route, an area, a specific location, or pricing information. A route preference can be learned over time to avoid traffic congestion on Highway Interstate 5 around 5PM during the week. A route preference can be to avoid a road, a street, a highway, or a neighborhood that a conveyance client or a recipient of a conveyance service prefers.

A level of service preference can be displayed as an icon or a visual with or on the visual representation to allow a selection of different levels of service that a representative, an AV, a service provider, or a good supplier can provide.

A level of service preference can be displayed on or with a visual representation to identify different levels of service that an AV owner/controller, a service provider, a good supplier, a fleet manager, a logistics provider, a logistics supplier, a map provider, a third party, a representative, an AV, or a conveyance client can provide or receive. A level of service preference can be displayed as an icon with or on a visual representation to allow a selection of different levels of service that a representative, an AV, a conveyance client, a service provider, a good supplier, a fleet manager, an AV owner/controller, a logistics provider, a logistics supplier, a map provider, or a third party can provide or receive.

A level of service preference can be displayed on a dynamic map to identify different levels of service that a representative, an AV, a conveyance client, a service provider, a good supplier, a fleet manager, an AV owner/controller, a logistics provider, a logistics supplier, a map provider, or a third party can provide or receive. A representative, an AV, a conveyance client, a service provider, a good supplier, a fleet manager, an AV owner/controller, a logistics provider, a logistics supplier, a map provider, a third party, or a combination thereof, can be displayed on or with a dynamic map that can display a level of service preference and can be represented by a mobile or transitory icon.

A conveyance client preference can be a good supplier preference that can enable a good supplier to rush or advance a current or a future CSO. A conveyance client preference or a preference of a recipient of a conveyance service, can be compared to or with a representative preference, to identify a match and secure a pCSO for or with a conveyance client.

A client preference can have or relate to a cultural trait that can impact a match between a conveyance client and a pCSO. A conveyance client preference can have or relate to a cultural trait that can impact all or some of a CSO. For example, Americans may prefer to have a conveyance client preference with a shorter estimated time of arrival compared to Canadians.

A capacity preference can identify a maximum number of passengers or goods in a vehicle or an AV. A client can utilize a preference to specify if a conveyance client prefers an AV or a representative. A client preference can be at least carpool preference. A client preference can be used to identify a client or a group of a conveyance client that can be pooled together for a conveyance service to an ending service geographical location. A conveyance client preference can relate to safety, for example, a vehicle being handicap-friendly.

A delivery service preference can be to filter out deliveries that can add more than 10 minutes to total travel time. A delivery service preference can specify a dimension for a good or item. A delivery service preference can be used to identify a representative or a vehicle with a specific feature relating to a good or item delivery. A delivery service preference can be used to identify a pre-scheduled conveyance service offering or a pre-scheduled representative.

A central server or an application can use or apply a second conveyance client preference and a process can optionally be referred to or seen as an additional level of filtering. A central server or an application can filter conveyance service offerings ("CSOs") using a two-step process to first filter CSOs based on a conveyance client preference and then filter a subset of CSOs based on a different conveyance client preference.

A conveyance client preference can be transmitted to or uploaded to an external server. A conveyance client preference can be utilized for pre-filtering CSOs on or at an external server, a central server, an application, or a combination thereof. A conveyance client preference can be used for an individual conveyance industry segment. A conveyance client preference can be used for an individual service provider, or a map provider.

A conveyance client preference, once inputted or provided into an application, can be stored or cached on an application, a computer readable memory of a central server, or a combination thereof, and a conveyance client preference is not inputted or provided again into an application by a conveyance client. A conveyance client preference can be stored or cached in a computer readable memory of a central server and a conveyance client preference is not transmitted again from an application to a central server. A conveyance client preference, a real time or near real time geographical location of a conveyance client, or a combination thereof, can be transmitted from an application to a central server at any time prior to filtering a CSO.

A client preference can be the same or similar to a representative preference. A client preference can be the same or have similar logic as a representative preference.
Geographical Location ("Geographical Location Data"): The following are illustrative, non-limiting examples and embodiments of a "geographical location" as used in the present disclosure.

A geographical location of a client can be a geographical location, a coordinate, a position, or a place where a conveyance client can be at any given point in time. A geographical location of a conveyance client, a representative, an AV, a service provider, a good supplier, or a combination thereof, can be in real time, near real time, static, or non-real time.

A geographical location of any individual person, machine, entity, or a combination thereof, can be related to or have a longitude and a latitude in a decimal point or format. A geographical location of any individual person, machine, entity, or a combination thereof, can be related to or have a longitude and a latitude in a database with a decimal point or format. A geographical location of any individual person, machine, entity, or a combination thereof, can be related to or have a longitude & a latitude in a different decimal point/format. A geographical location of any individual person, machine, entity, or a combination thereof, can be related to or have a longitude and a latitude in a database with a different decimal point or format.

A geographical location of a representative, an AV, a client, a service provider, a good supplier, a fleet manager, an AV owner/controller, a logistics provider, a logistics supplier, or a combination thereof, can have or utilize a variable precision, that can be standardized in a uniform format. Due to many different systems and methods of coding a geographical location, a variable precision can be preferred to standardize a geographical location. Due to many different systems and methods of coding a real time or near real time geographical location of a conveyance client, a variable precision can be preferred to standardize a digit or a decimal.

A geographical location of a representative can be a geographical location, a coordinate, a position, or a place where a representative can be at any given point in time. A geographical location of an AV can be a geographical location, a coordinate, a position, or a place where an AV can be at any given point in time. A geographical location of a service provider or a good supplier can be a geographical location, a coordinate, a position, or a place where a service provider or a good supplier can be at any given point in time.

A geographical location of a client, a representative, an AV, a service provider, a good supplier, a fleet manager, an AV owner/controller, a logistics provider/supplier, a third party, a map provider, or a combination thereof, can be displayed on a visual representation.

A geographical location of any individual person, machine, entity, or a combination thereof, can be updated or refreshed in real time or near real time. A geographical location of any individual person, machine, entity, or a combination thereof, can be used to perform a function in real time or near real time. A geographical location can be pre-set on one or more of a central server, an external server, an application, a visual representation, or a combination thereof. A geographical location of a conveyance client, a representative, an AV, a service provider, a good supplier, or a combination thereof, can relate to a service provider.

When a geographical location of any individual person, machine, entity, or a combination thereof, is considered, a geographical location of a representative, an AV, a client, a service provider, a good supplier, a fleet manager, an AV owner/controller, a logistics provider, a logistics supplier, a third party, or a map provider can also be considered.

A geographical location of a client, a representative, an AV, a service provider and/or a good supplier can be used for respective density preferences. A geographical location of a conveyance client, a representative, an AV, a service provider, a good supplier, or a combination thereof, can be used for a dynamic map. A geographical location of a conveyance client, a representative, an AV, a service provider, a good supplier, or a combination thereof, can be used for a heat map. A geographical location of a conveyance client, a representative, an AV, a service provider, a good supplier, or a combination thereof, can relate to an individual service provider operating in an individual conveyance industry segment. A geographical location of a client, a representative, an AV, a service provider, a good supplier, or a combination thereof, can be static or non-real time. A geographical location of a good supplier can be static or non-real time as it can relate to a brick-and-mortar geographical location.

A geographical location of any individual person, machine, entity, or a combination thereof, can be sourced or provided from three external servers, and can be associated with or have a longitude and a latitude in a database table with a different decimal point or format that can be standardized to have a similar decimal point or format. A geographical location of a representative, an AV, a conveyance client, a service provider, a good supplier, a fleet manager, an AV owner/controller, a logistics provider, a logistics supplier, a third party, a map provider, or a combination thereof, can have or be associated with a variable precision, that can be standardized in a uniform format.

A geographical location of an individual person, an individual machine, an individual entity, a representative, an AV, a client, a service provider, a good supplier, a fleet manager, an AV owner/controller, a logistics provider, a logistics supplier, a third party, a map provider, or a combination thereof, can have or be associated with a longitude and a latitude in a database table with a decimal point or format. A geographical location of an individual person, an individual machine, an individual entity, a representative, an AV, a client, a service provider, a good supplier, a fleet manager, an AV owner/controller, a logistics provider, a logistics supplier, a third party, a map provider, or a combination thereof, can have or be associated with a longitude and a latitude in a database table with a different decimal point or format.

Due to many different systems and methods of coding a geographical location of a representative, an AV, a conveyance client, a service provider, a good supplier, a fleet manager, an AV owner/controller, a logistics provider, a logistics supplier, a third party, a map provider, or a combination thereof, a variable precision is preferred to standardize a digit or a decimal.
Beginning Service Geographical Location: The following are illustrative, non-limiting examples and embodiments of a "beginning service geographical location" as used in the present disclosure.

A beginning service geographical location can be but is not limited to a geographical location requested by a conveyance client or an entity where a conveyance service begins or is requested. A beginning service geographical location can be modified before and/or during a conveyance service, if utilizing a waypoint. A beginning service geographical location need not be a real time or near real time geographical location of a conveyance client. A beginning service geographical location can be updated or refreshed in real time or near real time. A beginning service geographical location can be used to perform a function in real time or near real time. A beginning service geographical location can be pre-set or pre-determined on a central server, an external server, an application, or a combination thereof. A beginning service geographical location can be associated with a conveyance service request ("CSR") or a conveyance service offering ("CSO").

A conveyance client can input or provide a beginning service geographical location into an application. A conveyance client can input or provide a beginning service geographical location into an application to find a CSO, a filtered conveyance service offering ("fCSO"), a preferred conveyance service offering ("pCSO"), or a combination thereof. A beginning service geographical location can be static or non-real time. A representative or an AV can pick up a conveyance client at a beginning service geographical location.

A beginning service geographical location can have or be associated with a waypoint. A beginning service geographical location can have or be associated with a waypoint, where a conveyance client can walk to a beginning service geographical location. A conveyance client can have or use two or multiple beginning service geographical locations including a waypoint, where a conveyance client can take a public bus from one beginning service geographical location to then be picked up by an AV from a second beginning service geographical location.

A beginning service geographical location can be at a future beginning service geographical location. A beginning service geographical location can used for or with an AV to create a CSO. A beginning service geographical location can be dynamic. A beginning service geographical location can be associated with latitude and longitude.
Ending Service Geographical Location: The following are illustrative, non-limiting examples and embodiments of an "ending service geographical location" as used in the present disclosure

An ending service geographical location can be but is not limited to a geographical location requested by a conveyance client or an entity where a conveyance service ends. An ending service geographical location can be modified before and/or during a conveyance service. An ending service geographical location can include a waypoint. An ending service geographical location can be updated or refreshed in real time or near real time. An ending service geographical location can be used to perform a function in real time or near real time. An ending service geographical location can be pre-set or pre-determined on a central server, an external server, an application, or a combination thereof. An ending service geographical location can be associated with a conveyance service request or a conveyance service offering.

A conveyance client can input or provide an ending service geographical location into an application. A conveyance client can input or provide an ending service geographical location into an application to find a conveyance service offering ("CSO"), a filtered conveyance service offering ("fCSO"), a preferred conveyance service offering ("pCSO"), or a combination thereof. An ending service geographical location can be static or non-real time. A representative or an AV can drop off a client at an ending service geographical location.

An ending service geographical location can have or be associated with a waypoint, where a conveyance client can stop at a coffee shop prior to being dropped off at an ending service geographical location. An ending service geographical location can be at a future ending service geographical location. An ending service geographical location can used for or with an AV to create a CSO. An ending service geographical location can be dynamic. An ending service geographical location can be associated with latitude and longitude.
Conveyance Industry Segment: The following are illustrative, non-limiting examples and embodiments of a "conveyance industry segment" as used in the present disclosure.

The conveyance industry can be an industry categorized by the transportation of someone or something from a geographical location to another geographical location. The conveyance industry can be an industry categorized by the transportation of someone or something from a geographical location to another geographical location in real time or near real time. A conveyance industry segment can be a smaller part of the overall conveyance industry as a whole, categorized by different limiting characteristics. A conveyance industry segment can be updated or refreshed in real time or near real time.

A service provider, an AV owner/controller, a good supplier, a fleet manager, a logistics provider, a logistics supplier, an AV, a third party, a map provider, or a combination thereof, can operate in a conveyance industry segment. An AV owner/controller, a service provider, a good supplier, a fleet manager, a logistics provider, a logistics supplier, a third party, a map provider, or a combination thereof, can manage, control, or operate an AV or a representative in a conveyance industry segment. A conveyance service request ("CSR") or a conveyance service offering ("CSO") can be associated with a conveyance industry segment.

A conveyance industry segment can be but is not limited to a ride-hail industry segment, a ride-share industry segment, a car-share industry segment, a peer-to-peer conveyance industry segment, a person delivery industry segment, a taxi industry segment, an item delivery industry segment, a good delivery industry segment, a freight industry segment, a food delivery industry segment, a medical service/delivery industry segment, a courier industry segment, an animal delivery segment, a transportation industry segment, or a combination thereof.

An individual service provider can operate within a single conveyance industry segment or in multiple industry segments. For example, by employing features of the present invention, a conveyance client can receive a ride back home in the ride-hail industry segment and order food to be delivered to their home more or less at the same time from a similar service provider.

## Claims

1. A method for assisting a client (1A-1F) in securing a conveyance service for transportation of a good or a service from a beginning service geographical location to an ending service geographical location, the method comprising:
(a) receiving within one or a combination of an application (6) and a central server (9) in communication with a network, one or a combination of, in any order:
(i) conveyance service offerings (CSOs) (16A-16F) from one or more external server (10A-10C) associated with a business entity (5A-5C) that provides goods or services, the CSOs (16A-16F) comprising conveyance data including information relating to fulfillment of a client order, the conveyance data comprising information relating to one or more of the good or the service to be provided, vehicle capacity, an estimated time of arrival, and a vehicle detail, wherein the CSOs (16A-16F) are repeatedly updated;
(ii) geographical location data; and
(iii) a client preference (4), the client preference (4) provided via a terminal (7), the terminal (7) having an input source and associated with a display;
(b) processing at least a portion of one or a combination of the CSOs (16A-16F), the conveyance data, the client preference (4), and the geographical location data by:
(i) aggregating at least a portion of one or a combination of the CSOs (16A-16F), the client preference (4), the conveyance data, and the geographical location data;
(ii) filtering, in any order, at least a portion of one or a combination of the CSOs (16A-16F), the geographical location data, and the conveyance data to identify a filtered subset of CSOs (17A-17C) using one or a combination of the client preference (4), the conveyance data, and the geographical location data; and
(iii) identifying one or more preferred conveyance service offering (pCSO) (18) from the filtered subset of CSOs (17A-17C) using one or a combination of the client preference (4), the conveyance data, and the geographical location data;
(c) securing the conveyance service associated with the one or more pCSO (18); and
(d) generating on the display a visual representation corresponding to a route that a vehicle follows in providing the secured conveyance service, wherein the visual representation is dynamically updated to display progression of the vehicle as it provides the conveyance service.

2. The method of claim 1, wherein the conveyance service is one or a combination of services that support or provide transportation of the good, freight, or the service to be conveyed.

3. The method of claim 1 or claim 2, wherein the business entity (5A-5C) comprises one or more of an entity that conveys goods or services, an entity that produces or supplies freight, an entity that provides a transportation service, a courier, a representative (2A-2F), an AV, an AV owner/controller, a good supplier, a service provider, a dispatcher, a logistics provider, a broker, a freight provider, a fleet manager, and a map provider.

4. The method of any one of claims 1 through 3, wherein the client (1A-1F) comprises one or more of a beneficiary of the conveyance service, a demand-side user, a customer, a consumer, a purchaser, a recipient, a passenger, a shipper, and a service provider.

5. The method of any one of claims 1 through 4, wherein the vehicle comprises one or more of a wheeled vehicle, a delivery vehicle, a supply side vehicle, a truck, a trailer, a train, an aircraft, a vessel, a transportation vehicle, a drone, a space vehicle, a partially autonomous vehicle, a fully autonomous vehicle (AV), a self-governing machine, and associated with a representative (2A-2F).

6. The method of any one of claims 1 through 5, wherein the conveyance service is performed by one or a combination of a representative (2A-2F), the vehicle, and an AV.

7. The method of any one of claims 1 through 6, wherein the application (6) is associated with one or a combination of an AV, the client (1A-1F), a representative (2A-2F), a courier, an AV owner/controller, a dispatcher, the business entity (5A-5C), a service provider, a good supplier, a logistics provider, a fleet manager, and a map provider.

8. The method of any one of claims 1 through 7, wherein one of the filtering steps uses a different geographical location.

9. The method of any one of claims 1 through 8, wherein the client preference (4) is displayed by the display, wherein the display/terminal (7) is updated to reflect changes in one or a combination of the client preference (4), the geographical location data, a vehicle marker, the route, the conveyance service, the CSOs (16A-16F), the filtered subset of CSOs (17A-17C), the pCSO (18), and the conveyance data.

10. The method of any one of claims 1 through 9, wherein the route comprises one or a combination of the route from a location of the vehicle to the beginning service geographical location, the route in conjunction with a waypoint, and the route from the beginning service geographical location to the ending service geographical location.

11. The method of any one of claims 1 through 10, wherein the visual representation is further configured for one or more of:
displaying one or a combination of a geographical map, a dynamic map (11), a heat map, the secured conveyance service, an additional conveyance service, the client preference (4), the conveyance data, the estimated time of arrival, the vehicle capacity, the vehicle detail, a vehicle marker, the vehicle, the client, and the route;
updating the visual representation to reflect changes in one or a combination of the geographical map, the dynamic map (11), the heat map, the secured conveyance service, the additional conveyance service, the client preference (4), the conveyance data, the estimated time of arrival, the vehicle capacity, the vehicle detail, a vehicle marker, the vehicle, the client, and the route as the conveyance service progresses.

12. The method of any one of claims 1 through 11, wherein the visual representation is further configured to enable the client (1A-1F) to perform one of navigating within an area of the visual representation and monitoring the estimated time of arrival.

13. The method of any one of claims 1 through 12, wherein, after the conveyance service is secured, one or a combination of the central server and the application is further configured to generate one or more of an updated visual representation, an updated dynamic map (11), an updated map, an updated estimated time of arrival, updated conveyance data, an updated order, an updated direction, and an updated route.

14. The method of any one of claims 1 through 13, wherein at least one function of one or a combination the central server (9) and the application (6) comprises using one of machine learning technology, quantum computing, and blockchain technology.

15. A system for performing the method of any one of claims 1 through 14 for securing for a client (1A-1F) a conveyance service for transportation of a good or a service.
